# EUROPEAN PATENT APPLICATION

(11) **EP 4 507 367 A1**
(43) Date of publication of application: **12.02.2025**
(21) Application number: 23795288.2
(22) Date of filing: 23.04.2023
(51) Int. Cl.: H04W 28/02

(54) **COMMUNICATION METHOD AND APPARATUS**

(30) Priority: 29.04.2022 CN 202210475137
(71) Applicant: Huawei Technologies Co., Ltd., Shenzhen, Guangdong 518129 (CN)
(72) Inventor: ZHU, Qianghua, Shenzhen, Guangdong 518129 (CN); GAO, Guojuan, Shenzhen, Guangdong 518129 (CN); ZHOU, Han, Shenzhen, Guangdong 518129 (CN)
(74) Representative: Goddar, Heinz J.
(86) International application number: PCT/CN2023/090114
(87) International publication number: WO 2023/207855

(57) **Abstract**

This application provides a communication method and apparatus, and relates to the field of wireless communication. The method may include: receiving a first request message from an application function network element; when type information of a service flow in the first request message indicates that the service flow is an end-to-end service flow, obtaining access information of an ingress terminal and access information of an egress terminal based on information about a target terminal group in the first request message; decomposing quality of service information of the service flow in the first request message based on the access information of the ingress terminal and the access information of the egress terminal to obtain uplink quality of service information and downlink quality of service information; and triggering a network to configure a session of the ingress terminal based on the uplink quality of service information, and configure a session of the egress terminal based on the downlink quality of service information. In the foregoing method, quality of service decomposition can be performed on the end-to-end service flow, to implement deterministic transmission of the service flow.

## Description

This application claims priority to Patent Application No. 202210475137.7, filed with the China National Intellectual Property Administration on April 29, 2022 and entitled "COMMUNICATION METHOD AND APPARATUS", which is incorporated herein by reference in its entirety.

### TECHNICAL FIELD

This application relates to the field of wireless communication, and in particular, to a communication method and apparatus.

### BACKGROUND

In wireless communication, a 5th-generation (5th-generation, 5G) mobile communication network may be simulated as a virtual bridge and integrated into time sensitive networking (time sensitive networking, TSN). A centralized network configuration (centralized network configuration, CNC) network element in the TSN may collect information about the 5G virtual bridge via an application function (application function, AF) network element, for example, information about a port on a terminal side, information about a port on a user plane function (user plane function, UPF) side, neighbor node discovery information, and information about transmission latency between a port pair. Therefore, the CNC network element can learn of a topology status of a TSN user plane including the 5G virtual bridge. Subsequently, if the CNC network element determines, based on the topology status, that the 5G virtual bridge needs to be configured for TSN flow scheduling, the CNC network element may send configuration information to the AF network element. The configuration information includes per-stream filtering and policing (per-stream filtering and policing, PSFP) information and packet forwarding information. After receiving the configuration information, the AF network element may determine, based on ingress port information and egress port information in the packet forwarding information, whether the TSN flow is an end-to-end service flow. If the TSN flow is an end-to-end service flow, the AF network element can perform quality of service (quality of service, QoS) decomposition on the end-to-end service flow based on the configuration information, to implement deterministic transmission of the service flow.

For example, if both an ingress (ingress) of the service flow and an egress (egress) of the service flow that are indicated by the ingress port information and the egress port information in the packet forwarding information are device-side TSN translator (device-side TSN translator, DS-TT) ports (ports), the AF network element may determine that the service flow is an end-to-end service flow. Subsequently, the AF network element decomposes the service flow into one uplink flow and one or more downlink flows, and performs the QoS decomposition based on the PSFP information, to configure a corresponding QoS parameter for the uplink flow corresponding to an ingress terminal and configure a QoS parameter for the downlink flow corresponding to an egress terminal, so that transmission of the service flow can finally meet an end-to-end QoS requirement. However, the foregoing method is applicable only to a TSN scenario, and cannot be applicable to a non-TSN scenario (that is, a scenario in which no 5G network is integrated into the TSN).

### SUMMARY

Embodiments of this application provide a communication method and apparatus, to perform quality of service decomposition on an end-to-end service flow, so as to implement deterministic transmission of the service flow.

To achieve the foregoing objective, the following technical solutions are used in embodiments of this application.

According to a first aspect, a communication method is provided. A communication apparatus that performs the method may be a first network element, or may be a module, for example, a chip or a chip system, used in the first network element. The first network element may be a network exposure function network element, a time sensitive communication and time synchronization function network element, a policy control function network element, or a new network element. The following provides descriptions by using an example in which an execution body is the first network element.

The method includes: receiving a first request message from an application function network element, where the first request message is used to request to allocate a resource to a service flow, for example, used to allocate a resource conforming to quality of service information to a service flow between target terminals, to ensure quality of end-to-end communication between the target terminals, and the first request message includes type information of the service flow, information about a target terminal group, and the quality of service information of the service flow; when the type information indicates that the service flow is an end-to-end service flow, obtaining quality of service decomposition information based on the information about the target terminal group, where the quality of service decomposition information includes access information of an ingress terminal and access information of an egress terminal; decomposing the quality of service information of the service flow based on the quality of service decomposition information, to obtain uplink quality of service information and downlink quality of service information; and triggering a network to configure a session of the ingress terminal based on the uplink quality of service information, and configure a session of the egress terminal based on the downlink quality of service information, where the session of the ingress terminal includes a first quality of service flow for transmission of the service flow, and the session of the egress terminal includes a second quality of service flow for transmission of the service flow.

Based on the method provided in the first aspect, the first network element may obtain the quality of service information of the service flow, the access information of the ingress terminal, and the access information of the egress terminal, decompose the quality of service information of the service flow based on the access information of the ingress terminal and the access information of the egress terminal to obtain the uplink quality of service information and the downlink quality of service information, and trigger the network to configure the corresponding sessions based on the uplink quality of service information and the downlink quality of service information, to configure the quality of service flow in the session of the ingress terminal and configure the quality of service flow in the session of the egress terminal. In the foregoing method, quality of service decomposition can be performed on the end-to-end service flow, to implement deterministic transmission of the service flow. In addition, in the foregoing process, when performing the quality of service decomposition, the first network element considers the access information of the ingress terminal and the access information of the egress terminal. The information can represent a topology status of a network to which the ingress terminal and the egress terminal belong. Therefore, according to the method, the uplink quality of service information and the downlink quality of service information that are determined by the first network element can be more reasonable, so that transmission of the service flow can more easily meet a quality of service requirement.

In a first possible implementation, the triggering a network to configure a session of the ingress terminal based on the uplink quality of service information, and configure a session of the egress terminal based on the downlink quality of service information includes: sending a second request message, where the second request message includes an address of the ingress terminal and the uplink quality of service information; and sending a third request message, where the third request message includes an address of the egress terminal and the downlink quality of service information.

Based on the possible implementation, the first network element may configure the session of the ingress terminal by using the second request message, and configure the session of the egress terminal by using the third request message.

In the first possible implementation, the second request message and the third request message further include local switching indication information, and the local switching indication information indicates that the service flow is transmitted through local switching or cross-user plane function network element switching.

Based on the possible implementation, a local switching or cross-N19 switching function of a user plane function network element may be activated, and a specific routing rule such as a packet detection rule (packet detection rule, PDR) or a forwarding action rule (forwarding action rule, FAR) is configured on the user plane function network element, so that the user plane function network element supports local forwarding (where that is, the user plane function network element directly forwards a packet between two or more PDU sessions connected to the user plane function network element without via a data network) or cross-N19 forwarding (where that is, the user plane function network element directly forwards the packet to another user plane function network element through an N19 tunnel without via the DN, so that the another user plane function network element sends the packet to a PDU session connected to the user plane function network element).

In the first possible implementation, the access information of the ingress terminal includes location information of the ingress terminal and an identifier of an anchor user plane function network element corresponding to the session of the ingress terminal; and the access information of the egress terminal includes location information of the egress terminal and an identifier of an anchor user plane function network element corresponding to the session of the egress terminal.

Based on the possible implementation, the first network element may decompose the quality of service information of the service flow based on the foregoing information. The location information of the ingress terminal, the identifier of the anchor user plane function network element corresponding to the session of the ingress terminal, the location information of the egress terminal, and the identifier of the anchor user plane function network element corresponding to the session of the egress terminal may reflect a topology status of the network. Therefore, the quality of service decomposition is performed based on the foregoing information, a decomposition result may be more reasonable, so that transmission of the service flow can more easily meet the quality of service requirement.

In the first possible implementation, the quality of service information of the service flow includes a latency requirement of the service flow; the uplink quality of service information includes latency of the service flow in an uplink direction; the downlink quality of service information includes latency of the service flow in a downlink direction; and a sum of the latency of the service flow in the uplink direction and the latency of the service flow in the downlink direction is less than or equal to the latency requirement of the service flow.

Based on the possible implementation, the latency of the service flow in the uplink direction can be obtained based on the latency requirement of the service flow, and the latency of the service flow in the downlink direction can be obtained based on the latency requirement of the service flow and the latency of the service flow in the uplink direction, to decompose latency of the service flow.

In the first possible implementation, the access information of the ingress terminal further includes a residence period of the ingress terminal and a residence period of the anchor user plane function network element corresponding to the session of the ingress terminal; and the access information of the egress terminal further includes a residence period of the egress terminal and a residence period of the anchor user plane function network element corresponding to the session of the egress terminal.

Based on the possible implementation, the first network element may further decompose the quality of service information with reference to the residence period of the ingress terminal, the residence period of the anchor user plane function network element corresponding to the session of the ingress terminal, the residence period of the egress terminal, and the residence period of the anchor user plane function network element corresponding to the session of the egress terminal, so that quality of service information after the decomposition is more reasonable.

In the first possible implementation, a sum of the latency of the service flow in the uplink direction, the latency of the service flow in the downlink direction, the residence period of the ingress terminal, the residence period of the egress terminal, and the residence period of the anchor user plane function network element corresponding to the session of the ingress terminal is less than or equal to the latency requirement of the service flow.

Based on the possible implementation, the latency of the service flow in the uplink direction can be obtained based on the latency requirement of the service flow, and the latency of the service flow in the downlink direction can be obtained based on the latency requirement of the service flow, the latency of the service flow in the uplink direction, the residence period of the ingress terminal, the residence period of the egress terminal, and the residence period of the anchor user plane function network element corresponding to the session of the ingress terminal, to decompose the latency of the service flow.

In the first possible implementation, the quality of service information of the service flow includes a packet arrival time of the service flow; the uplink quality of service information includes a packet arrival time of the service flow in the uplink direction, where the packet arrival time of the service flow in the uplink direction is the same as the packet arrival time of the service flow; and the downlink quality of service information includes a packet arrival time of the service flow in the downlink direction, where the packet arrival time of the service flow in the downlink direction is determined based on a sum of the packet arrival time of the service flow in the uplink direction and the latency of the service flow in the uplink direction.

Based on the possible implementation, the packet arrival time of the service flow in the uplink direction can be obtained based on the packet arrival time of the service flow, and the packet arrival time of the service flow in the downlink direction can be obtained based on the latency requirement of the service flow and the latency of the service flow in the uplink direction, to decompose the quality of service information of the service flow.

In the first possible implementation, the quality of service decomposition information further includes a packet transmission period between the anchor user plane function network element corresponding to the session of the ingress terminal and the anchor user plane function network element corresponding to the session of the egress terminal.

Based on the possible implementation, the first network element may further decompose the quality of service information with reference to the packet transmission period between the user plane function network elements, so that a decomposition result is more accurate.

In the first possible implementation, the quality of service information of the service flow includes a latency requirement of the service flow; the uplink quality of service information includes latency of the service flow in an uplink direction; the downlink quality of service information includes latency of the service flow in a downlink direction; and a sum of the latency of the service flow in the uplink direction, the latency of the service flow in the downlink direction, and the packet transmission period is less than or equal to the latency requirement of the service flow.

Based on the possible implementation, the latency of the service flow in the uplink direction can be obtained based on the latency requirement of the service flow, and the latency of the service flow in the downlink direction can be obtained based on the latency requirement of the service flow, the latency of the service flow in the uplink direction, and the packet transmission period, to decompose latency of the service flow.

In the first possible implementation, the quality of service information of the service flow includes a packet arrival time of the service flow; the uplink quality of service information includes a packet arrival time of the service flow in the uplink direction, where the packet arrival time of the service flow in the uplink direction is the same as the packet arrival time of the service flow; and the downlink quality of service information includes a packet arrival time of the service flow in the downlink direction, where the packet arrival time of the service flow in the downlink direction is determined based on a sum of the packet arrival time of the service flow in the uplink direction, the latency of the service flow in the uplink direction, and the packet transmission period.

Based on the possible implementation, the packet arrival time of the service flow in the uplink direction can be obtained based on the packet arrival time of the service flow, and the packet arrival time of the service flow in the downlink direction can be obtained based on the latency requirement of the service flow, the latency of the service flow in the uplink direction, and the packet transmission period, to decompose the quality of service information of the service flow.

In the first possible implementation, the first request message further includes first event indication information, where the first event indication information indicates at least one of the following: monitoring for average latency, quality of service notification monitoring for a packet delay budget, quality of service notification monitoring for a guaranteed bit rate, or quality of service notification monitoring for a packet error rate; the second request message further includes the first event indication information; and the third request message further includes the first event indication information.

Based on the foregoing possible implementation, the first network element may trigger a network element to monitor an event related to the quality of service, to determine, based on information fed back through event monitoring, whether decomposition of the quality of service information is appropriate.

In the first possible implementation, the method further includes: receiving first notification information for the second request message, where the first notification information includes at least one of the following: average latency of the service flow in the uplink direction, indication information indicating that a packet delay budget of the service flow in the uplink direction is no longer met, indication information indicating that a guaranteed bit rate of the service flow in the uplink direction is no longer met, or indication information indicating that a packet error rate of the service flow in the uplink direction is no longer met; receiving second notification information for the third request message, where the second notification information includes at least one of the following: average latency of the service flow in the downlink direction, indication information indicating that a packet delay budget of the service flow in the downlink direction is no longer met, indication information indicating that a guaranteed bit rate of the service flow in the downlink direction is no longer met, or indication information indicating that a packet error rate of the service flow in the downlink direction is no longer met; and adjusting the uplink quality of service information based on the first notification information, adjusting the downlink quality of service information based on the second notification information, or adjusting the uplink quality of service information and the downlink quality of service information based on the first notification information and the second notification information.

Based on the possible implementation, the first network element may further adjust, based on a parameter obtained by monitoring the event, the uplink quality of service information and the downlink quality of service information that are originally obtained by decomposing the quality of service information, so that adjusted quality of service information is more appropriate, and transmission of the service flow further meets the quality of service requirement.

In the first possible implementation, the first request message further includes flow information of the service flow, and the flow information of the service flow includes an IP 5-tuple or an Ethernet header information address.

Based on the possible implementation, the first network element may determine a source address and a destination address of the service flow based on the flow information of the service flow, to subsequently trigger the network to configure the session of the ingress terminal and the session of the egress terminal.

In the first possible implementation, the second request message and the third request message further include the flow information of the service flow, and the flow information of the service flow includes the IP 5-tuple or the Ethernet header information address.

Based on the possible implementation, the first network element may trigger the network to configure the session of the ingress terminal by using the second request message, and configure the session of the egress terminal by using the third request message.

According to a second aspect, a communication method is provided. A communication apparatus that performs the method may be a first network element, or may be a module, for example, a chip or a chip system, used in the first network element. Alternatively, the communication apparatus that performs the method may be an application function network element, or may be a module used in the application function network element, for example, a chip or a chip system. The method includes: decomposing quality of service information of a service flow to obtain initial quality of service information, where the service flow is an end-to-end service flow, and the initial quality of service information includes uplink initial quality of service information or downlink initial quality of service information; sending a fourth request message, where the fourth request message includes an address of a first terminal, the initial quality of service information, and second event indication information, and the second event indication information indicates monitoring for average latency and quality of service notification monitoring for a packet delay budget, where when the initial service information includes the uplink initial quality of service information, the first terminal is an ingress terminal of the service flow; or when the initial service information includes the downlink initial quality of service information, the first terminal is an egress terminal of the service flow; receiving third notification information for the fourth request message, where if the initial quality of service information includes the uplink initial quality of service information, the third notification information includes average latency of the service flow in an uplink direction or the third notification information includes the average latency of the service flow in the uplink direction and indication information indicating that a packet delay budget of the service flow in the uplink direction is no longer met; or if the initial quality of service information includes the downlink initial quality of service information, the third notification information includes average latency of the service flow in a downlink direction or the third notification information includes the average latency of the service flow in the downlink direction and indication information indicating that a packet delay budget of the service flow in the downlink direction is no longer met; and adjusting the initial quality of service information based on the third notification information, to obtain target quality of service information, where the target quality of service information includes uplink target quality of service information and downlink target quality of service information.

Based on the method provided in the second aspect, the uplink initial quality of service information or the downlink initial quality of service information may be first allocated, to trigger a network to configure a corresponding quality of service flow, and monitoring of an event related to the quality of service information is further indicated. Therefore, appropriate uplink target quality of service information and appropriate downlink target quality of service information may be further allocated based on a parameter obtained by monitoring the event by the network, so that transmission of the service flow meets a quality of service requirement through dynamic adjustment.

In a first possible implementation, the fourth request message further includes local switching indication information, and the local switching indication information indicates that the service flow is transmitted through local switching or cross-user plane function network element switching.

Based on the possible implementation, a local switching or cross-N19 switching function of a user plane function network element may be activated, and a routing rule such as a PDR or a FAR is configured on the user plane function network element, so that the user plane function network element supports local forwarding (where that is, the user plane function network element directly forwards a packet between two or more PDU sessions connected to the user plane function network element without via a DN) or cross-N19 forwarding (where that is, the user plane function network element directly forwards the packet to another user plane function network element through an N19 tunnel without via the DN, so that the another user plane function network element sends the packet to a PDU session connected to the user plane function network element).

In the first possible implementation, before the decomposing quality of service information of a service flow to obtain initial quality of service information, the method further includes: receiving a fifth request message from an application function network element, where the fifth request message includes type information of the service flow, the quality of service information of the service flow, and the second event indication information, and the type information of the service flow indicates that the service flow is an end-to-end service flow.

Based on the possible implementation, it may be determined that the service flow is an end-to-end service flow, and the quality of service information is obtained, so that quality of service decomposition can be performed on the quality of service information.

In the first possible implementation, the quality of service information of the service flow includes a latency requirement of the service flow; if the initial quality of service information is the uplink initial quality of service information, the uplink initial quality of service information includes latency of the service flow in the uplink direction, and the latency of the service flow in the uplink direction is obtained based on a first preset rule and the latency requirement of the service flow; or if the initial quality of service information is the downlink initial quality of service information, the downlink initial quality of service information includes latency of the service flow in the downlink direction, and the latency of the service flow in the downlink direction is obtained based on a second preset rule and the latency requirement of the service flow.

Based on the possible implementation, the latency of the service flow in the uplink direction may be obtained based on the first preset rule and the latency requirement of the service flow, to implement initial quality of service decomposition. Alternatively, the latency of the service flow in the downlink direction is obtained based on the second preset rule and the latency requirement of the service flow, to implement initial quality of service decomposition.

In the first possible implementation, the quality of service information of the service flow further includes a packet arrival time of the service flow; and the uplink initial quality of service information further includes a packet arrival time of the service flow in the uplink direction, where the packet arrival time of the service flow in the uplink direction is the same as the packet arrival time of the service flow.

Based on the possible implementation, the packet arrival time of the service flow in the uplink direction may be determined based on the packet arrival time of the service flow, to implement the initial quality of service decomposition.

According to a third aspect, a communication apparatus is provided, to implement the foregoing method. The communication apparatus may be the first network element in the first aspect, or an apparatus including the first network element. Alternatively, the communication apparatus may be the first network element/application function network element in the second aspect, or an apparatus including the first network element/application function network element. The communication apparatus includes a corresponding module, unit, or means (means) for implementing the method. The module, unit, or means may be implemented by using hardware or software, or may be implemented by using hardware executing corresponding software. The hardware or the software includes one or more modules or units corresponding to the foregoing functions.

With reference to the third aspect, in a possible implementation, the communication apparatus may include a processing module and a transceiver module. The processing module may be configured to implement a processing function in any one of the foregoing aspects and the possible implementations of the foregoing aspects. The processing module may be, for example, a processor. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

With reference to the third aspect, in a possible implementation, the transceiver module includes a sending module and a receiving module, which are respectively configured to implement the sending function and the receiving function in any one of the foregoing aspects and the possible implementations of the foregoing aspects.

According to a fourth aspect, a communication apparatus is provided, including a processor. The processor is configured to: after being coupled to a memory and reading instructions in the memory, perform, based on the instructions, the method according to any one of the foregoing aspects. The communication apparatus may be the first network element in the first aspect, or an apparatus including the first network element. Alternatively, the communication apparatus may be the first network element/application function network element in the second aspect, or an apparatus including the first network element/application function network element.

With reference to the fourth aspect, in a possible implementation, the communication apparatus further includes a memory. The memory is configured to store necessary program instructions and data.

With reference to the fourth aspect, in a possible implementation, the communication apparatus is a chip or a chip system. Optionally, when the communication apparatus is the chip system, the communication apparatus may include a chip, or may include the chip and another discrete component.

According to a fifth aspect, a communication apparatus is provided, including a processor and an interface circuit. The interface circuit is configured to: receive a computer program or instructions, and transmit the computer program or the instructions to a processor. The processor is configured to execute the computer program or the instructions, to enable the communication apparatus to perform the method according to any one of the foregoing aspects.

With reference to the fifth aspect, in a possible implementation, the communication apparatus is a chip or a chip system. Optionally, when the communication apparatus is the chip system, the communication apparatus may include a chip, or may include the chip and another discrete component.

According to a sixth aspect, a computer-readable storage medium is provided. The computer-readable storage medium stores instructions. When the instructions are run on a computer, the computer is enabled to perform the method according to any one of the foregoing aspects.

According to a seventh aspect, a computer program product including instructions is provided. When the computer program product runs on a computer, the computer is enabled to perform the method according to any one of the foregoing aspects.

For a technical effect achieved by any one of the possible implementations of the third aspect to the seventh aspect, refer to a technical effect achieved by any one of the first aspect, the second aspect, or different possible implementations of the first aspect or the second aspect. Details are not described herein again.

It may be understood that the solutions in the foregoing aspects may be combined on a premise that the solutions are not contradictory.

### BRIEF DESCRIPTION OF DRAWINGS

FIG. 1A is a diagram 1 of an architecture of a 5G communication system;
FIG. 1B is a diagram 2 of an architecture of a 5G communication system;
FIG. 2A is a diagram of a user plane architecture of a 5G LAN service;
FIG. 2B is a diagram of a transmission process of an end-to-end unicast service flow;
FIG. 2C is a diagram of a transmission process of an end-to-end multicast service flow;
FIG. 3 is a diagram of a user-level N4 session;
FIG. 4 is a diagram of a group-level N4 session;
FIG. 5 is a diagram 1 of an architecture of a communication system according to an embodiment of this application;
FIG. 6 is a diagram 2 of an architecture of a communication system according to an embodiment of this application;
FIG. 7 is a diagram of a hardware structure of a communication apparatus according to an embodiment of this application;
FIG. 8 is a schematic flowchart 1 of a communication method according to an embodiment of this application;
FIG. 9 is a schematic flowchart 2 of a communication method according to an embodiment of this application;
FIG. 10 is a schematic flowchart 3 of a communication method according to an embodiment of this application;
FIG. 11 is a schematic flowchart 4 of a communication method according to an embodiment of this application;
FIG. 12 is a schematic flowchart 5 of a communication method according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

### DESCRIPTION OF EMBODIMENTS

Before embodiments of this application are described, related technologies in embodiments of this application are explained and described. It may be understood that, the explanations and descriptions are intended to facilitate understanding of embodiments of this application, but should not be construed as limiting the protection scope claimed in embodiments of this application.

### 1. Terminal

In embodiments of this application, the terminal is a device having a wireless transceiver function. The terminal may be deployed on land, including an indoor device, an outdoor device, a handheld device, or a vehicle-mounted device; or may be deployed on water (for example, on a ship); or may be deployed in the air (for example, on a plane, a balloon, or a satellite). The terminal may also be referred to as a terminal device, and the terminal device may be a user equipment (user equipment, UE). Therefore, in embodiments of this application, the terminal and the UE may be replaced with each other. The UE includes a handheld device, a vehicle-mounted device, a wearable device, or a computing device that has a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

By way of an example but not a limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, intelligent wearable devices include full-featured and large-size devices that can implement complete or partial functions without depending on smartphones, for example, smart watches or smart glasses, and include devices that are dedicated to only one type of application function and that need to be used together with other devices such as the smartphones, for example, various smart bands or smart jewelry used for monitoring physical signs.

In this application, the terminal may be a terminal in an internet of things (internet of things, IoT) system. IoT is an important component in development of future information technologies. A main technical feature of the IoT is to connect an object to a network by using a communication technology, to implement an intelligent network of human-machine interconnection and thing-thing interconnection. The terminal in this application may be a terminal in machine type communication (machine type communication, MTC).

### 2. Architecture of a 5G communication system

Before a 5G network is used, a mobile network that can be accessed by the terminal includes a 2nd-generation (2nd-generation, 2G) mobile communication network, a 3-rd generation (3rd-generation, 3G) mobile communication network, or a 4th-generation (4h-generation, 4G) mobile communication network. These networks provide service data transmission channels for a call service, a video service, a web page service, and the like of the terminal. However, with explosive development of new services such as an internet of vehicles, virtual reality, mobile office, and an internet of things, the mobile network is required to provide a fiber-like access rate, zero-latency user experience, a capability of connecting hundreds of billions of devices, a consistent service across a variety of scenarios including cases of ultra-high traffic density, ultra-high connection density, and ultra-high mobility, intelligent optimization of service and user awareness, energy efficiency improvement by over 100 times, and bit cost reduction by over 100 times. All these are weak points of conventional networks, and the conventional networks cannot safeguard rapid development of future services. Therefore, the 5G network emerges.

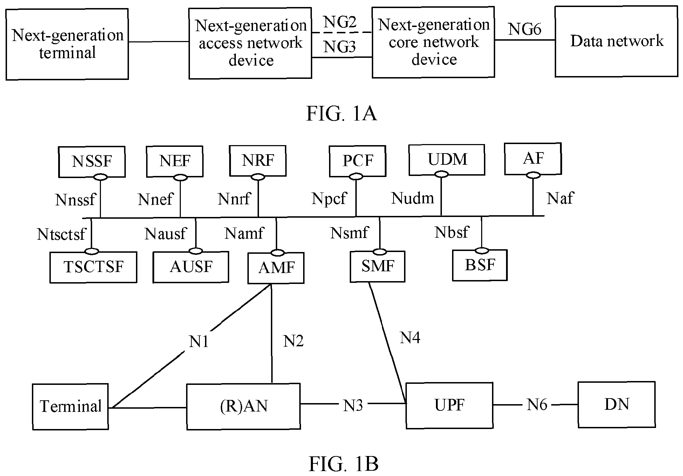

FIG. 1A shows an architecture of a 5G communication system that is formulated in a 3rd generation partnership project (3rd generation partnership project, 3GPP) standard. The 5G communication system shown in FIG. 1A includes a next-generation terminal (NextGen UE), a next-generation access network (NextGen (R)AN) device communicatively connected to the next-generation terminal, a next-generation core network (NextGen Core) device communicatively connected to the next-generation access network device, and a data network (data network, DN) communicatively connected to the next-generation core network device.

The next-generation terminal, the next-generation access network device, and the next-generation core network device are main components of the 5G communication architecture, and may be logically divided into two parts: a user plane and a control plane. The control plane is mainly responsible for mobile network management, and the user plane is mainly responsible for service data transmission. In FIG. 1A, an NG2 reference point is located between the control plane of the next-generation access network device and the control plane of the next-generation core network device, an NG3 reference point is located between the user plane of the next-generation access network device and the user plane of the next-generation core network device, and an NG6 reference point is located between the user plane of the next-generation core network device and the DN. The following describes the next-generation terminal, the next-generation access network device, the next-generation core network device, and the DN.

The next-generation terminal is an ingress for interaction between a mobile user and the network, and is capable of providing a basic computing capability and a storage capability, displaying a service window to the user, and receiving an operation input of the user. The next-generation terminal may establish a signal connection and a data connection to an access network device by using a new radio technology, to transmit a control signal and service data to a mobile network.

The next-generation access network device is similar to a base station in a conventional network, is deployed near the terminal, provides a network access function for an authorized user within a particular area, and can determine, based on a user level, a service requirement, and the like, transmission tunnels of different quality for transmission of user data. The next-generation access network device can manage a resource of the access network device, properly use the resource, provide an access service for the terminal as required, and forward the control signal and the user data between the terminal and the core network.

The next-generation core network device is responsible for maintaining subscription data of the mobile network, managing a network element in the mobile network, and providing a function such as session management, mobility management, policy management, or security authentication for the terminal. For example, when the terminal is attached, the core network device provides network access authentication for the terminal; when the terminal has a service request, the core network device allocates a network resource to the terminal; when the terminal moves, the core network device updates the network resource for the terminal; when the terminal is idle, the core network device provides a fast recovery mechanism for the terminal; when the terminal is detached, the core network device releases the network resource for the terminal; or when the terminal has service data, the core network device provides a data routing function for the terminal, for example, forwarding uplink data to the DN; or receiving downlink data of the terminal from the DN, and forwarding the downlink data to the access network device, to send the downlink data to the terminal.

The DN is a data network that provides a service for the user. Usually, a client is located on the terminal, and a server is located on the DN. The DN may be a private network, for example, a local area network; may be an external network that is not managed and controlled by an operator, for example, the Internet (Internet); or may be a dedicated network jointly deployed by operators, for example, a network that provides an internet protocol multimedia subsystem (internet protocol multimedia subsystem, IMS) service.

In the 3GPP standard, the architecture of the 5G communication system shown in FIG. 1A is further refined. For details, refer to FIG. 1B. In FIG. 1B, a user plane network element of the core network includes a UPF network element. Control plane network elements of the core network include an authentication server function (authentication server function, AUSF) network element, a core network access and mobility management function (core access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a unified data management (unified data management, UDM) network element, a policy control function (policy control function, PCF) network element, an AF network element, a binding support function (binding support function, BSF) network element, and a time sensitive communication and time synchronization function (time sensitive communication and time synchronization function, TSCTSF) network element.

It may be understood that a service-oriented architecture is used on the control plane of the core network. Interaction between the control plane network elements uses a service invoking mode to replace a point-to-point communication mode in a conventional architecture. In point-to-point communication, a set of specific messages exist on a communication interface between the control plane network elements, and can be used only by control plane network elements at two ends of the interface during communication. However, in the service-oriented architecture, the control plane network element may expose a service to another control plane network element, so that the another control plane network element can invoke the service. Functions of the function network elements in the core network are as follows.

The UPF network element may forward a user data packet according to a routing rule of the SMF network element, for example, send uplink data to the DN or another UPF network element, and forward downlink data to another UPF network element or an access network ((R)AN) device.

The AUSF network element may perform security authentication on the terminal.

The AMF network element may be responsible for access management and mobility management of the terminal. The AMF network element is responsible for status maintenance of the terminal, reachability management of the terminal, non-mobility management (mobility management, MM), forwarding of a non-access stratum (non-access stratum, NAS) message, and forwarding of a session management (session management, SM) N2 message.

The SMF network element may be responsible for session management of the terminal, allocating a resource to a session of the terminal, and releasing a resource. The resource includes session QoS, a session path, a forwarding rule, or the like.

The NSSF network element may be responsible for selecting a network slice for the terminal.

The NEF network element may expose a network function to a third party through a northbound application programming interface (application programming interface, API).

The NRF network element may be responsible for providing a storage function and a select function of network function entity information for another network element.

The UDM network element may be responsible for user subscription context management.

The PCF network element may be responsible for user policy management.

The AF network element may be responsible for application management.

The BSF network element may be responsible for storing a binding relationship between protocol data unit (protocol data unit, PDU) session (session) information and the PCF network element, and feeding back information about a bound PCF network element based on the PDU session information such as a data network name (data network name, DNN), single network slice selection assistance information (single network slice selection assistance information, S-NSSAI), or a UE address.

The TSCTSF network element may be responsible for processing a time sensitive communication QoS request and a time synchronization function request in a non-TSN scenario.

The architecture of the 5G communication system shown in FIG. 1B further includes a terminal, an access network ((R)AN) device, and a DN. An access device refers to a device that accesses the core network. For example, the access device may be a base station, a broadband network gateway (broadband network gateway, BNG), an aggregation switch, a non-3GPP access device, or the like. The base station may include various forms of base stations, for example, a macro base station, a micro base station (also referred to as a small cell), a relay station, and an access point. For descriptions of the terminal and the DN, refer to the foregoing descriptions.

In FIG. 1B, the terminal device may access a 5G network via the access network device, and the terminal communicates with the AMF network element through an N1 interface (N1 for short). The access network device communicates with the AMF network element through an N2 interface (N2 for short), and the access network device communicates with the UPF network element through an N3 interface (N3 for short). The SMF network element communicates with the UPF network element through an N4 interface (N4 for short). The UPF network element may communicate with another UPF network element through an N9 or N19 interface (N9 or N19 for short, not shown in FIG. 1B), and the UPF network element accesses the DN through an N6 interface (N6 for short). In addition, the control plane network elements such as the AUSF network element, the AMF network element, the SMF network element, the NSSF network element, the NEF network element, the NRF network element, the PCF network element, the UDM network element, the AF network element, the BSF network element, or the TSCTSF network element shown in FIG. 1B may also perform interaction through a service-oriented interface. For example, a service-oriented interface exhibited by the AUSF network element may be Nausf; a service-oriented interface exhibited by the AMF network element may be Namf; a service-oriented interface exhibited by the SMF network element may be Nsmf; a service-oriented interface exhibited by the NSSF network element may be Nnssf; a service-oriented interface exhibited by the NEF network element may be Nnef; a service-oriented interface exhibited by the NRF network element may be Nnrf; a service-oriented interface exhibited by the PCF network element may be Npcf; a service-oriented interface exhibited by the UDM network element may be Nudm; a service-oriented interface exhibited by the AF network element may be Naf; a service-oriented interface exhibited by the BSF network element may be Nbsf; and a service-oriented interface exhibited by the TSCTSF network element may be Ntsctsf.

### 3. 5G local area network (5G Local Area Network, 5GLAN) service

A 5G LAN service is a service provided by the 5G network. The service can provide private communication of internet protocol (Internet Protocol, IP) type or non-IP type (for example, Ethernet type) for two or more terminals in a group of terminals. The 5G LAN service is mainly used for home communication, enterprise office, factory manufacturing, the internet of vehicles, power grid reconstruction, public security organs, and the like. Terminals in a group of terminals are added to this group due to a service requirement or a dedicated attribute, and the terminals in this group can communicate with each other by using the 5G LAN service. For example, a group includes devices in a factory, and the devices in the group may send an Ethernet data packet to each other. A group includes office devices (such as mobile phones, computers, or laptop computers) of employees in a department of an enterprise, and the office devices send an IP packet to each other. If two terminals are not in a same group, the two terminals cannot communicate with each other.

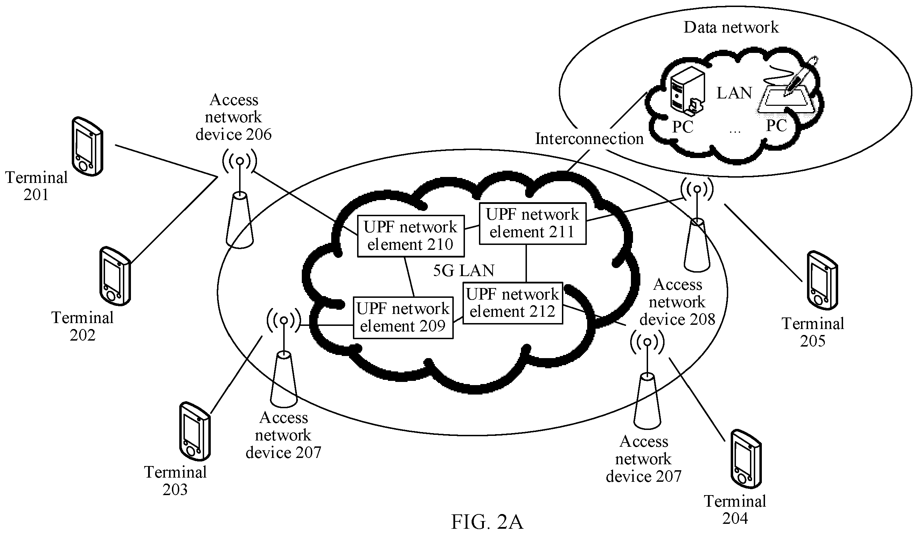

FIG. 2A shows a user plane architecture of the 5G LAN service. In FIG. 2A, a terminal establishes a session to a UPF network element that provides the 5G LAN service, to access the UPF network element in the 5G LAN. The UPF network element in the 5G LAN may communicate with an existing local area network (local area network, LAN) in a data network through an N6 interface, or may associate sessions of different terminals through an internal interface of the UPF network element or an N19 connection between UPF network elements, to implement private communication.

### 4. End-to-end service flow

The end-to-end service flow may mean that both an ingress device and an egress device of the service flow are terminals connected to the UPF network element. In embodiments of this application, the end-to-end service flow may be used in a unicast communication scenario, a multicast/broadcast communication scenario, or a general flow scenario. The user plane architecture of the 5G LAN service shown in FIG. 2A is used as an example to describe the three scenarios separately.

In embodiments of this application, unicast communication is a one-to-one communication mode, and may be communication between a specific ingress terminal and a specific egress terminal, for example, communication between a terminal 201 and a terminal 202, or communication between the terminal 201 and a terminal 203. In embodiments of this application, an end-to-end service flow used in the unicast communication scenario may be referred to as an end-to-end unicast service flow. The ingress terminal may also be referred to as a source terminal, and the egress terminal may also be referred to as a destination terminal.

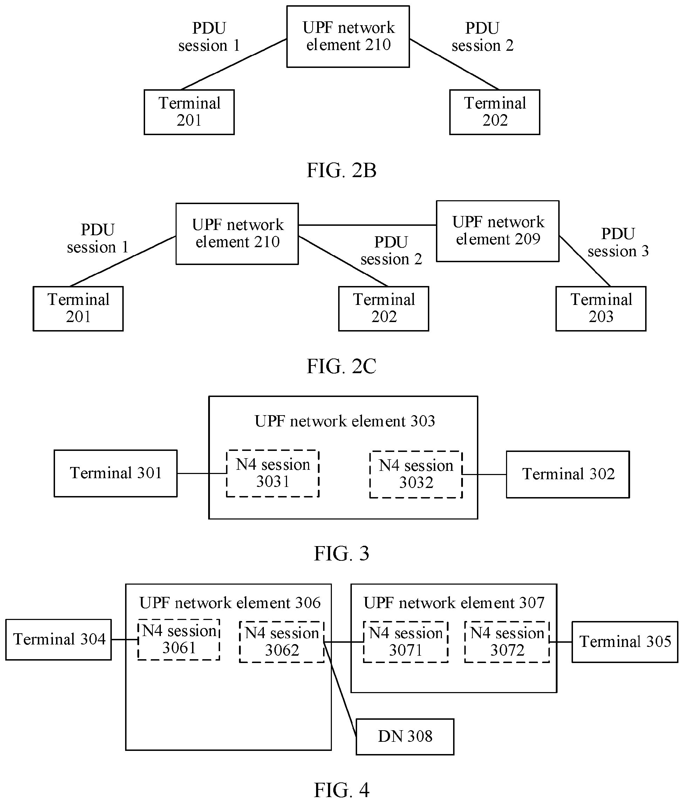

FIG. 2B is a diagram of a transmission process of the end-to-end unicast service flow. In FIG. 2B, the terminal 201 establishes a PDU session 1 to a UPF network element 210, and the terminal 202 establishes a PDU session 2 to the UPF network element 210. Usually, if a terminal accesses a UPF network element by using a PDU session, the UPF network element is an anchor UPF network element corresponding to the PDU session of the terminal. Therefore, the UPF network element 210 is an anchor UPF network element corresponding to the PDU session 1 of the terminal 201, and the UPF network element 210 is also an anchor UPF network element corresponding to the PDU session 2 of the terminal 202. If the terminal 201 is an ingress terminal, and the terminal 202 is an egress terminal, after arriving at the terminal 201, the end-to-end unicast service flow may arrive at the terminal 202 through the PDU session 1, the UPF network element 210, and the PDU session 2. A direction of the service flow from the terminal 201 to the UPF network element 201 is an uplink direction of the service flow, and a direction of the service flow from the UPF network element 210 to the terminal 202 is a downlink direction of the service flow.

In embodiments of this application, multicast/broadcast communication is a one-to-many communication mode. One ingress terminal may send a packet to a plurality of egress terminals. The multicast communication is used as an example. One terminal may send a packet to terminals in a multicast group to which the terminal belongs. The terminal sending the packet may be referred to as a multicast source, and a terminal receiving the packet may be referred to as a multicast member. In other words, multicast is directional, and the direction is from the multicast source to the multicast member. Members in a 5G LAN group shown in FIG. 2A include the terminal 201 to a terminal 205. If the terminal 201 to the terminal 203 are a multicast group, where the terminal 201 is a multicast source and the terminal 202 and the terminal 203 are multicast members, a multicast packet sent by the terminal 201 may be transmitted to the terminal 202 through an access network device 206 and the UPF network element 210, and may be transmitted to the terminal 203 through the access network device 206, the UPF network element 210, a UPF network element 209, and an access network device 207. Because the terminal 204 and the terminal 205 are not multicast members of the multicast group, the terminal 204 and the terminal 205 do not receive the multicast packet.

FIG. 2C is a diagram of a transmission process of the end-to-end multicast service flow. In FIG. 2C, the terminal 201 establishes a PDU session 1 to the UPF network element 210, the terminal 202 establishes a PDU session 2 to the UPF network element 210, and the terminal 203 establishes a PDU session 3 to the UPF network element 209. The UPF network element 210 is an anchor UPF network element corresponding to the PDU session 1 of the terminal 201, and the UPF network element 210 is also an anchor UPF network element corresponding to the PDU session 2 of the terminal 202. The UPF network element 209 is an anchor UPF network element corresponding to the PDU session 3 of the terminal 203. If the terminal 201 is the multicast source, and the terminal 202 and the terminal 203 are the multicast members, for the service flow, the terminal 201 is an ingress terminal, and both the terminal 202 and the terminal 203 are egress terminals. After the end-to-end multicast service flow arrives at the terminal 201, the end-to-end multicast service flow may arrive at the terminal 202 through the PDU session 1, the UPF network element 210, and the PDU session 2, and arrive at the terminal 203 through the PDU session 1, the UPF network element 210, the UPF network element 209, and the PDU session 3. A direction of the service flow from the terminal 201 to the UPF network element 201 is an uplink direction of the service flow, a direction of the service flow from the UPF network element 210 to the terminal 202 is a downlink direction of the service flow, and a direction of the service flow from the UPF network element 209 to the terminal 203 is a downlink direction of the service flow.

In embodiments of this application, the multicast communication may also be described as groupcast communication. Correspondingly, the multicast group may also be described as a groupcast group. The end-to-end service flow used in the multicast/broadcast communication scenario may be referred to as an end-to-end multicast/broadcast service flow, or an end-to-end groupcast/broadcast service flow.

In embodiments of this application, a general flow may be a service flow between a non-specific ingress terminal and a non-specific egress terminal. In a general flow scenario, a device being an ingress terminal is not limited, and a device being an egress terminal is not limited either. An end-to-end service flow used in the general flow scenario may be referred to as an end-to-end general service flow. During specific application, if a service flow corresponding to a group is an end-to-end general service flow, communication between any two members in the group meets a QoS requirement corresponding to the general service flow. For example, the members in the 5G LAN group shown in FIG. 2A include the terminal 201 to the terminal 205. If a service flow corresponding to the 5G LAN group is an end-to-end general service flow, communication between any two members (for example, the terminal 201 and the terminal 202, the terminal 201 and the terminal 203, or the terminal 202 and the terminal 204) in the 5G LAN group meets the QoS requirement corresponding to the general service flow.

### 5. N4 session

In embodiments of this application, the N4 session includes a user-level N4 session and a group (group)-level N4 session. The user-level N4 session may be used for communication between terminals that access a same UPF network element. The user-level N4 session may be created by a UPF network element accessed by a terminal as indicated by an SMF network element when the SMF network element establishes a PDU session corresponding to the terminal. The group-level N4 session may be used for communication between different UPF network elements, and/or communication between a UPF network element and a DN. The following provides detailed descriptions.

### 5.1: User-level N4 session

In a possible implementation, when the terminal establishes the PDU session, the SMF network element may indicate the UPF network element to establish a user-level N4 session corresponding to the PDU session. Then, the UPF network element may receive, by using the PDU session, a packet (for example, a multicast packet) sent by the terminal; processes the received packet according to a routing rule in the user-level N4 session corresponding to the PDU session; identifies, according to the routing rule in the user-level N4 session corresponding to the PDU session, a packet to be sent to the terminal; and sends the packet (for example, a multicast packet) to the terminal by using the PDU session. When the SMF network element receives a PDU session release request of the terminal, the SMF network element may trigger the UPF network element to delete the user-level N4 session corresponding to the PDU session.

It may be understood that one UPF network element may create an N4 session corresponding to one or more PDU sessions. To be specific, when a plurality of terminals are connected to a same UPF network element, the SMF network element may indicate the UPF network element to create an N4 session corresponding to a PDU session of each terminal.

For example, FIG. 3 is a diagram of the user-level N4 session. In FIG. 3, when creating a PDU session of a terminal 301, an SMF network element connected to a UPF network element 303 may indicate the UPF network element 303 to create an N4 session 3031 corresponding to the PDU session of the terminal 301. Similarly, when creating a PDU session of a terminal 302, the SMF network element may indicate the UPF network element 303 to create an N4 session 3032 corresponding to the PDU session of the terminal 303. The N4 session 3031 corresponding to the PDU session of the terminal 301 may also be referred to as an N4 session of the terminal 301 for short, and the N4 session 3032 corresponding to the PDU session of the terminal 302 may also be referred to as an N4 session of the terminal 302 for short.

### 5.2: Group-level N4 session

In a possible implementation, when creating the 1^{st} PDU session of a UPF network element anchored to the 5G LAN group, the SMF network element may indicate the UPF network element to create a group-level N4 session corresponding to the 5G LAN group. In addition, when releasing a last PDU session of the UPF network element anchored to the 5G LAN group, the SMF network element may indicate the UPF network element to delete a group-level N4 session corresponding to the 5G LAN group. In embodiments of this application, one UPF network element may include one or more group-level N4 sessions. For example, if one UPF network element serves a plurality of 5G LAN groups, the UPF network element may create a plurality of group-level N4 sessions, and each group-level N4 session corresponds to one 5G LAN group. For one 5G LAN group, a group-level N4 session corresponding to the 5G LAN group may be created for each of one or more UPF network elements serving the 5G LAN group.

For example, FIG. 4 is a diagram of the group-level N4 session. In FIG. 4, it is assumed that when creating a PDU session of a terminal 304, the SMF network element has indicated a UPF network element 306 to create an N4 session 3061 corresponding to the PDU session of the terminal 304. In this case, when creating a PDU session of a terminal 305, the SMF network element may indicate a UPF network element 307 to create an N4 session 3072 corresponding to the PDU session of the terminal 305. In addition, the 5G LAN group includes the terminal 304 and the terminal 305. The terminal 304 in the 5G LAN group has accessed the UPF network element 306, the terminal 305 now accesses the UPF network element 307, there are a plurality of UPF network elements serving the 5G LAN group, and communication between different UPF network elements is needed. Therefore, the SMF network element may indicate the UPF network element 307 to create a group-level N4 session 3071 corresponding to the 5G LAN group, and the SMF network element indicates the UPF network element 306 to create a group-level N4 session 3062 corresponding to the 5G LAN group. Alternatively, optionally, if the 5G LAN group needs to communicate with a DN 308, the SMF network element may indicate the UPF network element 306 to create the group-level N4 session 3062 corresponding to the 5G LAN group. This is not specifically limited herein.

The following describes implementations of embodiments of this application in detail with reference to the accompanying drawings.

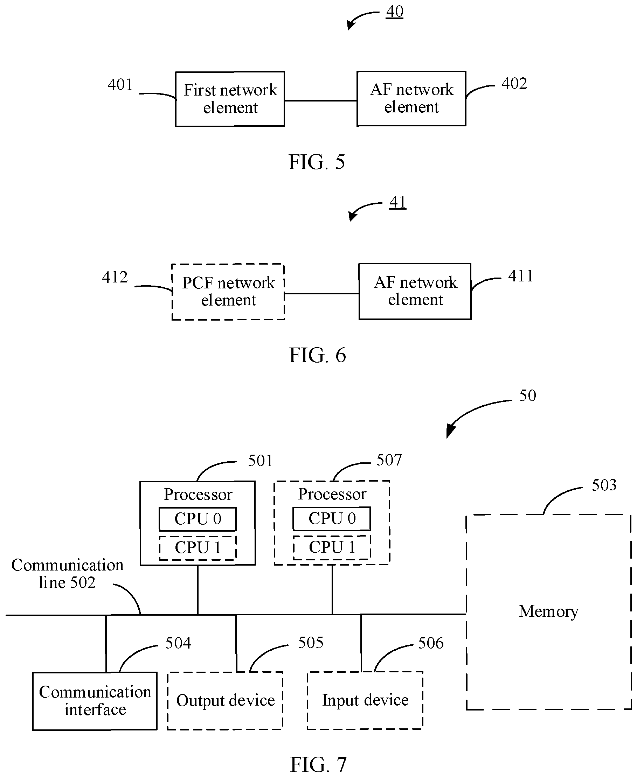

A method provided in embodiments of this application may be used in various communication systems. For example, the communication system may be a long term evolution (long term evolution, LTE) system, a 5G communication system, a Wi-Fi system, a 3GPP-related communication system, a future evolved communication system, a system integrating a plurality of systems, or the like. This is not limited. 5G may also be referred to as new radio (new radio, NR). A communication system 40 shown in FIG. 5 and a communication system 41 shown in FIG. 6 are used as examples below to describe the method provided in embodiments of this application.

FIG. 5 is a diagram of an architecture of a communication system 40 according to an embodiment of this application. In FIG. 5, the communication system 40 may include a first network element 401 and an AF network element 402 communicatively connected to the first network element 401. The two network elements that are communicatively connected in FIG. 5 may directly communicate with each other, or may communicate with each other via another network element. This is not limited. FIG. 5 is merely a diagram, and does not constitute a limitation on a scenario to which the technical solutions provided in this application are applicable.

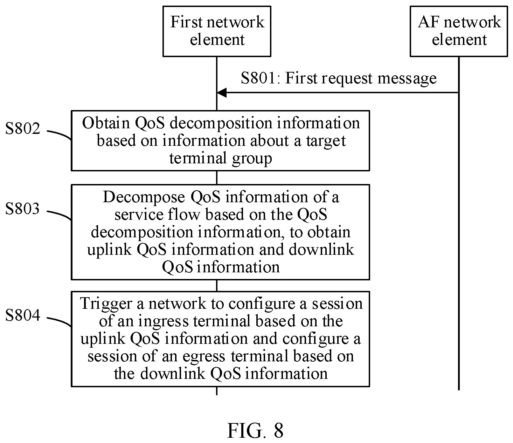

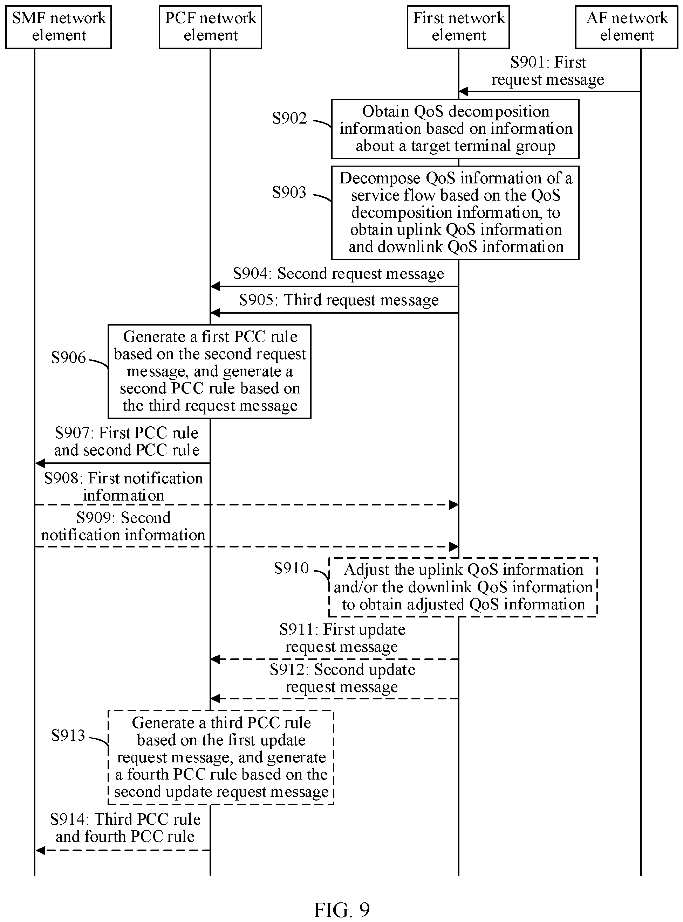

In some embodiments, the AF network element 402 may send a first request message to the first network element 401. The first request message includes type information of a service flow, information about a target terminal group, and QoS information of the service flow. The first network element 401 may receive the first request message from the AF network element 402; when the type information indicates that the service flow is an end-to-end service flow, obtain, based on the information about the target terminal group, QoS decomposition information including access information of an ingress terminal and access information of an egress terminal; decompose the quality of service information of the service flow based on the QoS decomposition information, to obtain uplink QoS information and downlink QoS information; and trigger a network to configure a session of the ingress terminal based on the uplink QoS information and configure a session of the egress terminal based on the downlink QoS information. The foregoing process is described in the following embodiments shown in FIG. 8 and FIG. 9, and details are not described herein.

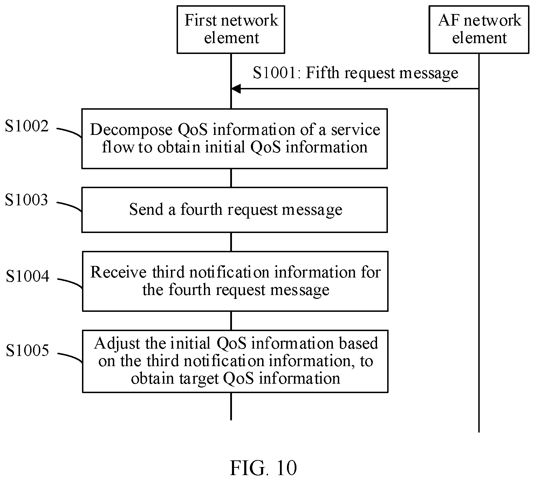

In some embodiments, the AF network element 402 may send a fifth request message to the first network element 401. The fifth request message includes type information of a service flow, QoS information of the service flow, and second event indication information. The type information of the service flow indicates that the service flow is an end-to-end service flow. The first network element 401 may receive the fifth request message from the AF network element 402; decompose the QoS information of the service flow to obtain initial QoS information; send a fourth request message; receive third notification information for the fourth request message; and adjust the initial QoS information based on the third notification information to obtain target QoS information. The target QoS information includes uplink target QoS information and downlink target QoS information. In the foregoing embodiments, the initial QoS information may include uplink initial QoS information or downlink initial QoS information. If the initial information includes the uplink initial QoS information, the fourth request message includes an address of an ingress terminal, the uplink initial QoS information, and the second event indication information. If the initial information includes the downlink initial QoS information, the fourth request message includes an address of an egress terminal, the downlink initial QoS information, and the second event indication information. The second event indication information indicates monitoring for average latency and QoS notification monitoring for a packet delay budget. The foregoing process is described in the following embodiment shown in FIG. 10, and details are not described herein.

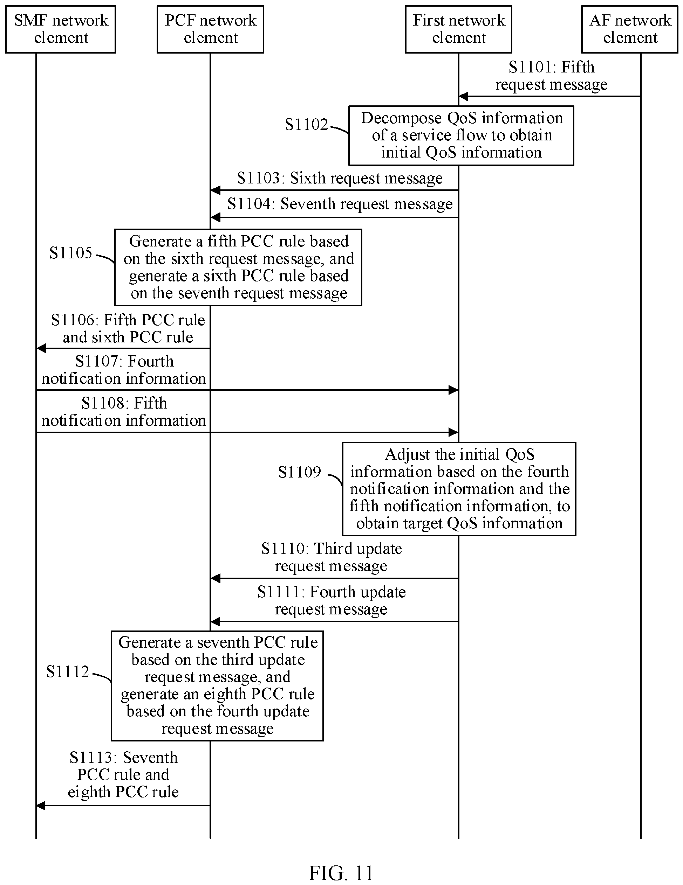

In some embodiments, the AF network element 402 may send a fifth request message to the first network element 401. The fifth request message includes type information of a service flow, QoS information of the service flow, and second event indication information. The type information of the service flow indicates that the service flow is an end-to-end service flow. The first network element 401 may receive the fifth request message from the AF network element 402; decompose the QoS information of the service flow, to obtain initial QoS information; send a sixth request message and a seventh request message; receive fourth notification information for the sixth request message and receive fifth notification information for the seventh request message; and adjust the initial QoS information based on the fourth notification information and the fifth notification information, to obtain target QoS information. The initial QoS information includes uplink initial QoS information and downlink initial QoS information. The target QoS information includes uplink target QoS information and downlink target QoS information. The sixth request message includes an address of an ingress terminal, the uplink initial QoS information, and the second event indication information. The seventh request message includes an address of an egress terminal, the downlink initial QoS information, and the second event indication information. The second event indication information indicates monitoring for average latency and QoS notification monitoring for a packet delay budget. The foregoing process is described in the following embodiment shown in FIG. 11, and details are not described herein.

The communication system 40 shown in FIG. 5 is merely used as an example, but is not intended to limit the technical solutions of this application. A person skilled in the art should understand that, in a specific implementation process, the communication system 40 may further include another network element, and may further determine a quantity of first network elements or AF network elements based on a specific requirement. This is not limited.

FIG. 6 is a diagram of an architecture of another communication system 41 according to an embodiment of this application. In FIG. 6, the communication system 41 may include an AF network element 411. Optionally, the communication system 41 further includes a PCF network element 412 communicatively connected to the AF network element 411. The two network elements that are communicatively connected in FIG. 6 may directly communicate with each other, or may communicate with each other via another network element. This is not limited. In this embodiment of this application, if the PCF network element serves only a PDU session of a terminal, the PCF network element may also be replaced with a session management (session management, SM)-PCF network element. FIG. 6 is merely a diagram, and does not constitute a limitation on a scenario to which the technical solutions provided in this application are applicable.

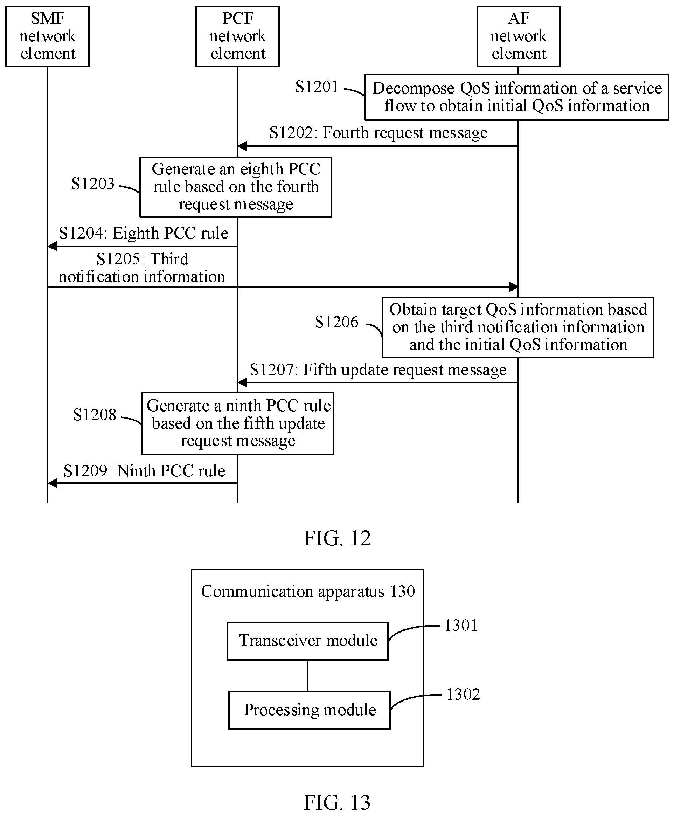

In some embodiments, the AF network element 411 may decompose QoS information of a service flow to obtain initial QoS information; send a fourth request message to the PCF network element 412; receive third notification information for the fourth request message; and adjust the initial QoS information based on the third notification information, to obtain target QoS information. The target QoS information includes uplink target QoS information and downlink target QoS information. In the foregoing embodiments, the initial QoS information may include uplink initial QoS information or downlink initial QoS information. If the initial information includes the uplink initial QoS information, the fourth request message includes an address of an ingress terminal, the uplink initial QoS information, and second event indication information. If the initial information includes the downlink initial QoS information, the fourth request message includes an address of an egress terminal, the downlink initial QoS information, and second event indication information. The second event indication information indicates monitoring for average latency and QoS notification monitoring for a packet delay budget. The foregoing process is described in the following embodiment shown in FIG. 12, and details are not described herein.

In some embodiments, the AF network element 411 decomposes QoS information of a service flow to obtain initial QoS information; send a sixth request message and a seventh request message to the PCF network element 412; receive fourth notification information for the sixth request message and receive fifth notification information for the seventh request message; and adjust the initial QoS information based on the fourth notification information and the fifth notification information, to obtain target QoS information. The initial QoS information includes uplink initial QoS information and downlink initial QoS information. The target QoS information includes uplink target QoS information and downlink target QoS information. The sixth request message includes an address of an ingress terminal, the uplink initial QoS information, and second event indication information. The seventh request message includes an address of an egress terminal, the downlink initial QoS information, and the second event indication information. The second event indication information indicates monitoring for average latency and QoS notification monitoring for a packet delay budget.

The communication system 41 shown in FIG. 6 is merely used as an example, but is not intended to limit the technical solutions of this application. A person skilled in the art should understand that, in a specific implementation process, the communication system 41 may further include another network element, and may further determine a quantity of AF network elements or PCF network elements based on a specific requirement. This is not limited.

Optionally, the communication system 40 shown in FIG. 5 or the communication system 41 shown in FIG. 6 may be used in a current 5G network, another future network, or the like. This is not specifically limited in embodiments of this application.

For example, the communication system 40 shown in FIG. 5 may be used in the 5G network shown in FIG. 1B. In this case, a network element or an entity corresponding to the first network element 401 in FIG. 5 may be the NEF network element, the TSCTSF network element, or the PCF network element in the architecture of the 5G network, and a network element or an entity corresponding to the AF network element 402 may be the AF network element in the architecture of the 5G network.

It may be understood that, in addition to an existing network element (for example, the NEF network element, the TSCTSF network element, or the PCF network element) in the 5G network, the first network element 401 may alternatively be a new network element. For example, a control plane network element, for example, a group PCF (group PCF, G-PCF) network element, is added to the 5G network. The G-PCF network element may implement a function of the first network element in embodiments of this application through a service-oriented interface exhibited as Ngpcf. It should be understood that the first network element may alternatively have another name. This is not specifically limited in embodiments of this application.

For example, the communication system 41 shown in FIG. 6 may be used in the 5G network shown in FIG. 1B. In this case, a network element or an entity corresponding to the AF network element 411 in FIG. 6 may be the AF network element in the architecture of the 5G network, and a network element or an entity corresponding to the PCF network element 412 may be the PCF network element in the architecture of the 5G network.

Optionally, each network element or device (for example, the first network element, the AF network element, or the PCF network element) in FIG. 5 or FIG. 6 in embodiments of this application may also be referred to as a communication apparatus, and may be a general-purpose device or a dedicated device. This is not specifically limited in embodiments of this application.

Optionally, a related function of each network element or device (for example, the first network element, the AF network element, or the PCF network element) in FIG. 5 or FIG. 6 in embodiments of this application may be implemented by one device, may be jointly implemented by a plurality of devices, or may be implemented by one or more functional modules in the device. This is not specifically limited in embodiments of this application. It may be understood that the foregoing function may be a network element in a hardware device, or may be a software function running on dedicated hardware, a combination of hardware and software, or a virtualization function instantiated on a platform (for example, a cloud platform).

During specific implementation, each network element or device (for example, the first network element, the AF network element, or the PCF network element) in FIG. 5 or FIG. 6 in embodiments of this application may use a composition structure shown in FIG. 7, or include components shown in FIG. 7. FIG. 7 is a diagram of a hardware structure of a communication apparatus applicable to an embodiment of this application. The communication apparatus 50 includes at least one processor 501 and at least one communication interface 504, and is configured to implement the method provided in embodiments of this application. The communication apparatus 50 may further include a communication line 502 and a memory 503.

The processor 501 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 502 may include a path for transferring information between the foregoing components, for example, a bus.

The communication interface 504 is configured to communicate with another device or a communication network. The communication interface 504 may be any transceiver-like apparatus, for example, may be an Ethernet interface, a radio access network (radio access network, RAN) interface, a wireless local area network (wireless local area networks, WLAN) interface, a transceiver, a pin, a bus, or a transceiver circuit.

The memory 503 may be a read-only memory (read-only memory, ROM), another type of static storage device capable of storing static information and instructions, a random access memory (random access memory, RAM), or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compressed optical disc, a laser disc, an optical disc, a digital versatile optical disc, a Blue-ray optical disc, or the like), a magnetic disk storage medium, another magnetic storage device, or any other medium capable of carrying or storing expected program code in a form of instructions or a data structure and capable of being accessed by a computer, but is not limited thereto. The memory may exist independently, and is coupled to the processor 501 through the communication line 502. Alternatively, the memory 503 may be integrated with the processor 501. The memory provided in embodiments of this application may be usually nonvolatile.

The memory 503 is configured to store computer-executable instructions for performing the solutions provided in embodiments of this application, and the processor 501 controls execution of the computer-executable instructions. The processor 501 is configured to execute the computer-executable instructions stored in the memory 503, to implement the method provided in embodiments of this application. Alternatively, optionally, in this embodiment of this application, the processor 501 may perform a processing-related function in a method provided in the following embodiments of this application, and the communication interface 504 is responsible for communication with another device or a communication network. This is not specifically limited in this embodiment of this application.

Optionally, the computer-executable instructions in this embodiment of this application may also be referred to as application program code. This is not specifically limited in this embodiment of this application.

The coupling in this embodiment of this application may be an indirect coupling or a communication connection between apparatuses, units, or modules in an electrical form, a mechanical form, or another form, and is used for information exchange between the apparatuses, the units, or the modules.

In an embodiment, the processor 501 may include one or more CPUs, for example, a CPU 0 and a CPU 1 in FIG. 7.

In an embodiment, the communication apparatus 50 may include a plurality of processors, for example, a processor 501 and a processor 507 in FIG. 7. Each of the processors may be a single-core (single-CPU) processor, or a multi-core (multi-CPU) processor. The processor herein may be one or more devices, circuits, and/or processing cores configured to process data (for example, computer program instructions).

In an embodiment, the communication apparatus 50 may further include an output device 505 and/or an input device 506. The output device 505 is coupled to the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, or a projector (projector). The input device 506 is coupled to the processor 501, and may receive an input of a user in a plurality of manners. For example, the input device 506 may be a mouse, a keyboard, a touchscreen device, a sensing device, or the like.

It may be understood that the composition structure shown in FIG. 7 does not constitute a limitation on the communication apparatus. In addition to the components shown in FIG. 7, the communication apparatus may include more or fewer components than those shown in the figure, some components may be combined, or different component arrangements may be used.

The following describes the method provided in embodiments of this application with reference to the accompanying drawings. Network elements in the following embodiments may have the components shown in FIG. 7. Details are not described again.

It may be understood that in embodiments of this application, "transmitting" may be understood as sending and/or receiving based on a specific context. "Transmitting" may be a noun or a verb. "Transmitting" is often used to substitute sending and/or receiving when an execution body of an action is not emphasized. For example, the phrase "transmitting a packet" may be understood as "sending the packet" from a perspective of a transmit end, and may be understood as "receiving the packet" from a perspective of a receive end.

It may be understood that names of messages between network elements, names of parameters in the messages, or the like in the following embodiments of this application are merely examples, and there may be other names during specific implementation. This is not specifically limited in embodiments of this application.

It may be understood that, in embodiments of this application, "/" may represent an "or" relationship between associated objects. For example, A/B may represent A or B. "And/or" may represent that three relationships exist between the associated objects. For example, A and/or B may represent the following three cases: Only A exists, both A and B exist, and only B exists. A and B may be singular or plural. In addition, a representation similar to "at least one of A, B, and C" or "at least one of A, B, or C" usually represents any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of describing the technical solutions in embodiments of this application, in embodiments of this application, words such as "first" and "second" may be used to distinguish technical features with a same or similar function. The words such as "first" and "second" do not limit a quantity and an execution sequence, and the words such as "first" and "second" do not limit a definite difference. In embodiments of this application, the words such as "example" or "for example" are used to represent an example, evidence, or a description. Any embodiment or design solution described as "example" or "for example" should not be explained as being more preferred or having more advantages than another embodiment or design solution. The words such as "example" or "for example" are used to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of the processes do not mean execution sequences in various embodiments of this application. The execution sequence of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a necessary determining action during implementation, and do not mean any other limitation either.

"Simultaneously" in this application may be understood as being at a same time point, may be understood as being within a time period, or may be understood as being within a same periodicity.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

It may be understood that a same step or steps or technical feature that have a same function in embodiments of this application may be mutually referenced in different embodiments.

It may be understood that, in embodiments of this application, the first network element, and/or the AF network element, and/or the BSF network element, and/or the TSCTSF network element, and/or the PCF network element may perform some or all of the steps in embodiments of this application. These steps are merely examples. In embodiments of this application, other steps or variations of various steps may be further performed. In addition, the steps may be performed in a sequence different from a sequence presented in embodiments of this application, and not all the steps in embodiments of this application need to be performed.

First, the following solutions are provided in embodiments of this application.

### 1. Introduction/Discussion

A current 5GS does not support an AF request from the AF for a QoS requirement of a UE-to-UE connection (UNU connection). From a perspective of the 5GS, the UNU connection includes two parts: a UL PDU session that provides a connection from a source UE to a user plane function entity UPF, and a DL PDU session from the UPF to a user plane function entity of a target UE.

If information about a group is specific to a user connection between two UEs, the AF may initiate an AF request for each of UL UE-UE traffic and/or DL UE-UE traffic. A parameter in the request uses the information about the unmodified group except an end-to-end delay.
- The AF sets a 1/2 end-to-end delay as a requested 5GS delay for the UL UE-UE traffic and/or the DL UE-UE traffic separately.
- The AF subscribes to URLLC QoS monitoring or QoS notification control (QNC) for the UL UE-UE traffic and/or the DL UE-UE traffic separately.
- The AF adjusts the requested 5GS delay for the UL UE-UE traffic and/or the DL UE-UE traffic separately based on the end-to-end delay and a QoS notification control (QNC) or URLLC QoS monitoring report.

If the information about the group is used for the user connection between the two UEs, the AF may indicate that the information about the group is specific to UE-UE traffic. Then, a 5GC NF (for example, a TSCTSF) may set or later modify a QoS flow for the UL UE-UE traffic and/or the DL UE-UE traffic. A parameter in the request uses the information about the unmodified group except the end-to-end delay.
- The 5GC NF sets a value of the requested 5GS delay, a UE-DS-TT residence period, and the like separately for the UL UE-UE traffic and/or the DL UE-UE traffic based on the end-to-end delay, a UE location, a UPF location, a UPF residence period, or a transmission delay between UPFs.
- The 5GC NF subscribes to QoS notification control (QNC) or URLLC QoS monitoring separately for the UL UE-UE traffic and/or the DL UE-UE traffic.
- The 5GC NF adjusts the requested 5GS delay separately for the UL UE-UE traffic and/or the DL UE-UE traffic in consideration of a QoS notification control (QNC) or QoS monitoring report for URLLC. In addition, if the 5GC NF receives "PDB can no longer be guaranteed" for the UL UE-UE traffic and/or the DL UE-UE traffic and determines that the end-to-end delay cannot be met again through adjustment, the 5GC NF reports "PDB is no longer guaranteed for UE-UE traffic to the AF."
- In addition, the 5GC NF may use a sum of an average delay of a UL UE-UE service and an average delay of a DL UE-UE service as an average delay of a UE-UE service, and report the average delay to the AF. The 5GC NF may use a "GFBR can no longer be guaranteed" or "PER can no longer be guaranteed" report for the UL UE-UE traffic and/or the DL UE-UE traffic as a QNC notification for the UE-UE traffic, and report the notification to the AF.

An example in which the method provided in embodiments of this application is applied to an existing 5G communication system is used below for description.

FIG. 8 shows a communication method according to an embodiment of this application. The communication method may include the following steps.

S801: An AF network element sends a first request message to a first network element. Correspondingly, the first network element receives the first request message from the AF network element.

The AF network element may be the AF network element 402 in FIG. 5, and the first network element may be the first network element 401 in FIG. 5.

In a possible implementation, when there is a service requirement, an administrator configures an information element (information element, IE) in the first request message and triggers the AF network element to send the first request message to the first network element. Alternatively, when there is a service requirement, the AF network element executes a prestored program to configure an IE in the first request message and trigger the AF to send the first request message to the first network element.

The first request message may be used to request to allocate a resource to a service flow. For example, the first request message is used to allocate a resource meeting a QoS requirement to a service flow between target terminals, to ensure quality of end-to-end communication between the target terminals.

The service flow is any end-to-end service flow. The target terminals include an ingress terminal and an egress terminal of the service flow. The egress terminal of the service flow may include one or more terminals. This is not limited.

It may be understood that, if the egress terminal includes one terminal, the first request message is used to allocate a resource meeting the QoS requirement to a service flow between the ingress terminal and the egress terminal, to ensure quality of end-to-end communication between the ingress terminal and the egress terminal. If the egress terminal includes a plurality of terminals, the first request message is used to allocate a resource meeting the QoS requirement to a service flow between the ingress terminal and each of the plurality of egress terminals, to ensure quality of end-to-end communication between the ingress terminal and the egress terminals.

It may be understood that when the administrator configures the IE and when the AF network element configures the IE, the first request message may include different IEs. For details, refer to the following descriptions in Case 1 and Case 2.

Case 1: When there is a service requirement, the administrator configures the IE in the first request message, and triggers the AF network element to send the first request message to the first network element.

For Case 1, the first request message may include type information of a service flow, information about a target terminal group, and QoS information of the service flow. Optionally, the first request message further includes at least one of the following: flow information of the service flow or first event indication information. The following describes various types of information included in the first request message.

In this embodiment of this application, the type information of the service flow may indicate that the service flow is an end-to-end service flow. For example, the type information of the service flow includes 1 bit. If a value of the 1 bit is "0" or "1", the type information of the service flow indicates that the service flow is an end-to-end service flow. Further, the type information of the service flow may further indicate a scenario to which the service flow is applied as an end-to-end service flow. For an application scenario of the end-to-end service flow, refer to the descriptions in the foregoing explanations and descriptions of the technical terms.

In an example, the type information of the service flow includes 3 bits. The 1^{st} bit indicates that the service flow is an end-to-end service flow, and the last two bits indicate a scenario to which the service flow is applied as an end-to-end service flow. For example, if values of the last two bits are "00", the service flow is an end-to-end unicast service flow; if values of the last two bits are "01", the service flow is an end-to-end multicast/broadcast service flow; or if values of the last two bits are " 10", the service flow is an end-to-end general service flow.

It may be understood that the type information of the service flow may not indicate that the service flow is an end-to-end service flow, but directly indicate a scenario to which the service flow is applied as an end-to-end service flow, to reduce signaling overheads. For example, the type information of the service flow includes 2 bits. The 2 bits indicate a scenario to which the service flow is applied as an end-to-end service flow.

In this embodiment of this application, the information about the target terminal group indicates a plurality of target terminals. The information about the target terminal group includes at least one of an identity of an ingress terminal (Ingress UE ID), an identity of an egress terminal (Egress UE ID), a group identifier (Group ID), a DNN associated with the target terminals, or S-NSSAI associated with the target terminals.

It may be understood that the information about the target terminal group includes different content in different application scenarios of the service flow. For example, if the service flow is an end-to-end unicast service flow, the information about the target terminal group includes an identity of an ingress terminal and an identity of an egress terminal. Optionally, the information about the target terminal group further includes a DNN associated with the ingress terminal and/or S-NSSAI associated with the ingress terminal. If the service flow is an end-to-end multicast/broadcast service flow or the end-to-end general service flow, the information about the target terminal group includes a group identifier. Optionally, the information about the target terminal group further includes at least one of the following: an identity of an ingress terminal, a DNN associated with the group identifier, or S-NSSAI associated with the group identifier.

In this embodiment of this application, the QoS information of the service flow includes a latency requirement of the service flow. Optionally, the QoS information of the service flow further includes at least one of the following: priority information of a packet, a packet size, a maximum rate, a guaranteed rate, a packet error rate, periodicity information, clock domain information, a packet arrival time, or a survival period.

The latency requirement may indicate latency of the service flow. The priority information of the packet may indicate a priority of the packet in the service flow. The packet size may be a size of the packet in the service flow. The maximum rate may be a maximum rate at which the packet in the service flow is communicated. The guaranteed rate may be a minimum rate at which the packet in the service flow is communicated. The packet error rate may be an error rate of communicating the packet in the service flow. The periodicity information may indicate a transmission time interval between two adjacent packets in the service flow. The clock domain information may indicate a clock domain of the service flow. For example, whether the service flow is timed based on a 12-hour system or a 24-hour system. The packet arrival time may be a packet arrival time of the service flow, that is, a time at which a packet in the service flow arrives at the ingress terminal. The survival period may represent reliability of the service flow. For example, the survival period indicates a maximum quantity of packets that are continuously lost, or duration in which a packet needs to be received.

In this embodiment of this application, the flow information of the service flow includes an IP 5-tuple or an Ethernet header information address.

It may be understood that the flow information of the service flow includes different content in different application scenarios of the service flow. For example, if the service flow is an end-to-end unicast service flow or the end-to-end multicast/broadcast service flow, the flow information of the service flow may include a flow address of an ingress terminal and a flow address of at least one egress terminal. The flow address may be an IP address or an Ethernet header information address (for example, a media access control (media access control, MAC) address of the ingress terminal). This is not limited. It may be understood that, if the foregoing address is an Ethernet header information address, the flow information of the service flow further includes information about a VLAN tag (tag). If the service flow is an end-to-end general service flow, the flow information of the service flow includes a match all (match all) 5-tuple, the flow information of the service flow is set to null or zero, or the first request message does not include the flow information of the service flow.

In this application, a flow address of a terminal may be an address of the terminal in a service flow corresponding to the terminal. For example, the flow address of the ingress terminal is an address of the ingress terminal in the service flow, and the flow address of the egress terminal is an address of the egress terminal in the service flow. In Case 2, an address of a terminal is further introduced, and the address of the terminal and the flow address of the terminal have different meanings. The address of the terminal may be an address of the terminal in a communication network, for example, a 5G network. For a same terminal, a flow address of the terminal may be the same as or different from an address of the terminal. A unified description is provided herein, and details are not described below again.

In this embodiment of this application, the first event indication information indicates at least one of the following: monitoring for an average latency, QoS notification monitoring for a packet delay budget (packet delay budget, PDB), QoS notification monitoring for a guaranteed bit rate (guaranteed bit rate, GBR), or QoS notification monitoring for a packet error rate (packet error rate, PER). The QoS notification monitoring for the PDB, the QoS notification monitoring for the GBR, or the QoS notification monitoring for the PER may be based on a QoS notification control (QoS notification control, QNC) mechanism.

For example, the first event indication information may include at least one bit, each bit corresponds to one event, and a value of the bit may indicate whether to monitor the event.

Case 2: When there is a service requirement, the AF network element executes the prestored program to configure the IE in the first request message and trigger the AF to send the first request message to the first network element.

For Case 2, the first request message may include information about a target terminal group and QoS information of a service flow. Optionally, the first request message further includes at least one of the following: type information of the service flow, flow information of the service flow, or first event indication information. For specific descriptions of the foregoing information, refer to the corresponding descriptions in Case 1. Details are not described again.

It may be understood that, in the foregoing descriptions, the type information of the service flow, the information about the target terminal group, the QoS information of the service flow, the flow information of the service flow, and the first event indication information are sent to the first network element through one message, namely, the first request message. During specific application, the AF network element may alternatively send the type information of the service flow, the information about the target terminal group, the QoS information of the service flow, the flow information of the service flow, and the first event indication information to the first network element through a plurality of messages. This is not limited.

As described above, the first network element may be an NEF network element, a TSCTSF network element, a PCF network element, or a new network element. If the first network element is the NEF network element, the AF network element directly sends the first request message to the first network element. If the first network element is the TSCTSF network element, the AF network element may send the first request message to the first network element via an NEF network element. For example, the first network element sends the first request message to the NEF network element. After receiving the first request message, the NEF network element sends information in the first request message to the first network element through a Ntsctsf service request message, or the NEF network element directly forwards the first request message to the first network element. If the first network element is the PCF network element or the new network element, the AF network element may send the first request message to the first network element via an NEF network element and a TSCTSF network element.

It may be understood that after receiving the first request message from the AF network element, the first network element may determine corresponding information based on the first request message. The following provides detailed descriptions.

For example, if the first request message includes the type information of the service flow, the first network element may determine, based on the type information of the service flow, that the service flow is an end-to-end service flow. Further, the first network element may determine that the service flow is an end-to-end unicast service flow, an end-to-end multicast/broadcast service flow, or an end-to-end general service flow.

As described above, in Case 2, the first request message may not include the type information of the service flow. In this case, the first network element may determine, in at least the following three manners, whether the service flow is an end-to-end service flow.

Manner 1: The first request message includes the information about the target terminal group, the QoS information of the service flow, and the flow information of the service flow. After receiving the first request message, the first network element sends a message including identities of target terminals to a BSF network element or a PCF network element, and receives addresses of the target terminals from the BSF network element or the PCF network element. The address of the target terminal is an address of the target terminal in a communication network, for example, a 5G network. Subsequently, the first network element may compare the addresses of the target terminals with flow addresses of the target terminals in the flow information of the service flow, to determine whether the service flow is an end-to-end service flow. For example, if the flow address of the ingress terminal is the same as the address of the ingress terminal, and the flow address of the egress terminal is the same as the address of the egress terminal, it indicates that both the ingress terminal and the egress terminal are terminal devices. In other words, the service flow is an end-to-end service flow. If the flow address of the ingress terminal is different from the address of the ingress terminal, and/or the flow address of the egress terminal is different from the address of the egress terminal, it indicates that at least one of the ingress terminal and the egress terminal may not be a terminal device, and the service flow may not be an end-to-end service flow.

Manner 2: The first request message includes the information about the target terminal group, the QoS information of the service flow, and the flow information of the service flow. A network element (for example, the AF network element, the NFE network element, or the TSCTSF network element) that sends or forwards the first request message may determine, in Manner 1, whether the service flow is an end-to-end service flow. The network element sends or forwards the first request message to the first network element only when determining that the service flow is an end-to-end service flow. Therefore, in Manner 2, provided that the first network element receives the first request message, the first network element determines that the service flow is an end-to-end service flow.

For example, the AF network element sends the first request message to the first network element via the NEF network element. After receiving the first request message, the NEF network element determines, in Manner 1, whether the service flow is an end-to-end service flow. If the service flow is an end-to-end service flow, the NEF network element sends the first request message to the first network element; or if the service flow is not an end-to-end service flow, the NEF network element does not send the first request message to the first network element. It may be understood that, in this case, the first network element is a new network element.

Manner 3: A network element that sends or forwards the first request message may determine, in Manner 1, whether the service flow is an end-to-end service flow, and send the type information of the service flow to the first network element, to indicate, to the first network element, that the service flow is an end-to-end service flow.

For example, if the first request message includes the information about the target terminal group, the first network element may determine target terminals based on the information about the target terminal group. For example, if the service flow is an end-to-end unicast service flow, the first network element determines an ingress terminal based on an identity of the ingress terminal, and determines an egress terminal based on an identity of the egress terminal. If the service flow is an end-to-end multicast/broadcast service flow or the end-to-end general service flow, the first network element determines an ingress terminal based on an identity of the ingress terminal, and determines egress terminals based on a group identifier.

A process in which the first network element determines the egress terminals based on the group identifier is as follows: The first network element sends the group identifier to a UDR network element or a UDM network element. After receiving the group identifier, the UDR network element or the UDM network element may query, based on the group identifier, for member information (for example, a member list) of a group identified by the group identifier, and sends the member information to the first network element. If the information about the target terminal group does not include a DNN and S-NSSAI that are associated with the group identifier, the UDR network element or the UDM network element may further query, based on the group identifier, for the DNN and the S-NSSAI that are associated with the group identifier, and send, to the first network element, the DNN and the S-NSSAI that are associated with the group identifier.

For example, if the first request message includes the QoS information of the service flow, the first network element may determine a QoS requirement of the service flow based on the QoS information of the service flow. If the first request message includes the flow information of the service flow, the first network element may determine a source address and a destination address of the service flow based on the flow information of the service flow. If the first request message includes the first event indication information, the first network element may determine to-be-monitored performance based on the first event indication information. For example, if the first event indication information indicates monitoring for average latency, the first network element determines that the average latency of the service flow needs to be monitored; or if the first event indication information indicates QoS notification monitoring for a PDB, the first network element determines that the PDB of the service flow needs to be monitored.

As described above, the end-to-end service flow may be used in a unicast communication scenario, a multicast/broadcast communication scenario, or a general flow scenario. The user plane architecture of the 5G LAN service shown in FIG. 2A is used as an example below to describe specific content included in each piece of information in the first request message when the end-to-end service flow is applied to the unicast communication scenario, the multicast/broadcast communication scenario, or the general flow scenario.

Scenario 1: The service flow is an end-to-end unicast service flow.

In an example 1, the ingress terminal is the terminal 201, and the egress terminal is the terminal 202. The type information of the service flow indicates that the service flow is an end-to-end service flow. The information about the target terminal group includes an identity of the terminal 201, an identity of the terminal 202, a DNN associated with the terminal 201 and the terminal 202, and S-NSSAI associated with the terminal 201 and the terminal 202. The QoS information of the service flow indicates that latency of the service flow is 15 milliseconds (ms), and a packet arrival time of the service flow is 14 o'clock. The flow information of the service flow includes IP 5-tuple information (for example, an IP address of the terminal 201 in the service flow, a port number of the terminal 201, an IP address of the terminal 202 in the service flow, and a port number of the terminal 202). The first event indication information indicates monitoring for average latency.

It may be understood that, for the example 1, after receiving the first request message, the first network element may determine, based on the type information of the service flow, that the service flow is an end-to-end service flow. The first network element may determine, based on the identity of the terminal 201, that the ingress terminal is the terminal 201, and determine, based on the identity of the terminal 202, that the egress terminal is the terminal 202. The first network element may determine, based on the QoS information of the service flow, that the latency of the service flow is 15 ms, and a packet arrives at the terminal 201 at 14 o'clock. The first network element determines, based on the first event indication information, that the average latency of the service flow needs to be monitored.

In an example 2, the ingress terminal is the terminal 201, and the egress terminal is the terminal 203. The type information of the service flow indicates that the service flow is an end-to-end service flow. The information about the target terminal group includes an identity of the terminal 201, an identity of the terminal 203, a DNN associated with the terminal 201 and the terminal 203, and S-NSSAI associated with the terminal 201 and the terminal 203. The QoS information of the service flow indicates that latency of the service flow is 20 ms, a packet arrival time of the service flow is 14 o'clock, and a guaranteed rate of the service flow is 100 Mbit/s. The flow information of the service flow includes Ethernet flow information (for example, a MAC address of the terminal 201 in the service flow, a MAC address of the terminal 203 in the service flow, and the information about the VLAN tag). The first event indication information indicates monitoring for average latency and QoS notification monitoring for a PDB.

It may be understood that, for the example 2, after receiving the first request message, the first network element may determine, based on the type information of the service flow, that the service flow is an end-to-end service flow. The first network element may determine, based on the identity of the terminal 201, that the ingress terminal is the terminal 201, and determine, based on the identity of the terminal 203, that the egress terminal is the terminal 203. The first network element may determine, based on the QoS information of the service flow, that the latency of the service flow is 20 ms, a packet arrives at the terminal 201 at 14 o'clock, and the guaranteed rate of the service flow is 100 Mbit/s. The first network element determines, based on the first event indication information, that the average latency of the service flow and the PDB of the service flow need to be monitored.

Scenario 2: The service flow is an end-to-end multicast service flow.

In an example 3, members in the 5G LAN group include the terminal 201 to the terminal 205. Any member in the 5G LAN group may join or quit a multicast group A, a multicast address of the multicast group A is Multicast Address A, and the terminal 201 is a multicast source. The type information of the service flow indicates that the service flow is an end-to-end service flow. The information about the target terminal group includes a group identifier of the 5G LAN group, a DNN associated with the group identifier, and S-NSSAI associated with the group identifier. The QoS information of the service flow indicates that latency of the service flow is 20 ms, and a guaranteed rate of the service flow is 100 Mbit/s. The flow information of the service flow includes Multicast Address A. The first event indication information indicates monitoring for average latency and QoS notification monitoring for a PDB. If the AF network element intends to limit a packet to be a packet of the multicast group A that is sent by the terminal 201, the information about the target terminal group further includes an identity of the terminal 201, and the flow information of the service flow further includes an IP address of the terminal 201 in the service flow.

It may be understood that, for the example 3, after receiving the first request message, the first network element may determine, based on the type information of the service flow, that the service flow is an end-to-end service flow. The first network element may obtain, through query in the UDM network element based on the group identifier of the 5G LAN group, that group members are the terminal 201 to the terminal 205, and determine, based on the identity of the terminal 201, that the multicast source is the terminal 201. The first network element may determine, based on the QoS information of the service flow, that the latency of the service flow is 20 ms and the guaranteed rate of the service flow is 100 Mbit/s. The first network element determines, based on the first event indication information, that average latency of the service flow and a PDB of the service flow need to be monitored.

Scenario 3: The service flow is an end-to-end general service flow.

In an example 4, members in the 5G LAN group include the terminal 201 to the terminal 205. The type information of the service flow indicates that the service flow is an end-to-end service flow. The information about the target terminal group includes a group identifier of the 5G LAN group, a DNN associated with the group identifier, and S-NSSAI associated with the group identifier. The QoS information of the service flow indicates that latency of the service flow is 20 ms, and a packet arrival time of the service flow is 14 o'clock. The flow information of the service flow includes a match all IP 5-tuple. The first event indication information indicates monitoring for average latency and QoS notification monitoring for a PDB.

It may be understood that, for the example 4, after receiving the first request message, the first network element may determine, based on the type information of the service flow, that the service flow is an end-to-end service flow. The first network element may obtain, through query in the UDM network element based on the group identifier of the 5G LAN group, that group members are the terminal 201 to the terminal 205. The first network element may determine, based on the QoS information of the service flow, that the latency of the service flow is 20 ms and the packet arrival time of the service flow is 14 o'clock. The first network element may determine, based on the flow information of the service flow, that the service flow is a general service flow. The first network element determines, based on the first event indication information, that average latency of the service flow and a PDB of the service flow need to be monitored.

S802: The first network element obtains QoS decomposition information based on the information about the target terminal group.

In a possible implementation, when the type information indicates that the service flow is an end-to-end service flow, the first network element obtains the QoS decomposition information based on the information about the target terminal group.

The QoS decomposition information includes access information of the ingress terminal and access information of the egress terminal. Optionally, the QoS decomposition information further includes a packet transmission period between an anchor UPF network element corresponding to a session of the ingress terminal and an anchor UPF network element corresponding to a session of the egress terminal. The session of the ingress terminal may be a PDU session of the ingress terminal, and the session of the egress terminal may be a PDU session of the egress terminal.

FIG. 2C is used as an example. If the ingress terminal is the terminal 201, and the egress terminal is the terminal 203, the packet transmission period between the anchor UPF network element corresponding to the session of the ingress terminal and the anchor UPF network element corresponding to the session of the egress terminal is a packet transmission period between the UPF network element 210 and the UPF network element 209, in other words, a period of the packet from being transmitted out of the UPF network element 210 to being transmitted into the UPF network element 209.

In a possible design, the access information of the ingress terminal includes at least one of the following: location information of the ingress terminal, a residence period of the ingress terminal, a residence period of the anchor UPF network element corresponding to the session of the ingress terminal, or an identifier of the anchor UPF network element corresponding to the session of the ingress terminal.

The location information of the ingress terminal may indicate a location of the ingress terminal. The residence period of the ingress terminal is a transmission period of the packet from being transmitted into the ingress terminal to being transmitted out of the ingress terminal. The residence period of the anchor UPF network element corresponding to the session of the ingress terminal is a transmission period of the packet from being transmitted into the UPF network element to being transmitted out of the UPF network element. The UPF network element is a UPF network element accessed by the ingress terminal by using a PDU session.

In a possible design, the access information of the egress terminal includes at least one of the following: location information of the egress terminal, a residence period of the egress terminal, a residence period of the anchor UPF network element corresponding to the session of the egress terminal, or an identifier of the anchor UPF network element corresponding to the session of the egress terminal.

The location information of the egress terminal may indicate a location of the egress terminal. The residence period of the egress terminal is a transmission period of the packet from being transmitted into the egress terminal to being transmitted out of the egress terminal. The residence period of the anchor UPF network element corresponding to the session of the egress terminal is a transmission period of the packet from being transmitted into the UPF network element to being transmitted out of the UPF network element. The UPF network element is a UPF network element accessed by the egress terminal by using a PDU session.

The following describes a process in which the first network element obtains the access information of the ingress terminal. It may be understood that a process in which the first network element obtains the access information of the egress terminal is similar to the process in which the first network element obtains the access information of the ingress terminal. Refer to the descriptions of obtaining the access information of the ingress terminal by the first network element, and details are not described.
(I) The first network element obtains the location information of the ingress terminal and/or the residence period of the ingress terminal.

In a possible implementation, the first network element sends request information to the BSF network element. The request information includes the identity of the ingress terminal, a DNN associated with the ingress terminal, and S-NSSAI associated with the ingress terminal. After the BSF network element receives the request information, and the ingress terminal establishes the PDU session (where if the ingress terminal has not established the PDU session when the BSF network element receives the request information, the BSF network element waits for the ingress terminal to establish the PDU session), the BSF network element obtains first information, and sends the first information to the first network element, so that the first network element obtains the location information of the ingress terminal and/or the residence period of the ingress terminal based on the first information.

In a possible design, the first information includes an identifier of the PCF network element or an address of the PCF network element (PCF ID/address). After receiving the first information, the first network element sends second information to the PCF network element. The second information includes the identity of the ingress terminal. After receiving the second information, the PCF network element sends the location information of the ingress terminal and/or the residence period of the ingress terminal to the first network element.

In another possible design, the first information includes an identifier of the TSCTSF network element or an address of the TSCTSF network element (TSCTSF ID/address). After receiving the first information, the first network element sends second information to the TSCTSF network element. The second information includes the identity of the ingress terminal. After receiving the second information, the TSCTSF network element sends the location information of the ingress terminal and/or the residence period of the ingress terminal to the first network element.

Optionally, the first information further includes the address of the ingress terminal (namely, the address of the terminal in the communication network, for example, the 5G network), so that the first network element determines, in Manner 1, that the service flow is an end-to-end service flow. In this case, the second information may further include the address of the ingress terminal.

(II) The first network element obtains the identifier of the anchor UPF network element corresponding to the session of the ingress terminal.

In a possible implementation, the first network element obtains the identifier of the UPF network element from the BSF network element. For example, the identifier of the UPF network element is included in the first information in (I).

In another possible implementation, the first network element obtains the identifier of the UPF network element from the PCF network element or the TSCTSF network element. For example, the identifier of the UPF network element is included in the second information in (I).

(III) The first network element obtains the residence period of the anchor UPF network element corresponding to the session of the ingress terminal.

In a possible implementation, the residence period of the UPF network element is preset in the first network element based on experience, and the first network element locally obtains the residence period.

In another possible implementation, after obtaining the identifier of the UPF network element in a manner in (II), the first network element sends third information to the UPF network element. The third information includes the identifier of the UPF network element. After receiving the third information, the UPF network element sends fourth information to the first network element. The fourth information includes the residence period of the UPF network element.

In this embodiment of this application, the ingress terminal may be connected to the egress terminal via one UPF network element or via a plurality of UPF network elements. In other words, the anchor UPF network element corresponding to the session of the ingress terminal may be the same as or different from the anchor UPF network element corresponding to the session of the egress terminal. The anchor UPF network element corresponding to the session of the ingress terminal may also be described as a UPF network element accessed by the ingress terminal, and the anchor UPF network element corresponding to the session of the egress terminal may also be described as a UPF network element accessed by the egress terminal.

In a possible implementation, if the UPF network element accessed by the ingress terminal is different from the UPF network element accessed by the egress terminal, the first network element obtains a packet transmission period between the UPF network elements. The packet transmission period is a period of time for transmission of the packet between the anchor UPF network element corresponding to the session of the ingress terminal and the anchor UPF network element corresponding to the session of the egress terminal.

For example, the packet transmission period between the UPF network elements is preset in the first network element based on experience, and the first network element locally obtains the packet transmission period. Alternatively, the first network element obtains the packet transmission period between the UPF network elements from the PCF network element or the TSCTSF network element. For example, the packet transmission period between the UPF network elements is included in the second information in (I).

S803: The first network element decomposes the QoS information of the service flow based on the QoS decomposition information, to obtain uplink QoS information and downlink QoS information.

It may be understood that a quantity of pieces of downlink QoS information is not limited in this embodiment of this application. In other words, the first network element decomposes QoS of the service flow based on the QoS decomposition information, to obtain the uplink QoS information and at least one piece of downlink QoS information.

For example, if the service flow is an end-to-end unicast service flow, the first network element may obtain one piece of uplink QoS information and one piece of downlink QoS information. If the service flow is an end-to-end multicast service flow, the service flow corresponds to a plurality of downlink directions, and the first network element may obtain one piece of uplink QoS information and QoS information of the service flow in each of the plurality of downlink directions (namely, a plurality of pieces of downlink QoS information). If the service flow is an end-to-end general service flow, the service flow corresponds to at least one downlink direction, and the first network element may obtain one piece of uplink QoS information of the service flow and QoS information of the service flow in each of the at least one downlink direction (namely, at least one piece of downlink QoS information). In other words, that the first network element decomposes the QoS information of the service flow (referred to as QoS decomposition performed by the first network element) may mean that the first network element configures the uplink QoS information of the service flow for the session (for example, the PDU session) corresponding to the ingress terminal, and configures the downlink QoS information of the service flow for the session (for example, the PDU session) corresponding to each of the at least one egress terminal, so that the service flow meets the QoS information of the service flow in S801. For example, for the example 1, the first network element may allocate corresponding QoS information to each of the PDU session of the terminal 201 and the PDU session of the terminal 202, so that the latency of the service flow is less than or equal to 15 ms, and the packet arrival time of the service flow is 14 o'clock.

It may be understood that the first network element may decompose the QoS information of the service flow based on the access information of the ingress terminal and the access information of the egress terminal, to obtain the uplink QoS information and the downlink QoS information. Alternatively, the first network element may decompose the QoS information of the service flow based on the access information of the ingress terminal, the access information of the egress terminal, and the packet transmission period between the UPF network elements, to obtain the uplink QoS information and the downlink QoS information. In the foregoing process, when performing QoS decomposition, the first network element considers information that can represent a topology condition of a network to which the ingress terminal and the egress terminal belong, for example, the access information of the ingress terminal and the access information of the egress terminal, or the access information of the ingress terminal, the access information of the egress terminal, and the packet transmission period between the UPF network elements. Therefore, the QoS information allocated by the first network element to the PDU session can be more appropriate, so that transmission of the service flow can more easily meet the QoS requirement.

That the QoS information of the service flow includes a latency requirement of the service flow has been described in S801. Optionally, the QoS information of the service flow further includes at least one of the following: the priority information of the packet, the packet size, the maximum rate, the guaranteed rate, the packet error rate, the periodicity information, the clock domain information, the packet arrival time, or the survival period. In this case, the uplink QoS information and the downlink QoS information that are obtained by the first network element may include at least the foregoing information. For example, if QoS of the service flow includes the latency requirement of the service flow, the uplink QoS information may include latency of the service flow in an uplink direction, and the downlink QoS information may include latency of the service flow in a downlink direction. For another example, if QoS of the service flow includes the latency requirement of the service flow and the packet arrival time, the uplink QoS information may include latency of the service flow in an uplink direction and a packet arrival time of the service flow in the uplink direction, and the downlink QoS information may include latency of the service flow in a downlink direction and a packet arrival time of the service flow in the downlink direction.

The following describes a specific process in which the first network element decomposes the QoS information of the service flow based on the QoS decomposition information to obtain the uplink QoS information and the downlink QoS information.

In a possible implementation, the first network element decomposes the QoS information of the service flow based on the access information of the ingress terminal and the access information of the egress terminal, to obtain the uplink QoS information and the downlink QoS information.

As described above, the access information of the ingress terminal includes content in a plurality of forms, and the access information of the egress terminal also includes content in a plurality of forms. In different forms, the uplink QoS information and the downlink QoS information that are obtained by the first network element may be different. In this embodiment of this application, the following several cases are used as examples for description.

Case 0: The access information of the ingress terminal includes the location information of the ingress terminal and the identifier of the anchor UPF network element corresponding to the session of the ingress terminal (ingress UPF network element for short). The access information of the egress terminal includes the location information of the egress terminal and the identifier of the anchor UPF network element corresponding to the session of the egress terminal (egress UPF network element for short).

In a possible implementation, the first network element may determine a distance between the ingress terminal and the ingress UPF network element based on the location of the ingress terminal and the identifier of the ingress UPF network element, and determine a distance between the egress terminal and the egress UPF network element based on the location of the egress terminal and the identifier of the egress UPF network element, to determine the uplink QoS information and the downlink QoS information.

In a possible design, a sum of the latency of the service flow in the uplink direction and the latency of the service flow in the downlink direction is less than or equal to the latency requirement of the service flow.

Case 1: The access information of the ingress terminal includes the residence period of the ingress UPF network element, and the access information of the egress terminal includes the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, and the residence period of the ingress UPF network element is less than or equal to the latency requirement of the service flow, or a sum of the latency of the service flow in the uplink direction, the latency of the service flow in the downlink direction, and the residence period of the egress UPF network element is less than or equal to the latency requirement of the service flow.

Case 2: The access information of the ingress terminal includes the residence period of the ingress terminal and the residence period of the ingress UPF network element, and the access information of the egress terminal includes the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, the residence period of the ingress terminal, and the residence period of the ingress UPF network element is less than or equal to the latency requirement of the service flow, or a sum of the latency of the service flow in the uplink direction, the latency of the service flow in the downlink direction, the residence period of the ingress terminal, and the residence period of the egress UPF network element is less than or equal to the latency requirement of the service flow.

Case 3: The access information of the ingress terminal includes the residence period of the ingress UPF network element, and the access information of the egress terminal includes the residence period of the egress terminal and the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, the residence period of the egress terminal, and the residence period of the egress UPF network element is less than or equal to the latency requirement of the service flow, or a sum of the latency of the service flow in the uplink direction, the latency of the service flow in the downlink direction, the residence period of the egress terminal, and the residence period of the ingress UPF network element is less than or equal to the latency requirement of the service flow.

Case 4: The access information of the ingress terminal includes the residence period of the ingress terminal and the residence period of the ingress UPF network element, and the access information of the egress terminal includes the residence period of the egress terminal and the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, the residence period of the ingress terminal, the residence period of the egress terminal, and the residence period of the ingress UPF network element is less than or equal to the latency requirement of the service flow, or a sum of the latency of the service flow in the uplink direction, the latency of the service flow in the downlink direction, the residence period of the ingress terminal, the residence period of the egress terminal, and the residence period of the egress UPF network element is less than or equal to the latency requirement of the service flow.

In a possible implementation, in Case 0 to Case 4, the ingress UPF network element and the egress UPF network element are a same network element. In this case, the residence period of the ingress UPF network element is the same as the residence period of the egress UPF network element.

It may be understood that if the ingress terminal and the egress terminal access different UPF network elements, in other words, the ingress UPF network element and the egress UPF network element are not a same network element, when performing the QoS decomposition, the first network element may further consider the packet transmission period between the UPF network elements. That is, the first network element decomposes the QoS information of the service flow based on the access information of the ingress terminal, the access information of the egress terminal, and the packet transmission period between the UPF network elements, to obtain the uplink QoS information and the downlink QoS information. Specifically, there may be the following several cases.

Case 5: The access information of the ingress terminal includes the location information of the ingress terminal and the identifier of the ingress UPF network element, and the access information of the egress terminal includes the location information of the egress terminal and the identifier of the egress UPF network element.

In a possible design, a sum of the latency of the service flow in the uplink direction, the latency of the service flow in the downlink direction, and the packet transmission period between the UPF network elements is less than or equal to the latency requirement of the service flow.

Case 6: The access information of the ingress terminal includes the residence period of the ingress UPF network element, and the access information of the egress terminal includes the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, the residence period of the ingress UPF network element, the residence period of the egress UPF network element, and the packet transmission period between the UPF network elements is less than or equal to the latency requirement of the service flow.

Case 7: The access information of the ingress terminal includes the residence period of the ingress terminal and the residence period of the ingress UPF network element, and the access information of the egress terminal includes the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, the residence period of the ingress UPF network element, the residence period of the egress UPF network element, the residence period of the ingress terminal, and the packet transmission period between the UPF network elements is less than or equal to the latency requirement of the service flow.

Case 8: The access information of the ingress terminal includes the residence period of the ingress UPF network element, and the access information of the egress terminal includes the residence period of the egress terminal and the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, the residence period of the ingress UPF network element, the residence period of the egress UPF network element, the residence period of the egress terminal, and the packet transmission period between the UPF network elements is less than or equal to the latency requirement of the service flow.

Case 9: The access information of the ingress terminal includes the residence period of the ingress terminal and the residence period of the ingress UPF network element, and the access information of the egress terminal includes the residence period of the egress terminal and the residence period of the egress UPF network element.

Optionally, the access information of the ingress terminal further includes the location information of the ingress terminal and the identifier of the ingress UPF network element, and the access information of the egress terminal further includes the location information of the egress terminal and the identifier of the egress UPF network element.

In a possible design, a sum of the latency of the service flow in the uplink direction, the latency of the service flow in the downlink direction, the residence period of the ingress UPF network element, the residence period of the egress UPF network element, the residence period of the ingress terminal, the residence period of the egress terminal, and the packet transmission period between the UPF network elements is less than or equal to the latency requirement of the service flow.

It may be understood that, if the QoS information of the service flow includes the packet arrival time, the first network element may further determine the packet arrival time of the service flow in the uplink direction and the packet arrival time of the service flow in the downlink direction. For example, the packet arrival time of the service flow in the uplink direction is the same as the packet arrival time of the service flow, and the packet arrival time of the service flow in the downlink direction is determined based on a sum of the packet arrival time of the service flow in the uplink direction and the latency of the service flow in the uplink direction. Alternatively, the packet arrival time of the service flow in the uplink direction is the same as the packet arrival time of the service flow, and the packet arrival time of the service flow in the downlink direction is determined based on a sum of the packet arrival time of the service flow in the uplink direction, the latency of the service flow in the uplink direction, and the packet transmission period between the UPF network elements. Specifically, there may be the following cases.

Case 10: If the ingress terminal and the egress terminal access a same UPF network element, the packet arrival time of the service flow in the downlink direction is a sum of the packet arrival time of the service flow in the uplink direction and the latency of the service flow in the uplink direction.

The packet arrival time of the service flow in the uplink direction is the packet arrival time in the QoS information of the service flow.

Case 11: If the ingress terminal and the egress terminal access a same UPF network element, the packet arrival time of the service flow in the downlink direction is a sum of the packet arrival time of the service flow in the uplink direction, the latency of the service flow in the uplink direction, and the residence period of the ingress terminal.

The packet arrival time of the service flow in the uplink direction is the packet arrival time in the QoS information of the service flow.

Case 12: If the ingress terminal and the egress terminal access a same UPF network element, the packet arrival time of the service flow in the downlink direction is a sum of the packet arrival time of the service flow in the uplink direction, the latency of the service flow in the uplink direction, and residence period of the UPF network element.

The packet arrival time of the service flow in the uplink direction is the packet arrival time in the QoS information of the service flow. The residence period of the UPF network element is the residence period of the ingress UPF network element, and is also the residence period of the egress UPF network element.

Case 13: If the ingress terminal and the egress terminal access a same UPF network element, the packet arrival time of the service flow in the downlink direction is a sum of the packet arrival time of the service flow in the uplink direction, the latency of the service flow in the uplink direction, the residence period of the ingress terminal, and residence period of the UPF network element.

The packet arrival time of the service flow in the uplink direction is the packet arrival time in the QoS information of the service flow. The residence period of the UPF network element is the residence period of the ingress UPF network element, and is also the residence period of the egress UPF network element.

Case 14: If the ingress terminal and the egress terminal access different UPF network elements, the packet arrival time of the service flow in the downlink direction is a sum of the packet arrival time of the service flow in the uplink direction, the latency of the service flow in the uplink direction, and packet transmission period between the UPF network elements.

Case 15: If the ingress terminal and the egress terminal access different UPF network elements, the packet arrival time of the service flow in the downlink direction is a sum of the packet arrival time of the service flow in the uplink direction, the latency of the service flow in the uplink direction, the residence period of the ingress terminal, and packet transmission period between the UPF network elements.

Case 16: If the ingress terminal and the egress terminal access different UPF network elements, the packet arrival time of the service flow in the downlink direction is a sum of the packet arrival time of the service flow in the uplink direction, the latency of the service flow in the uplink direction, the residence period of the ingress UPF network element, and packet transmission period between the UPF network elements.

Case 17: If the ingress terminal and the egress terminal access different UPF network elements, the packet arrival time of the service flow in the downlink direction is a sum of the packet arrival time of the service flow in the uplink direction, the latency of the service flow in the uplink direction, the residence period of the egress UPF network element, and packet transmission period between the UPF network elements.

Case 18: If the ingress terminal and the egress terminal access different UPF network elements, the packet arrival time of the service flow in the downlink direction is a sum of the packet arrival time of the service flow in the uplink direction, the latency of the service flow in the uplink direction, the residence period of the ingress terminal, the residence period of the ingress UPF network element, and packet transmission period between the UPF network elements.

Case 19: If the ingress terminal and the egress terminal access different UPF network elements, the packet arrival time of the service flow in the downlink direction is a sum of the packet arrival time of the service flow in the uplink direction, the latency of the service flow in the uplink direction, the residence period of the ingress UPF network element, the residence period of the egress UPF network element, and packet transmission period between the UPF network elements.

Case 20: If the ingress terminal and the egress terminal access different UPF network elements, the packet arrival time of the service flow in the downlink direction is a sum of the packet arrival time of the service flow in the uplink direction, the latency of the service flow in the uplink direction, the residence period of the ingress terminal, the residence period of the ingress UPF network element, the residence period of the egress UPF network element, and packet transmission period between the UPF network elements.

It may be understood that, during specific application, there may be other cases, which are not listed one by one herein.

Optionally, for a parameter other than the latency and the packet arrival time, both a parameter of the service flow in the uplink direction and a parameter in the downlink direction may be set to a value of a related parameter in the QoS information of the service flow. The guaranteed rate is used as an example. A guaranteed rate of the service flow in the uplink direction and a guaranteed rate of the service flow in the downlink direction may be configured as the guaranteed rate in the QoS information of the service flow.

The following describes, by using Case 4, Case 9, Case 13, and Case 20 as examples and with reference to the foregoing example 1 to example 4, a process in which the first network element performs the QoS decomposition.

In an example 5, with reference to the example 1, after S802, the first network element obtains the access information of the terminal 201 and the access information of the terminal 202. If the access information of the terminal 201 and the access information of the terminal 202 are shown in Table 1, and the first network element determines, based on a location 1 and an identifier 1, that a distance from the terminal 201 to the UPF network element 210 is 800 kilometers, and determines, based on a location 2 and an identifier 1, that a distance from the terminal 202 to the UPF network element 210 is 1000 kilometers, the first network element determines that the latency of the service flow in the uplink direction is less than the latency of the service flow in the downlink direction. Subsequently, the first network element first determines that the latency of the service flow in the uplink direction is 5 ms, then determines, based on Case 4, that the latency of the service flow in the downlink direction is: latency (15 ms) of the service flow - latency (5 ms) of the service flow in the uplink direction - residence period (1 ms) of the terminal 201 - residence period (1 ms) of the terminal 202 - residence period (1 ms) of the UPF network element 210 = 7 ms, and determines, based on Case 13, that the packet arrival time of the service flow in the downlink direction is: packet arrival time (14 o'clock) of the service flow in the uplink direction + latency (5 ms) of the service flow in the uplink direction + residence period (1 ms) of the terminal 201 + residence period (2 ms) of the UPF network element 210 = 8 ms past 14 o'clock.

**Table 1**

| | |
|---|---|
| Access information of the terminal 201 | Access information of the terminal 202 |
| Residence period of the UPF network element 210: 1 ms | Residence period of the UPF network element 210: 1 ms |
| Location information of the terminal 201: Location 1 | Location information of the terminal 202: Location 2 |
| Residence period of the terminal 201: 1 ms | Residence period of the terminal 202: 1 ms |
| Identifier of the UPF network element 210: Identifier 1 | Identifier of the UPF network element 210: Identifier 1 |

In an example 6, with reference to the example 2, after S802, the first network element obtains the access information of the terminal 201 and the access information of the terminal 203. The first network element further obtains a packet transmission period (2 ms) between the UPF network element 210 and the UPF network element 209. If the access information of the terminal 201 and the access information of the terminal 203 are shown in Table 2, and the first network element determines, based on a location 1 and an identifier 1, that a distance from the terminal 201 to the UPF network element 210 is 800 kilometers, and determines, based on a location 3 and an identifier 1, that a distance from the terminal 203 to the UPF network element 210 is 400 kilometers, the first network element determines that the latency of the service flow in the uplink direction is greater than the latency of the service flow in the downlink direction. Subsequently, the first network element first determines that the latency of the service flow in the uplink direction is 9 ms, then determines, based on Case 9, that the latency of the service flow in the downlink direction is: latency (20 ms) of the service flow - latency (9 ms) of the service flow in the uplink direction - residence period (1 ms) of the UPF network element 210 - residence period (1 ms) of the UPF network element 209 - residence period (1 ms) of the terminal 201 - residence period (1 ms) of the terminal 203 - packet transmission period (2 ms) between the UPF network element 210 and the UPF network element 209 = 5 ms, and determines, based on Case 20, that the packet arrival time of the service flow in the downlink direction is: packet arrival time (14 o'clock) of the service flow in the uplink direction + latency (9 ms) of the service flow in the uplink direction + residence period (1 ms) of the terminal 201 + residence period (1 ms) of the UPF network element 210 + residence period (1 ms) of the UPF network element 209 + packet transmission period (2 ms) between the UPF network element 210 and the UPF network element 209 = 14 ms past 14 o'clock. The guaranteed rate of the service flow in the uplink direction and the guaranteed rate in the downlink direction are both 100 Mbit/s.

**Table 2**

| | |
|---|---|
| Access information of the terminal 201 | Access information of the terminal 203 |
| Residence period of the UPF network element 210: 1 ms | Residence period of the UPF network element 209: 1 ms |
| Location information of the terminal 201: Location 1 | Location information of the terminal 203: Location 3 |
| Residence period of the terminal 201: 1 ms | Residence period of the terminal 203: 1 ms |
| Identifier of the UPF network element 210: Identifier 1 | Identifier of the UPF network element 209: Identifier 2 |

In an example 7, with reference to the example 3, if the members of the multicast group A include the terminal 201 to the terminal 203, after S802, the first network element obtains the access information of the terminal 201, the access information of the terminal 202, and the access information of the terminal 203. The first network element further obtains a packet transmission period (2 ms) between the UPF network element 210 and the UPF network element 209. If the access information of the terminal 201, the PDU session of the terminal 202, and the access information of the terminal 203 are shown in Table 3, the first network element first determines that the latency of the service flow in the uplink direction is 8 ms, then determines, based on Case 4, that the latency of the service flow in the downlink direction is: latency (20 ms) of the service flow - latency (8 ms) of the service flow in the uplink direction - residence period (1 ms) of the terminal 201 - residence period (1 ms) of the terminal 202 - residence period (1 ms) of the UPF network element 210 = 9 ms, and determines, based on Case 9, that the latency of the service flow in the downlink direction is: latency (20 ms) of the service flow - latency (8 ms) of the service flow in the uplink direction - residence period (1 ms) of the UPF network element 210 - residence period (1 ms) of the UPF network element 209 - residence period (1 ms) of the terminal 201 - residence period (1 ms) of the terminal 203 - packet transmission period (2 ms) between the UPF network element 210 and the UPF network element 209 = 6 ms. The guaranteed rate of the service flow in the uplink direction and guaranteed rates in two downlink directions (downlink direction corresponding to the terminal 202 and downlink direction corresponding to the terminal 203) are all 100 Mbit/s.

**Table 3**

| | | |
|---|---|---|
| Access information of the terminal 201 | Access information of the terminal 202 | Access information of the terminal 203 |
| Residence period of the UPF network element 210: 1 ms | Residence period of the UPF network element 210: 1 ms | Residence period of the UPF network element 209: 1 ms |
| Location information of the terminal 201: Location 1 | Location information of the terminal 202: Location 2 | Location information of the terminal 203: Location 3 |
| Residence period of the terminal 201: 1 ms | Residence period of the terminal 202: 1 ms | Residence period of the terminal 203: 1 ms |
| Identifier of the UPF network element 210: Identifier 1 | Identifier of the UPF network element 210: Identifier 1 | Identifier of the UPF network element 209: Identifier 2 |

In an example 8, with reference to the example 4, if the ingress terminal of the service flow is the terminal 202, and the egress terminal is the terminal 203, after S802, the first network element obtains the access information of the terminal 202 and the access information of the terminal 203. The first network element further obtains a packet transmission period (2 ms) between the UPF network element 210 and the UPF network element 209. If the PDU session of the terminal 202 and the access information of the terminal 203 are shown in Table 4, the first network element first determines that the latency of the service flow in the uplink direction is 9 ms, then determines, based on Case 9, that the latency of the service flow in the downlink direction is: latency (20 ms) of the service flow - latency (9 ms) of the service flow in the uplink direction - residence period (1 ms) of the UPF network element 210 - residence period (1 ms) of the UPF network element 209 - residence period (1 ms) of the terminal 201 - residence period (1 ms) of the terminal 203 - packet transmission period (2 ms) between the UPF network element 210 and the UPF network element 209 = 5 ms, and determines, based on Case 20, that the packet arrival time of the service flow in the downlink direction is: packet arrival time (14 o'clock) of the service flow in the uplink direction + latency (9 ms) of the service flow in the uplink direction + residence period (1 ms) of the terminal 201 + residence period (1 ms) of the UPF network element 210 + residence period (1 ms) of the UPF network element 209 + packet transmission period (2 ms) between the UPF network element 210 and the UPF network element 209 = 14 ms past 14 o'clock.

**Table 4**

| | |
|---|---|
| Access information of the terminal 202 | Access information of the terminal 203 |
| Residence period of the UPF network element 210: 1 ms | Residence period of the UPF network element 209: 1 ms |
| Location information of the terminal 202: Location 2 | Location information of the terminal 203: Location 3 |
| Residence period of the terminal 202: 1 ms | Residence period of the terminal 203: 1 ms |
| Identifier of the UPF network element 210: Identifier 1 | Identifier of the UPF network element 209: Identifier 2 |

In the foregoing examples, the first network element determines the latency of the service flow in the uplink direction before determining the latency of the service flow in the downlink direction. During specific application, the first network element may alternatively determine the latency of the service flow in the downlink direction before determining the latency of the service flow in the uplink direction. This is not limited. For example, the first network element first determines the latency of the service flow in the downlink direction based on the distance between the ingress terminal and the ingress UPF network element and the distance between the egress terminal and the egress UPF network element, and determines the latency of the service flow in the uplink direction based on any one of Case 0 to Case 9.

S804: The first network element triggers the network to configure the session of the ingress terminal based on the uplink QoS information and configure the session of the egress terminal based on the downlink QoS information.

The session of the ingress terminal includes a first QoS flow (QoS Flow) for transmission of the service flow in the uplink direction, and the session of the egress terminal includes a second QoS flow for transmission of the service flow in the downlink direction. The first QoS flow is a QoS flow that is in the session of the ingress terminal and that is used for transmission of the service flow in the uplink direction, and the second QoS flow is a QoS flow that is in the session of the egress terminal and that is used for transmission of the service flow in the downlink direction.

First, a specific process in which the first network element triggers the network to configure the session of the ingress terminal based on the uplink QoS information is described.

In a possible implementation, the first network element sends a second request message. The second request message includes the address of the ingress terminal and the uplink QoS information. Optionally, the second request message further includes at least one of the following: local switching indication information, the DNN associated with the ingress terminal, the S-NSSAI associated with the ingress terminal, the flow information of the service flow, or the first event indication information. The local switching indication information indicates that the service flow is transmitted through local switching or cross-UPF network element switching.

As described above, the first network element is the NEF network element, the TSCTSF network element, the PCF network element, or the new network element.

In a possible implementation, if the first network element is the NEF network element, the TSCTSF network element, or the new network element, the first network element may send the second request message to the PCF network element. The second request message may be a create request message (for example, a Npcf_PolicyAuthorization_Create Request message) or an update request message (for example, a Npcf_PolicyAuthorization_Update Request message). For example, if it is the first time that the first network element performs the QoS decomposition, the first network element sends the create request message to the PCF network element. If it is not the first time that the first network element performs the QoS decomposition, the first network element sends the update request message to the PCF network element. Subsequently, after receiving the second request message, the PCF network element may generate, based on the uplink QoS information, a first policy control and charging (policy control and charging, PCC) rule used to configure the first QoS flow in the session of the ingress terminal, and send the first PCC rule to an SMF network element, so that the SMF network element performs a corresponding operation according to the first PCC rule. Specifically, refer to descriptions in the following embodiment shown in FIG. 9.

In another possible implementation, if the first network element is the PCF network element, the first network element may generate a first PCC rule based on the uplink QoS information, and send the second request message including the first PCC rule to the SMF network element, so that the SMF network element performs a corresponding operation according to the first PCC rule. For a process in which the first network element generates the first PCC rule based on the uplink QoS information, and sends the second request message including the first PCC rule to the SMF network element, so that the SMF network element performs the corresponding operation according to the first PCC rule, refer to a process, in the following embodiment shown in FIG. 9, in which the PCF network element generates the first PCC rule based on the uplink QoS information, and sends the first PCC rule to the SMF network element, so that the SMF network element performs the corresponding operation according to the first PCC rule. Details are not described again.

It may be understood that a process in which the first network element triggers the network to configure the session of the egress terminal based on the downlink QoS information is similar to the process in which the first network element triggers the network to configure the session of the ingress terminal based on the uplink QoS information. Details are as follows.

In a possible implementation, the first network element sends a third request message. The third request message includes the address of the egress terminal and the downlink QoS information. Optionally, the third request message further includes at least one of the following: local switching indication information, the DNN associated with the egress terminal, the S-NSSAI associated with the egress terminal, the flow information of the service flow, or the first event indication information. The local switching indication information indicates that the service flow is transmitted through local switching or cross-UPF network element switching.

In a possible design, if the first network element is the NEF network element, the TSCTSF network element, or the new network element, the first network element may send the third request message to the PCF network element. The third request message may be a create request message (for example, a Npcf_PolicyAuthorization_Create Request message) or an update request message (for example, a Npcf_PolicyAuthorization_Update Request message). For example, if it is the first time that the first network element performs the QoS decomposition, the first network element sends the create request message to the PCF network element. If it is not the first time that the first network element performs the QoS decomposition, the first network element sends the update request message to the PCF network element. Subsequently, after receiving the third request message, the PCF network element may generate, based on the downlink QoS information, a second PCC rule used to configure the second QoS flow in the session of the egress terminal, and send the second PCC rule to the SMF network element, so that the SMF network element performs a corresponding operation according to the second PCC rule. Specifically, refer to descriptions in the following embodiment shown in FIG. 9.

In another possible implementation, if the first network element is the PCF network element, the first network element may generate a second PCC rule based on the downlink QoS information, and send the third request message including the second PCC rule to the SMF network element, so that the SMF network element performs a corresponding operation according to the second PCC rule. For a process in which the first network element generates the second PCC rule based on the downlink QoS information, and sends the third request message including the second PCC rule to the SMF network element, so that the SMF network element performs the corresponding operation according to the second PCC rule, refer to a process, in the following embodiment shown in FIG. 9, in which the PCF network element generates the second PCC rule based on the downlink QoS information, and sends the second PCC rule to the SMF network element, so that the SMF network element performs the corresponding operation according to the second PCC rule. Details are not described again.

The actions of the first network element or the AF network element in S801 to S804 may be performed by the processor 501 in the communication apparatus 50 shown in FIG. 7 by invoking the application program code stored in the memory 503. This is not limited in this embodiment of this application.

Based on the method shown in FIG. 8, the first network element may obtain the QoS information of the service flow, the access information of the ingress terminal, and the access information of the egress terminal, decompose the QoS information of the service flow based on the access information of the ingress terminal and the access information of the egress terminal to obtain the uplink QoS information and the downlink QoS information, and trigger the network to generate corresponding PCC rules based on the uplink QoS information and the downlink QoS information, to configure the QoS flow in the session of the ingress terminal and the QoS flow in the session of the egress terminal. Alternatively, the first network element may obtain the QoS information of the service flow, the access information of the ingress terminal, the access information of the egress terminal, and the packet transmission period between the UPF network elements, decompose the QoS information of the service flow based on the access information of the ingress terminal, the access information of the egress terminal, and the packet transmission period between the UPF network elements to obtain the uplink QoS information and the downlink QoS information, and trigger the network to generate corresponding PCC rules based on the uplink QoS information and the downlink QoS information, to configure the QoS flow in the session of the ingress terminal and the QoS flow in the session of the egress terminal. In the foregoing method, QoS decomposition can be performed on the end-to-end service flow, to implement deterministic transmission of the service flow. In addition, in the foregoing process, when performing the QoS decomposition, the first network element considers the access information of the ingress terminal and the access information of the egress terminal, or the access information of the ingress terminal, the access information of the egress terminal, and the packet transmission period between the UPF network elements. The foregoing information can represent the topology condition of the network to which the ingress terminal and the egress terminal belong. Therefore, according to the method shown in FIG. 8, the uplink QoS information and the downlink QoS information that are determined by the first network element can be more reasonable, so that transmission of the service flow can more easily meet the QoS requirement.

The following describes the method provided in embodiments of this application by using an example in which the first network element is a new network element.

FIG. 9 shows another communication method according to an embodiment of this application. The communication method may include the following steps.

S901: An AF network element sends a first request message to a first network element. Correspondingly, the first network element receives the first request message from the AF network element.

S902: The first network element obtains QoS decomposition information based on information about a target terminal group.

S903: The first network element decomposes QoS information of a service flow based on the QoS decomposition information, to obtain uplink QoS information and downlink QoS information.

It may be understood that for a process of S901 to S903, refer to the corresponding descriptions in S801 to S803. Details are not described again.

S904: The first network element sends a second request message to a PCF network element. Correspondingly, the PCF network element receives the second request message from the first network element.

The second request message includes an address of the ingress terminal and the uplink QoS information. Optionally, the second request message further includes at least one of the following: local switching indication information, a DNN associated with an ingress terminal, S-NSSAI associated with the ingress terminal, flow information of the service flow, or first event indication information.

It may be understood that, if the first request message in S901 includes the flow information of the service flow, the second request message includes the flow information of the service flow. If the first request message in S901 does not include the flow information of the service flow (namely, in a general flow scenario), the second request message does not include the flow information of the service flow. In this case, the AF network element may send the flow information of the service flow to the PCF network element, and trigger the first network element to send the second request message to the PCF network element.

For example, the AF may include the flow information of the service flow in an AFSessionWithQoS message, and send the message to the PCF network element via an NEF network element. The AFSessionWithQoS message may further indicate at least one of the following: the service flow being an end-to-end service flow, the address of the ingress terminal, the DNN associated with the ingress terminal, or the S-NSSAI associated with the ingress terminal. Subsequently, before the PCF network element generates a PCC rule of the service flow, the PCF network element may send, to the first network element, query information including the address of the ingress terminal, the DNN associated with the ingress terminal, and the S-NSSAI associated with the ingress terminal, so that the first network element sends the second request message to the PCF network element.

It may be understood that, if the first request message in S901 includes the first event indication information, the second request message includes the first event indication information. If the first request message in S901 does not include the first event indication information, the second request message does not include the first event indication information.

S905: The first network element sends a third request message to the PCF network element. Correspondingly, the PCF network element receives the third request message from the first network element.

The third request message includes an address of an egress terminal and the downlink QoS information. Optionally, the third request message further includes at least one of the following: the local switching indication information, a DNN associated with the egress terminal, S-NSSAI associated with the egress terminal, the flow information of the service flow, or the first event indication information.

For other descriptions in S905, refer to the corresponding descriptions in S904. Details are not described again.

It may be understood that an execution sequence of S904 and S905 is not limited in this application. For example, in this embodiment of this application, S904 may be performed before S905, S905 may be performed before S904, or S904 and S905 may be simultaneously performed. This is not limited.

It may be understood that, during specific application, information included in the second request message and information included in the third request message may alternatively be included in one message for transmission, for example, communicated by using different fields in the message. This is not limited.

S906: The PCF network element generates a first PCC rule based on the second request message, and generates a second PCC rule based on the third request message.

For example, the PCF network element generates a QoS parameter in the first PCC rule based on the uplink QoS information, and sets local switching indication information in the first PCC rule based on the local switching indication information. If the second request message further includes first event indication information, the PCF network element further sets a corresponding function in the first PCC rule based on the first event indication information. For example, if the first event indication information indicates monitoring for average latency, the PCF network element sets, in the first PCC rule, to monitor average latency of the service flow in an uplink direction or average latency of the service flow in a downlink direction. If a second update request message further includes the flow information of the service flow, or the PCF network element receives the flow information of the service flow from the AF network element, the PCF network element further configures flow information of the service flow in the first PCC rule based on the flow information of the service flow.

Similarly, the PCF network element generates a QoS parameter in the second PCC rule based on the downlink QoS information, and sets local switching indication information in the second PCC rule based on the local switching indication information. If a third update request message further includes the first event indication information, the PCF network element further sets a corresponding function in the second PCC rule based on the first event indication information. If the third update request message further includes the flow information of the service flow, or the PCF network element receives the flow information of the service flow from the AF network element, the PCF network element further configures the flow information of the service flow in the second PCC rule based on the flow information of the service flow.

S907: The PCF network element sends the first PCC rule and the second PCC rule to an SMF network element. Correspondingly, the SMF network element receives the first PCC rule and the second PCC rule from the PCF network element.

It may be understood that after receiving the first PCC rule, the SMF network element may perform a corresponding operation according to the first PCC rule.

For example, the SMF network element sets a local switching or cross-N19 switching routing rule on a UPF network element based on the local switching indication information in the first PCC rule, and the SMF network element generates a QoS parameter of a QoS flow (namely, the first QoS flow described above) based on the QoS parameter in the first PCC rule, and configure the QoS flow based on the QoS parameter of the QoS flow. If an event-related function is set in the first PCC rule, the SMF network element further monitors a corresponding event, and sends monitored information to the PCF network element after the event occurs. For example, if it is set in the first PCC rule that the average latency of the service flow in the uplink direction and a PDB of the service flow in the uplink direction are monitored, the SMF network element monitors the average latency of the service flow in the uplink direction and the PDB of the service flow in the uplink direction, and sends event notification information to the PCF network element. The event notification information includes the average latency of the service flow in the uplink direction. When the latency of the service flow in the uplink direction is greater than the PDB of the service flow in the uplink direction, the event notification information further includes an indication indicating that the latency of the service flow in the uplink direction does not meet the PDB of the service flow in the uplink direction.

It may be understood that when configuring the routing rule for the UPF network element, the SMF network element sends, by default, all packets received from N6 to N3/N9, and sends, to N6, a packet received from N3/N9. Therefore, for an end-to-end service flow, the SMF network element needs to modify the routing rule. For example, the SMF network element may activate a local switching or cross-N19 switching function of the UPF network element based on the local switching indication information in the first PCC rule, and configure a specific routing rule such as a packet detection rule (packet detection rule, PDR) or a forwarding action rule (forwarding action rule, FAR) on the UPF network element, so that the UPF network element supports local forwarding (where that is, the UPF network element directly forwards a packet between two or more PDU sessions connected to the UPF network element without via a DN) or cross-N19 forwarding (where that is, the UPF network element directly forwards the packet to another UPF network element through an N19 tunnel without via the DN, so that the another UPF network element sends the packet to a PDU session connected to the UPF network element).

The foregoing example 3 is used as an example. When the SMF network element determines that at least one of the terminal 202 to the terminal 205 can receive a message of Multicast Address A, for example, the SMF network element receives an internet group management protocol (internet group management protocol, IGMP) join (IGMP Join) message or an N4 report of the UPF network element, indicating that the terminal 203 joints the multicast group, the SMF network element may configure a corresponding routing rule and corresponding QoS information on a user plane, and notify the PCF network element that the execution succeeds, according to the first PCC rule. If the SMF network element does not receive the IGMP Join message or the N4 report of the UPF network element, the SMF network element may store the first PCC rule, and wait for the terminal 203 to join the multicast group. Subsequently, the SMF network element configures the corresponding routing rule and the corresponding QoS information on the UPF network element, and notifies the PCF network element that the execution succeeds, according to the first PCC rule.

It may be understood that, if the SMF network element determines that the terminal 203 cannot receive the message of Multicast Address A, for example, the SMF network element receives an IGMP quit (Quit) message or an N4 report of the UPF network element, indicating that the terminal 203 quits the multicast group, the SMF network element may delete the corresponding routing rule installed on the user plane and the corresponding QoS information. In addition, the SMF network element may further feed back, to the PCF network element, that the terminal 203 has quit the multicast group.

It may be understood that, before configuring the first PCC rule for the SMF network element, the PCF network element may require the SMF network element to report an event that the terminal joins/quits the multicast group A. After receiving information that is about the multicast group of the terminal and that is sent by the SMF network element, the PCF network element configures a related PCC rule for the SMF. Alternatively, the PCF network element may first send the first PCC rule to the SMF network element, and further require the SMF network element to report an event that the terminal joins/quits the multicast group A. After receiving information that is about the multicast group of the terminal and that is sent by the SMF network element, the PCF network element may update the first PCC rule. After the terminal 203 quits the multicast group A, the SMF network element is triggered to delete a corresponding QoS flow configuration.

It may be understood that after receiving the second PCC rule, the SMF network element may perform a corresponding operation according to the second PCC rule. For details, refer to the descriptions of performing, by the SMF network element, a corresponding operation according to the first PCC rule. Details are not described again.

It may be understood that the PCF network element may send the first PCC and the second PCC to the SMF network element through one message, or may separately send the first PCC and the second PCC to the SMF network element through two messages. This is not limited.

Optionally, if the first request message includes the first event indication information, the method shown in FIG. 9 may further include S908 and/or S909.

S908: The SMF network element sends first notification information to the first network element. Correspondingly, the first network element receives the first notification information from the SMF network element.

The first notification information is information for the second request message. The first notification information includes information reported when the SMF network element monitors an event that is to be monitored and that is indicated by the first event indication information.

In a possible design, the first notification information includes at least one of the following: the average latency of the service flow in the uplink direction, indication information indicating that the PDB of the service flow in the uplink direction is no longer met, indication information indicating that a GBR of the service flow in the uplink direction is no longer met, or indication information indicating that a PER of the service flow in the uplink direction is no longer met.

In a possible implementation, the SMF network element sends the first notification information to the first network element via the PCF network element.

S909: The SMF network element sends second notification information to the first network element. Correspondingly, the first network element receives the second notification information from the SMF network element.

The second notification information is information for the third request message.

In a possible design, the second notification information includes at least one of the following: the average latency of the service flow in the downlink direction, indication information indicating that a PDB of the service flow in the downlink direction is no longer met, indication information indicating that a GBR of the service flow in the downlink direction is no longer met, or indication information indicating that a PER of the service flow in the downlink direction is no longer met.

In a possible implementation, the SMF network element sends the second notification information to the first network element via the PCF network element.

It may be understood that the SMF network element may send the first notification information and the second notification information to the first network element through one message, or may separately send the first notification information and the second notification information to the first network element through two messages. This is not limited.

It may be understood that, after receiving the first notification information and the second notification information, the first network element sends the first notification information and the second notification information to the AF network element. Alternatively, after receiving the first notification information and the second notification information, the first network element further processes information in the first notification information and the second notification information, and sends processed information to the AF network element. For example, if the first notification information includes the average latency of the service flow in the uplink direction, and the second notification information includes the average latency of the service flow in the downlink direction, the first network element sends average latency of the service flow to the AF network element, where the average latency of the service flow is a sum of the average latency of the service flow in the uplink direction and the average latency of the service flow in the downlink direction.

Optionally, to make the uplink QoS information and the downlink QoS more appropriate, the first network element may further adjust the uplink QoS information and/or the downlink QoS information based on the first notification information and/or the second notification information, and trigger the PCF network element and the SMF network element to perform corresponding configurations. In other words, the method shown in FIG. 9 may further include the following steps.

S910: The first network element adjusts the uplink QoS information and/or the downlink QoS information to obtain adjusted QoS information.

In a possible implementation, the first network element adjusts the uplink QoS information based on the first notification information; adjusts the downlink QoS information based on the second notification information; or adjusts the uplink QoS information and the downlink QoS information based on the first notification information and the second notification information.

It may be understood that, if the first network element adjusts the uplink QoS information, the adjusted QoS information includes adjusted uplink QoS information. If the first network element adjusts the downlink QoS information, the adjusted QoS information includes adjusted downlink QoS information. If the first network element adjusts the uplink QoS information and the downlink QoS information, the adjusted QoS information includes the adjusted uplink QoS information and the adjusted downlink QoS information.

The following provides descriptions with reference to the foregoing example 6. In the example 6, the uplink QoS information includes the latency (9 ms) of the service flow in the uplink direction and the guaranteed rate (100 Mbit/s) of the service flow in the uplink direction, and the downlink QoS information includes the latency (5 ms) of the service flow in the downlink direction, the packet arrival time (14 ms past 14 o'clock) of the service flow in the downlink direction and the guaranteed rate (100 Mbit/s) of the service flow in the downlink direction. If the first notification information includes the average latency (9 ms) of the service flow in the uplink direction, and the second notification information includes the average latency (4 ms) of the service flow in the downlink direction, it indicates that the latency configuration in the uplink direction in the uplink QoS information is large, and the latency configuration in the downlink direction in the downlink QoS information is small. Therefore, the latency in the uplink direction may be reduced, and the latency in the downlink direction may be increased. For example, the adjusted QoS information includes the adjusted uplink QoS information and the adjusted downlink QoS information. The adjusted uplink QoS information includes the latency (7 ms) of the service flow in the uplink direction, and the adjusted downlink QoS information includes the latency (6 ms) of the service flow in the downlink direction and the packet arrival time (12 ms past 14 o'clock) being a time at which the packet arrives at the terminal 202. For another example, if the first notification information includes the average latency (7 ms) of the service flow in the uplink direction, the second notification information includes the average latency (5 ms) of the service flow in the downlink direction, and the second notification information further indicates that the latency of the service flow in the downlink direction does not meet the PDB of the service flow in the downlink direction, it indicates that the latency configuration in the downlink direction in the downlink QoS information is small. Therefore, the latency in the downlink direction may be increased. For example, the adjusted QoS information includes the adjusted downlink QoS information. The adjusted downlink QoS information includes the latency (6 ms) of the service flow in the downlink direction and the packet arrival time (12 ms past 14 o'clock) being a time at which the packet arrives at the terminal 202.

As described in S909, after receiving the first notification information and the second notification information, the first network element sends the first notification information and the second notification information to the AF network element. Alternatively, after receiving the first notification information and the second notification information, the first network element further processes information in the first notification information and the second notification information, and sends processed information to the AF network element. However, if the adjusted QoS information can meet a specific requirement, the first network element may not send the corresponding first notification information and second notification information to the AF network element, or send the processed information.

For example, after the adjustment, when the ingress terminal and the egress terminal access a same UPF network element, if a sum of the latency of the service flow in the uplink direction, the latency of the service flow in the downlink direction, residence period of the ingress terminal, a residence period of the egress terminal, and a residence period of the UPF network element is less than or equal to a latency requirement of the service flow, the first network element may not send information related to the average latency to the AF network element. After the adjustment, if the PDB of the service flow in the uplink direction and/or the PDB of the service flow in the downlink direction do/does not meet a reporting condition, the first network element does not send PDB-related information to the AF network element.

S911: If the adjusted QoS information includes the adjusted uplink QoS information, the first network element sends a first update request message to the PCF network element. Correspondingly, the PCF network element receives the first update request message from the first network element.

In a possible implementation, the first update request message includes the adjusted uplink QoS information.

S912: If the adjusted QoS information includes the adjusted downlink QoS information, the first network element sends a second update request message to the PCF network element. Correspondingly, the PCF network element receives the second update request message from the first network element.

In a possible implementation, the second update request message includes the adjusted downlink QoS information.

It may be understood that an execution sequence of S911 and S912 is not limited in this application. For example, in this embodiment of this application, S911 may be performed before S912, S912 may be performed before S911, or S911 and S912 may be simultaneously performed. This is not limited.

S913: The PCF network element generates a third PCC rule based on the first update request message, and generates a fourth PCC rule based on the second update request message.

For example, the PCF network element generates a QoS parameter in the third PCC rule based on the adjusted uplink QoS information, and generates a QoS parameter in the fourth PCC rule based on the adjusted downlink QoS information.

S914: The PCF network element sends the third PCC rule and the fourth PCC rule to an SMF network element. Correspondingly, the SMF network element receives the third PCC rule and the fourth PCC rule from the PCF network element.

It may be understood that after receiving the third PCC rule, the SMF network element may update the QoS flow according to the third PCC rule. For example, the SMF network element updates the QoS parameter of the QoS flow based on the QoS parameter in the third PCC rule, and configures the QoS flow based on an updated QoS parameter. Similarly, after receiving the fourth PCC rule, the SMF network element may update the QoS flow according to the fourth PCC rule. For example, the SMF network element updates the QoS parameter of the QoS flow based on the QoS parameter in the fourth PCC rule, and configures the QoS flow based on an updated QoS parameter.

The actions of the first network element, the AF network element, the PCF network element, or the SMF network element in S901 to S914 may be performed by the processor 501 in the communication apparatus 50 shown in FIG. 7 by invoking the application program code stored in the memory 503. This is not limited in this embodiment of this application.

Based on the method shown in FIG. 9, the first network element may obtain the QoS information of the service flow, access information of the ingress terminal, and access information of the egress terminal, decompose the QoS information of the service flow based on the access information of the ingress terminal and the access information of the egress terminal to obtain the uplink QoS information and the downlink QoS information, and trigger a network to generate corresponding PCC rules based on the uplink QoS information and the downlink QoS information, to configure a QoS flow in a session of the ingress terminal and a QoS flow in a session of the egress terminal. Alternatively, the first network element may obtain the QoS information of the service flow, access information of the ingress terminal, access information of the egress terminal, and packet transmission period between UPF network elements, decompose the QoS information of the service flow based on the access information of the ingress terminal, the access information of the egress terminal, and the packet transmission period between the UPF network elements to obtain the uplink QoS information and the downlink QoS information, and trigger a network to generate the corresponding PCC rules based on the uplink QoS information and the downlink QoS information, to configure a QoS flow in a session of the ingress terminal and a QoS flow in a session of the egress terminal. In the foregoing method, QoS decomposition can be performed on the end-to-end service flow, to implement deterministic transmission of the service flow. In addition, in the foregoing process, when performing the QoS decomposition, the first network element considers the access information of the ingress terminal and the access information of the egress terminal, or the access information of the ingress terminal, the access information of the egress terminal, and the packet transmission period between the UPF network elements. The foregoing information can represent a topology condition of the network to which the ingress terminal and the egress terminal belong. Therefore, according to the method shown in FIG. 9, the uplink QoS information and the downlink QoS information that are determined by the first network element can be more reasonable, so that transmission of the service flow can more easily meet the QoS requirement. In addition, the first network element may further obtain the first event indication information, and trigger the SMF network element to monitor a corresponding event. Subsequently, the first network element may further adjust the uplink QoS information and/or the downlink QoS information based on a parameter obtained by monitoring the event via the network, so that the adjusted QoS information is more appropriate, and transmission of the service flow further meets the QoS requirement.

In the method shown in FIG. 8 or FIG. 9, the first network element performs the QoS decomposition based on the access information of the ingress terminal and the access information of the egress terminal to obtain the uplink QoS information and the downlink QoS information, or performs the QoS decomposition based on the access information of the ingress terminal, the access information of the egress terminal, and the packet transmission period between the UPF network elements to obtain the uplink QoS information and the downlink QoS information. During specific application, the first network element may not perform the QoS decomposition based on the foregoing information, but first allocate uplink initial QoS information and/or downlink initial QoS information, and trigger the PCF network element to generate the corresponding PCC rule based on the uplink initial QoS information and/or the downlink initial QoS information, the SMF network element configures the QoS flow according to the corresponding PCC rule, and the first network element further indicates the SMF network element to monitor an event related to the QoS information. Subsequently, the first network element may further allocate appropriate uplink QoS information and appropriate downlink QoS information based on a parameter obtained by monitoring the event by the SMF, so that transmission of the service flow meets the QoS requirement. Specifically, refer to the following method shown in FIG. 10.

FIG. 10 shows still another communication method according to an embodiment of this application. The communication method may include the following steps.

S1001: An AF network element sends a fifth request message to a first network element. Correspondingly, the first network element receives the fifth request message from the AF network element.

The AF network element may be the AF network element 402 in FIG. 5, and the first network element may be the first network element 401 in FIG. 5.

In a possible implementation, when there is a service requirement, an administrator configures an IE in the fifth request message, and triggers the AF network element to send the fifth request message to the first network element. Alternatively, when there is a service requirement, the AF network element executes a prestored program to configure an IE in the fifth request message, and trigger the AF to send the fifth request message to the first network element.

The fifth request message may be used to request to allocate a resource to a service flow. For example, the fifth request message is used to allocate a resource meeting QoS information to a service flow between target terminals, to ensure quality of end-to-end communication between the target terminals. The service flow is any end-to-end service flow. The target terminals include an ingress terminal and an egress terminal of the service flow. The egress terminal of the service flow may include one or more terminals. This is not limited. It may be understood that, if the egress terminal includes one terminal, the fifth request message is used to allocate a resource meeting the QoS information to a service flow between the ingress terminal and the egress terminal, to ensure quality of end-to-end communication between the ingress terminal and the egress terminal. If the egress terminal includes a plurality of terminals, the fifth request message is used to allocate a resource meeting the QoS information to a service flow between the ingress terminal and each of the plurality of egress terminals, to ensure quality of end-to-end communication between the ingress terminal and the egress terminals.

It may be understood that when the administrator configures the IE and when the AF network element configures the IE, the fifth request message may include different IEs.

In a possible implementation, when the administrator configures the IE, the fifth request message may include type information of the service flow, the QoS information of the service flow, and second event indication information. Optionally, the fifth request message further includes at least one of the following: flow information of the service flow or information about a target terminal group.

In another possible implementation, when the AF network element configures the IE, the fifth request message may include the QoS information of the service flow and second event indication information. Optionally, the fifth request message further includes at least one of the following: type information of the service flow, flow information of the service flow, or information about a target terminal group.

For descriptions of the type information of the service flow, the QoS information of the service flow, the flow information of the service flow, or the information about the target terminal group, refer to the corresponding descriptions in S801.

In this embodiment of this application, the second event indication information may indicate monitoring for average latency and QoS notification monitoring for a PDB.

Optionally, the second event indication information further indicates at least one of the following: QoS notification monitoring for a GBR or QoS notification monitoring for a PER. The QoS notification monitoring for the PDB, the QoS notification monitoring for the GBR, or the QoS notification monitoring for the PER may be based on a QNC mechanism.

It may be understood that, for other descriptions in S1001, refer to the corresponding descriptions in S801. Details are not described again.

S 1002: The first network element decomposes the QoS information of the service flow to obtain initial QoS information.

The initial QoS information may include initial QoS information of the service flow in an uplink direction (uplink initial QoS information for short) or initial QoS information of the service flow in a downlink direction (downlink initial QoS information for short).

That the QoS information of the service flow includes a latency requirement of the service flow has been described in S1001. Optionally, the QoS information of the service flow further includes at least one of the following: priority information of a packet, a packet size, a maximum rate, a guaranteed rate, a packet error rate, periodicity information, clock domain information, a packet arrival time, or survival period. In this case, the initial QoS information may include at least the foregoing information. For example, the initial QoS information includes the uplink initial QoS information. If QoS of the service flow includes the latency requirement of the service flow, the uplink initial QoS information may include latency of the service flow in the uplink direction. If the QoS of the service flow includes the latency requirement of the service flow and the packet arrival time, the uplink initial QoS information may include latency of the service flow in the uplink direction and a packet arrival time of the service flow in the uplink direction. For example, the initial QoS information includes the downlink initial QoS information. If the QoS of the service flow includes the latency requirement of the service flow, the downlink initial QoS information may include latency of the service flow in the downlink direction. If the QoS of the service flow includes the latency requirement of the service flow and the packet arrival time, the downlink initial QoS information may include the latency of the service flow in the downlink direction and the packet arrival time of the service flow in the downlink direction.

In a possible implementation, the first network element obtains the initial QoS information based on a historical QoS decomposition status.

For example, if the initial QoS information includes the uplink initial QoS information, and historical latency of the service flow in the uplink direction is 5 ms, the first network element may set the latency of the service flow in the uplink direction to 5 ms.

In another possible implementation, the first network element determines the initial QoS information based on a preset rule and the QoS information of the service flow.

In an example, if the QoS information of the service flow includes the latency requirement of the service flow, and the initial QoS information is the uplink initial QoS information, the uplink initial QoS information includes the latency of the service flow in the uplink direction. The latency of the service flow in the uplink direction is obtained based on a first preset rule and the latency requirement of the service flow. For example, the latency of the service flow in the uplink direction may be preconfigured as 7 ms in the first network element. In this case, the first network element may set the latency of the service flow in the uplink direction to 7 ms. For another example, the first network element may multiply latency indicated by the latency requirement of the service flow by a coefficient a, and use latency obtained after the multiplication by the coefficient as the latency of the service flow in the uplink direction, where a is greater than 0 and less than 1.

In an example 9, descriptions are provided below with reference to the foregoing example 2. In the example 2, the type information of the service flow indicates that the service flow is an end-to-end service flow. The information about the target terminal group includes an identity of the terminal 201, an identity of the terminal 203, and a DNN and S-NSSAI that are associated with the terminal 201 and the terminal 202. The QoS information of the service flow indicates that the latency of the service flow is 20 ms, the packet arrival time of the service flow is 14 o'clock, and the guaranteed rate of the service flow is 100 Mbit/s. The flow information of the service flow includes Ethernet flow information (for example, a MAC address of the terminal 201 in the service flow, a MAC address of the terminal 203 in the service flow, and information about a VLAN tag). First event indication information indicates the monitoring for the average latency and the QoS notification monitoring for the PDB. The first network element may configure the latency of the service flow in the uplink direction to be half of the latency of the service flow. That is, the initial QoS information includes the uplink initial QoS information, where the uplink initial QoS information includes the latency of the service flow in the uplink direction, and the latency is 10 ms.

Similarly, if the QoS information of the service flow includes the latency requirement of the service flow, and the initial QoS information is the downlink initial QoS information, the downlink initial QoS information includes the latency of the service flow in the downlink direction. The latency of the service flow in the downlink direction is obtained based on a second preset rule and the latency requirement of the service flow. The first preset rule and the second preset rule may be the same or may be different.

It may be understood that, if the uplink initial QoS information includes the packet arrival time of the service flow in the uplink direction, the packet arrival time of the service flow in the uplink direction may be set to the packet arrival time of the service flow. If the downlink initial QoS information includes the packet arrival time of the service flow in the downlink direction, the first network element may determine the packet arrival time of the service flow in the downlink direction based on a case (for example, Case 10) in S803.

S1003: The first network element sends a fourth request message.

When the initial QoS information includes the uplink initial QoS information, the fourth request message includes an address of the ingress terminal, the uplink initial QoS information, and the second event indication information.

Optionally, the fourth request message further includes at least one of the following: local switching indication information, a DNN associated with the ingress terminal, S-NSSAI associated with the ingress terminal, or the flow information of the service flow. The local switching indication information indicates that the service flow is transmitted through local switching or cross-UPF network element switching.

As described above, the first network element is an NEF network element, a TSCTSF network element, a PCF network element, or a new network element.

In a possible implementation, if the first network element is the NEF network element, the TSCTSF network element, or the new network element, the first network element may send the fourth request message to the PCF network element. The fourth request message may be a create request message (for example, a Npcf_PolicyAuthorization_Create Request message) or an update request message (for example, a Npcf_PolicyAuthorization _Update Request message). For example, if it is the first time that the first network element performs the QoS decomposition, the first network element sends the create request message to the PCF network element. If it is not the first time that the first network element performs the QoS decomposition, the first network element sends the update request message to the PCF network element. Subsequently, after receiving the fourth request message, the PCF network element may generate, based on the uplink QoS information, a first PCC rule used to configure a first QoS flow in a session of the ingress terminal, and send the first PCC rule to the SMF network element, so that the SMF network element performs a corresponding operation according to the first PCC rule. Specifically, refer to the corresponding descriptions in the following embodiment shown in FIG. 9.

In another possible implementation, if the first network element is the PCF network element, the first network element may generate a first PCC rule based on the uplink QoS information, and send the fourth request message including the first PCC rule to the SMF network element, so that the SMF network element performs a corresponding operation according to the first PCC rule. For a process in which the first network element generates the first PCC rule based on the uplink QoS information, and sends the fourth request message including the first PCC rule to the SMF network element, so that the SMF network element performs the corresponding operation according to the first PCC rule, refer to a process, in the following embodiment shown in FIG. 9, in which the PCF network element generates the first PCC rule based on the uplink QoS information, and sends the first PCC rule to the SMF network element, so that the SMF network element performs the corresponding operation according to the first PCC rule. Details are not described again.

When the initial QoS information includes the downlink initial QoS information, the fourth request message includes an address of the egress terminal, the downlink initial QoS information, and the second event indication information.

Optionally, the fourth request message may further include at least one of the following: the local switching indication information, a DNN associated with the egress terminal, S-NSSAI associated with the egress terminal, or the flow information of the service flow. The local switching indication information indicates that the service flow is transmitted through local switching or cross-UPF network element switching.

In a possible implementation, if the first network element is the NEF network element, the TSCTSF network element, or the new network element, the first network element may send the fourth request message to the PCF network element. The fourth request message may be a create request message (for example, a Npcf_PolicyAuthorization_Create Request message) or an update request message (for example, a Npcf_PolicyAuthorization _Update Request message). For example, if it is the first time that the first network element performs the QoS decomposition, the first network element sends the create request message to the PCF network element. If it is not the first time that the first network element performs the QoS decomposition, the first network element sends the update request message to the PCF network element. Subsequently, after receiving the fourth request message, the PCF network element may generate, based on the downlink QoS information, a second PCC rule used to configure a second QoS flow in a session of the ingress terminal, and send the second PCC rule to the SMF network element, so that the SMF network element performs a corresponding operation according to the second PCC rule. Specifically, refer to the corresponding descriptions in the following embodiment shown in FIG. 9.

In another possible implementation, if the first network element is the PCF network element, the first network element may generate a second PCC rule based on the downlink QoS information, and send the fourth request message including the second PCC rule to the SMF network element, so that the SMF network element performs a corresponding operation according to the second PCC rule. For a process in which the first network element generates the second PCC rule based on the downlink QoS information, and sends the fourth request message including the second PCC rule to the SMF network element, so that the SMF network element performs the corresponding operation according to the second PCC rule, refer to a process, in the following embodiment shown in FIG. 9, in which the PCF network element generates the second PCC rule based on the downlink QoS information, and sends the second PCC rule to the SMF network element, so that the SMF network element performs the corresponding operation according to the second PCC rule. Details are not described again.

It may be understood that because the fifth request message in S1001 includes the second event indication information, when an event reporting condition is met, the SMF network element may send third notification information for the fourth request message to the first network element.

S1004: The first network element receives the third notification information for the fourth request message.

It may be understood that if the first network element is the NEF network element, the TSCTSF network element, or the new network element, the first network element receives the third notification information from the SMF network element via the PCF network element. If the first network element is the PCF network element, the first network element receives the third notification information from the SMF network element.

For example, if the initial QoS information includes the uplink initial QoS information, the third notification information includes the average latency of the service flow in the uplink direction, or the third notification information includes the average latency of the service flow in the uplink direction and indication information indicating that the packet delay budget of the service flow in the uplink direction is no longer met. Alternatively, if the initial QoS information includes the downlink initial QoS information, the third notification information includes the average latency of the service flow in the downlink direction, or the third notification information includes the average latency of the service flow in the downlink direction and indication information indicating that the packet delay budget of the service flow in the downlink direction is no longer met.

S1005: The first network element adjusts the initial QoS information based on the third notification information, to obtain target QoS information.

The target QoS information includes uplink target QoS information and downlink target QoS information.

It may be understood that, if the initial QoS information includes the uplink initial QoS information, the third notification information may indicate at least the average latency of the service flow in the uplink direction. The first network element may adjust the uplink initial QoS information based on the third notification information, to obtain the uplink target QoS information, and determine the downlink target QoS information based on the uplink target QoS information. For example, the first network element sets the latency of the service flow in the downlink direction to be less than or equal to a difference between the latency of the service flow and the latency of the service flow in the uplink direction.

It may be understood that before S1005, the first network element may obtain access information of the ingress terminal and access information of the egress terminal. In this way, the first network element may obtain the target QoS information based on the access information of the ingress terminal, the access information of the egress terminal, the third notification information, and the initial QoS information. In other words, when obtaining the target QoS information, the first network element may also consider the access information of the ingress terminal and the access information of the egress terminal. Alternatively, before S1005, the first network element may obtain the access information of the ingress terminal, the access information of the egress terminal, and a packet transmission period between UPF network elements. In this way, the first network element may obtain the target QoS information based on the access information of the ingress terminal, the access information of the egress terminal, the packet transmission period between the UPF network elements, event notification information, and the initial QoS information. In other words, when obtaining the target QoS information, the first network element may also consider the access information of the ingress terminal, the access information of the egress terminal, and the packet transmission period between the UPF network elements. For example, the first network element may determine the target QoS information based on any case in S803.

It may be understood that, after S1005, the first network element triggers a network to configure a session of the ingress terminal based on the uplink target QoS information and configure a session of the egress terminal based on the downlink target QoS information. For details, refer to the foregoing corresponding descriptions. Details are not described herein.

The actions of the first network element or the AF network element in S1001 to S1005 may be performed by the processor 501 in the communication apparatus 50 shown in FIG. 7 by invoking the application program code stored in the memory 503. This is not limited in this embodiment of this application.

Based on the method shown in FIG. 10, the first network element may first allocate the uplink initial QoS information or the downlink initial QoS information, to trigger the network to configure a corresponding QoS flow. In addition, the first network element further indicates to monitor an event related to the QoS information. Subsequently, the first network element may further allocate appropriate uplink target QoS information and appropriate downlink target QoS information based on a parameter obtained by monitoring the event by the network, so that transmission of the service flow meets a QoS requirement through dynamic adjustment.

In the method shown in FIG. 10, the first network element first allocates the uplink initial QoS information or the downlink initial QoS information. During specific application, the first network element may also first allocate the uplink initial QoS information and the downlink initial QoS information. An example in which the first network element is a new network element is used below for description.

FIG. 11 shows another communication method according to an embodiment of this application. The communication method may include the following steps.

S1101: An AF network element sends a fifth request message to a first network element. Correspondingly, the first network element receives the fifth request message from the AF network element.

For a specific process of S1101, refer to the corresponding descriptions in S1001. Details are not described again.

S1102: The first network element decomposes QoS information of a service flow to obtain initial QoS information.

The initial QoS information may include initial QoS information of the service flow in an uplink direction (uplink initial QoS information for short) and initial QoS information of the service flow in a downlink direction (downlink initial QoS information for short).

For a specific process of S1102, refer to the corresponding descriptions in S1002. A difference lies in that in S1002, the first network element obtains the uplink initial QoS information or the downlink initial QoS information, but in S1102, the first network element obtains the uplink initial QoS information and the downlink initial information.

S1103: The first network element sends a sixth request message to a PCF network element. Correspondingly, the PCF network element receives the sixth request message from the first network element.

The sixth request message includes an address of an ingress terminal, the uplink initial QoS information, and second event indication information.

Optionally, the sixth request message further includes at least one of the following: local switching indication information, a DNN associated with the ingress terminal, S-NSSAI associated with the ingress terminal, or flow information of the service flow. The local switching indication information indicates that the service flow is transmitted through local switching or cross-UPF network element switching.

It may be understood that the sixth request message may be a create request message (for example, a Npcf_PolicyAuthorization_Create Request message) or an update request message (for example, a Npcf_PolicyAuthorization_Update Request message).

S1104: The first network element sends a seventh request message to the PCF network element. Correspondingly, the PCF network element receives the seventh request message from the first network element.

The seventh request message includes an address of an egress terminal, the downlink initial QoS information, and the second event indication information.

Optionally, the seventh request message further includes at least one of the following: the local switching indication information, a DNN associated with the egress terminal, S-NSSAI associated with the egress terminal, or the flow information of the service flow. The local switching indication information indicates that the service flow is transmitted through local switching or cross-UPF network element switching.

It may be understood that the seventh request message may be a create request message (for example, a Npcf_PolicyAuthorization_Create Request message) or an update request message (for example, a Npcf_PolicyAuthorization_Update Request message).

For other descriptions in S1103 and S1104, refer to the corresponding descriptions in S904 and S905.

S1105: The PCF network element generates a fifth PCC rule based on the sixth request message, and generates a sixth PCC rule based on the seventh request message.

For example, the PCF network element generates a QoS parameter in the fifth PCC rule based on the uplink initial QoS information, sets local switching indication information in the fifth PCC rule based on the local switching indication information, and sets a corresponding function in the fifth PCC rule based on the second event indication information.

Similarly, the PCF network element generates a QoS parameter in the sixth PCC rule based on the downlink initial QoS information, sets local switching indication information in the sixth PCC rule based on the local switching indication information, and sets a corresponding function in the sixth PCC rule based on the second event indication information.

For other descriptions in S1105, refer to the corresponding descriptions in S906.

S1106: The PCF network element sends the fifth PCC rule and the sixth PCC rule to an SMF network element. Correspondingly, the SMF network element receives the first PCC rule and the second PCC rule from the PCF network element.

S1107: The SMF network element sends fourth notification information for the sixth request message to the first network element. Correspondingly, the first network element receives the fourth notification information for the sixth request message from the SMF network element.

S1108: The SMF network element sends fifth notification information for the seventh request message to the first network element. Correspondingly, the first network element receives the fifth notification information for the seventh request message from the SMF network element.

For a specific process of S1106 to S1108, refer to the corresponding descriptions in S907 to S909.

S1109: The first network element adjusts the initial QoS information based on the fourth notification information and the fifth notification information, to obtain target QoS information.

The target QoS information includes uplink target QoS information and downlink target QoS information.

It may be understood that the fourth notification information may indicate at least average latency of the service flow in the uplink direction, and the first network element may determine, based on the fourth notification information, whether the uplink initial QoS information is set appropriately. The fifth notification information may indicate at least average latency of the service flow in the downlink direction, and the first network element may determine, based on the fifth notification information, whether the downlink initial QoS information is set appropriately. Therefore, the appropriate uplink target QoS information and downlink target QoS information may be obtained based on the fourth notification information and the fifth notification information.

In an example, if latency of the service flow is 20 ms, the uplink initial QoS information includes latency (10 ms) of the service flow in the uplink direction, the downlink initial QoS information includes latency (10 ms) of the service flow in the downlink direction, the fourth notification information includes the average latency (9 ms) of the service flow in the uplink direction, the fifth notification information includes the average latency (6 ms) of the service flow in the downlink direction, and the fourth notification information further indicates that the latency of the service flow in the uplink direction does not meet a PDB of the service flow in the uplink direction, it indicates that a latency configuration in the uplink direction in the uplink initial QoS information is small. Therefore, the latency in the uplink direction may be increased. For example, the uplink target QoS information includes latency (11 ms) of the service flow in the uplink direction, and the downlink target QoS information includes latency (7 ms) of the service flow in the downlink direction.

It may be understood that before S1109, the first network element may obtain access information of the ingress terminal and access information of the egress terminal. In this way, the first network element may further determine the target QoS information with reference to the access information of the ingress terminal and the access information of the egress terminal. Alternatively, before S1109, the first network element may obtain the access information of the ingress terminal, the access information of the egress terminal, and a packet transmission period between UPF network elements. In this way, the first network element may further determine the target QoS information with reference to the access information of the ingress terminal, the access information of the egress terminal, and the packet transmission period between the UPF network elements.

S1110: The first network element sends a third update request message to the PCF network element. Correspondingly, the PCF network element receives the third update request message from the first network element.

In a possible implementation, the third update request message includes the uplink target QoS information.

S1111: The first network element sends a fourth update request message to the PCF network element. Correspondingly, the PCF network element receives the fourth update request message from the first network element.

In a possible implementation, the fourth update request message includes the downlink target QoS information.

It may be understood that an execution sequence of S1110 and S1111 is not limited in this application. For example, in this embodiment of this application, S1110 may be performed before S1111, S1110 may be performed before S1111, or S1110 and S1111 may be simultaneously performed. This is not limited.

S1112: The PCF network element generates a seventh PCC rule based on the third update request message, and generates an eighth PCC rule based on the fourth update request message.

For example, the PCF network element generates a QoS parameter in the seventh PCC rule based on the uplink target QoS information, and generates a QoS parameter in the eighth PCC rule based on the downlink target QoS information.

S1113: The PCF network element sends the seventh PCC rule and the eighth PCC rule to the SMF network element. Correspondingly, the SMF network element receives the seventh PCC rule and the eighth PCC rule from the PCF network element.

It may be understood that after receiving the seventh PCC rule, the SMF network element may update the QoS flow according to the seventh PCC rule. For example, the SMF network element updates a QoS parameter of the QoS flow based on the QoS parameter in the seventh PCC rule, and configures the QoS flow based on an updated QoS parameter.

Similarly, after receiving the eighth PCC rule, the SMF network element may update the QoS flow according to the eighth PCC rule. For example, the SMF network element updates the QoS parameter of the QoS flow based on the QoS parameter in the eighth PCC rule, and configures the QoS flow based on an updated QoS parameter.

The actions of the first network element, the AF network element, the PCF network element, or the SMF network element in S1101 to S1113 may be performed by the processor 501 in the communication apparatus 50 shown in FIG. 7 by invoking the application program code stored in the memory 503. This is not limited in this embodiment of this application.

Based on the method shown in FIG. 11, the first network element may first allocate the uplink initial QoS information and the downlink initial QoS information, to trigger a network to configure a corresponding QoS flow. In addition, the first network element further indicates to monitor an event related to the QoS information. Subsequently, the first network element may further allocate appropriate uplink target QoS information and appropriate downlink target QoS information based on a parameter obtained by monitoring the event by the network, so that transmission of the service flow meets a QoS requirement through dynamic adjustment.

In the methods shown in FIG. 8 to FIG. 11, network elements that perform the QoS decomposition are all first network elements. During specific application, a network element that performs QoS decomposition may alternatively be a network element other than the first network element. An example in which the network element that performs the QoS decomposition is an AF network element is used below for description.

FIG. 12 shows still yet another communication method according to an embodiment of this application. The communication method may include the following steps.

S1201: An AF network element decomposes QoS information of a service flow to obtain initial QoS information.

The AF network element may be the AF network element 411 in FIG. 6.

For descriptions of the QoS information of a first service flow, refer to the corresponding descriptions in S801. For a process of S1201, refer to the corresponding descriptions in S1002.

S1202: The AF network element sends a fourth request message to a PCF network element. Correspondingly, the PCF network element receives the fourth request message from the AF network element.

The PCF network element may be the PCF network element 412 in FIG. 6.

If the initial QoS information includes uplink initial QoS information, the fourth request message includes an address of an ingress terminal, the uplink initial QoS information, and second event indication information. Optionally, the fourth request message further includes at least one of the following: local switching indication information, a DNN associated with the ingress terminal, S-NSSAI associated with the ingress terminal, or flow information of the service flow. The local switching indication information indicates that the service flow is transmitted through local switching or cross-UPF network element switching.

If the initial QoS information includes downlink initial QoS information, the fourth request message includes an address of an egress terminal, the downlink initial QoS information, and the second event indication information. Optionally, the fourth request message may further include at least one of the following: the local switching indication information, a DNN associated with the egress terminal, S-NSSAI associated with the egress terminal, or the flow information of the service flow.

In a possible implementation, the AF network element sends the fourth request message to the PCF network element via an NEF network element and a TSCTSF network element.

S1203: The PCF network element generates an eighth PCC rule based on the fourth request message.

S1204: The PCF network element sends the eighth PCC rule to an SMF network element. Correspondingly, the SMF network element receives the eighth PCC rule from the PCF network element.

S1205: The SMF network element sends third notification information to the AF network element. Correspondingly, the AF network element receives the third notification information from the SMF network element.

S1206: The AF network element obtains target QoS information based on the third notification information and the initial QoS information.

S1207: The AF network element sends a fifth update request message to the PCF network element. Correspondingly, the PCF network element receives the fifth update request message from the AF network element.

S1208: The PCF network element generates a ninth PCC rule based on the fifth update request message.

S1209: The PCF network element sends the ninth PCC rule to the SMF network element. Correspondingly, the SMF network element receives the ninth PCC rule from the PCF network element.

For a process of S1203 to S1209, refer to the foregoing corresponding descriptions. Details are not described again.

The actions of the AF network element, the PCF network element, or the SMF network element in S1201 to S1209 may be performed by the processor 501 in the communication apparatus 50 shown in FIG. 7 by invoking the application program code stored in the memory 503. This is not limited in this embodiment of this application.

Based on the method shown in FIG. 12, the AF network element may first allocate the uplink initial QoS information or the downlink initial QoS information, and trigger the PCF network element to generate the corresponding PCC rule based on the uplink initial QoS information or the downlink initial QoS information, the SMF network element configures the QoS flow according to the corresponding PCC rule, and the AF network element further indicates to monitor an event related to the QoS information. Subsequently, the AF network element may further allocate appropriate uplink QoS information and appropriate downlink QoS information based on an event notification, so that transmission of the service flow meets a QoS requirement through dynamic adjustment.

In the method shown in FIG. 12, the AF network element first allocates the uplink initial QoS information or the downlink initial QoS information. During specific application, the AF network element may also first allocate the uplink initial QoS information and the downlink initial QoS information. For example, the AF network element decomposes the QoS information of the service flow to obtain the initial QoS information; sends the sixth request message and the seventh request message to the PCF network element; receives the fourth notification information for the sixth request message and receives the fifth notification information for the seventh request message; and adjusts the initial QoS information based on the fourth notification information and the fifth notification information, to obtain the target QoS information. The initial QoS information includes the uplink initial QoS information and the downlink initial QoS information. The target QoS information includes uplink target QoS information and downlink target QoS information. The sixth request message includes the address of the ingress terminal, the uplink initial QoS information, and the second event indication information. The seventh request message includes the address of the egress terminal, the downlink initial QoS information, and the second event indication information. The second event indication information indicates monitoring for average latency and QoS notification monitoring for a packet delay budget. The foregoing process is similar to the process of S1102 to S1113. Therefore, refer to the corresponding descriptions in the embodiment shown in FIG. 11. Details are not described herein again.

The embodiments mentioned above in this application may be combined when the solutions do not conflict. This is not limited.

It may be understood that, in the foregoing embodiments, methods and/or steps implemented by the first network element may alternatively be implemented by a component (for example, a chip or a circuit) that can be used in the first network element, and methods and/or steps implemented by the AF network element may alternatively be implemented by a component (for example, a chip or a circuit) that can be used in the AF network element.

The foregoing mainly describes the solutions provided in embodiments of this application from a perspective of interaction between the network elements. Correspondingly, an embodiment of this application further provides a communication apparatus. The communication apparatus may be the first network element in the foregoing method embodiments, an apparatus including the first network element, or a component that can be used in the first network element. Alternatively, the communication apparatus may be the AF network element in the foregoing method embodiments, an apparatus including the AF network element, or a component that may be used in the AF network element. It may be understood that, to implement the foregoing functions, the first network element, the AF network element, or the like each include a corresponding hardware structure and/or software module for executing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of the first network element or the AF network element may be divided based on the foregoing method examples. For example, functional modules may be obtained through division for each function, or two or more functions may be integrated into one processing module. The integrated module may be implemented in a form of hardware, or may be implemented in a form of a software functional module. It may be understood that, in embodiments of this application, module division is an example, and is merely a logical function division. During actual implementation, another division manner may be used.

For example, when each functional module is obtained through division in an integrated manner, FIG. 13 is a diagram of a structure of a communication apparatus 130. The communication apparatus 130 includes a transceiver module 1301 and a processing module 1302. The transceiver module 1301 may also be referred to as a transceiver unit, is configured to perform sending and receiving operations, and may be, for example, a transceiver circuit, a transceiver machine, a transceiver, or a communication interface. The processing module 1302 may also be referred to as a processing unit, is configured to perform an operation other than the receiving and sending operations, and may be, for example, a processing circuit or a processor.

In some embodiments, the communication apparatus 130 may further include a storage module (not shown in FIG. 13), configured to store program instructions and data.

For example, the communication apparatus 130 is configured to implement a function of a first network element. For example, the communication apparatus 130 may be the first network element in the embodiment shown in FIG. 8 or the embodiment shown in FIG. 9.

The transceiver module 1301 is configured to receive a first request message from an application function network element. The first request message includes type information of a service flow, information about a target terminal group, and quality of service information of the service flow. For example, the transceiver module 1301 may be configured to perform S801 or S901.

The processing module 1302 is configured to: when the type information indicates that the service flow is an end-to-end service flow, obtain quality of service decomposition information based on the information about the target terminal group. The quality of service decomposition information includes access information of an ingress terminal and access information of an egress terminal. For example, the processing module 1302 may be configured to perform S802 or S902.

The processing module 1302 is further configured to decompose the quality of service information of the service flow based on the quality of service decomposition information, to obtain uplink quality of service information and downlink quality of service information. For example, the processing module 1302 may be configured to perform S803 or S903.

The processing module 1302 is further configured to trigger a network to configure a session of the ingress terminal based on the uplink quality of service information and configure a session of the egress terminal based on the downlink quality of service information. The session of the ingress terminal includes a first quality of service flow for transmission of the service flow, and the session of the egress terminal includes a second quality of service flow for transmission of the service flow. For example, the processing module 1302 may be configured to perform S804.

In a possible implementation, the processing module 1302 is specifically configured to send a second request message by using the transceiver module 1301. The second request message includes an address of the ingress terminal and the uplink quality of service information. The processing module 1302 is further specifically configured to send a third request message by using the transceiver module 1301. The third request message includes an address of the egress terminal and the downlink quality of service information.

In a possible implementation, the second request message and the third request message further include local switching indication information, and the local switching indication information indicates that the service flow is transmitted through local switching or cross-user plane function network element switching.

In a possible implementation, the access information of the ingress terminal includes location information of the ingress terminal and an identifier of an anchor user plane function network element corresponding to the session of the ingress terminal; and the access information of the egress terminal includes location information of the egress terminal and an identifier of an anchor user plane function network element corresponding to the session of the egress terminal.

In a possible implementation, the quality of service information of the service flow includes a latency requirement of the service flow; the uplink quality of service information includes latency of the service flow in an uplink direction; the downlink quality of service information includes latency of the service flow in a downlink direction; and a sum of the latency of the service flow in the uplink direction and the latency of the service flow in the downlink direction is less than or equal to the latency requirement of the service flow.

In a possible implementation, the quality of service information of the service flow includes a packet arrival time of the service flow; the uplink quality of service information includes a packet arrival time of the service flow in the uplink direction, where the packet arrival time of the service flow in the uplink direction is the same as the packet arrival time of the service flow; and the downlink quality of service information includes a packet arrival time of the service flow in the downlink direction, where the packet arrival time of the service flow in the downlink direction is determined based on a sum of the packet arrival time of the service flow in the uplink direction and the latency of the service flow in the uplink direction.

In a possible implementation, the quality of service decomposition information further includes a packet transmission period between the anchor user plane function network element corresponding to the session of the ingress terminal and the anchor user plane function network element corresponding to the session of the egress terminal.

In a possible implementation, the quality of service information of the service flow includes a latency requirement of the service flow; the uplink quality of service information includes latency of the service flow in an uplink direction; the downlink quality of service information includes latency of the service flow in a downlink direction; and a sum of the latency of the service flow in the uplink direction, the latency of the service flow in the downlink direction, and the packet transmission period is less than or equal to the latency requirement of the service flow.

In a possible implementation, the quality of service information of the service flow includes a packet arrival time of the service flow; the uplink quality of service information includes a packet arrival time of the service flow in the uplink direction, where the packet arrival time of the service flow in the uplink direction is the same as the packet arrival time of the service flow; and the downlink quality of service information includes a packet arrival time of the service flow in the downlink direction, where the packet arrival time of the service flow in the downlink direction is determined based on a sum of the packet arrival time of the service flow in the uplink direction, the latency of the service flow in the uplink direction, and the packet transmission period.

In a possible implementation, the first request message further includes first event indication information, where the first event indication information indicates at least one of the following: monitoring for average latency, quality of service notification monitoring for a packet delay budget, quality of service notification monitoring for a guaranteed bit rate, or quality of service notification monitoring for a packet error rate; the second request message further includes the first event indication information; and the third request message further includes the first event indication information.

In a possible implementation, the transceiver module 1301 is further configured to receive first notification information for the second request message. The first notification information includes at least one of the following: average latency of the service flow in the uplink direction, indication information indicating that a packet delay budget of the service flow in the uplink direction is no longer met, indication information indicating that a guaranteed bit rate of the service flow in the uplink direction is no longer met, or indication information indicating that a packet error rate of the service flow in the uplink direction is no longer met. The transceiver module 1301 is further configured to receive second notification information for the third request message. The second notification information includes at least one of the following: average latency of the service flow in the downlink direction, indication information indicating that a packet delay budget of the service flow in the downlink direction is no longer met, indication information indicating that a guaranteed bit rate of the service flow in the downlink direction is no longer met, or indication information indicating that a packet error rate of the service flow in the downlink direction is no longer met. The processing module 1302 is further configured to: adjust the uplink quality of service information based on the first notification information, adjust the downlink quality of service information based on the second notification information, or adjust the uplink quality of service information and the downlink quality of service information based on the first notification information and the second notification information.

In a possible implementation, the first request message further includes flow information of the service flow, and the flow information of the service flow includes an IP 5-tuple or an Ethernet header information address.

In a possible implementation, the second request message and the third request message further include the flow information of the service flow, and the flow information of the service flow includes the IP 5-tuple or the Ethernet header information address.

When the communication apparatus 130 is configured to implement the function of the first network element, for another function that can be implemented by the communication apparatus 130, refer to the related descriptions in the embodiment shown in FIG. 8 or the embodiment shown in FIG. 9. Details are not described again herein.

In a simple embodiment, a person skilled in the art may figure out that the communication apparatus 130 may be in the form shown in FIG. 7. For example, the processor 501 in FIG. 7 may invoke the computer-executable instructions stored in the memory 503, to enable the communication apparatus 130 to perform the method in the foregoing method embodiments.

For example, functions/implementation processes of the transceiver module 1301 and the processing module 1302 in FIG. 13 may be implemented by the processor 501 in FIG. 7 by invoking the computer-executable instructions stored in the memory 503. Alternatively, a function/implementation process of the processing module 1302 in FIG. 13 may be implemented by the processor 501 in FIG. 7 by invoking the computer-executable instructions stored in the memory 503, and a function/implementation process of the transceiver module 1301 in FIG. 13 may be implemented through the communication interface 504 in FIG. 7.

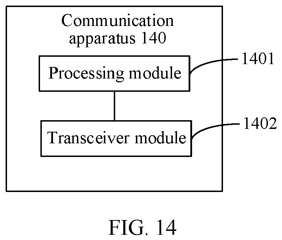

For example, when each functional module is obtained through division in an integrated manner, FIG. 14 is a diagram of a structure of a communication apparatus 140. The communication apparatus 140 includes a processing module 1401 and a transceiver module 1402. The processing module 1401 may also be referred to as a processing unit, is configured to perform an operation other than receiving and sending operations, and may be, for example, a processing circuit or a processor. The transceiver module 1402 may also be referred to as a transceiver unit, is configured to perform the sending and receiving operations, and may be, for example, a transceiver circuit, a transceiver machine, a transceiver, or a communication interface.

In some embodiments, the communication apparatus 140 may further include a storage module (not shown in FIG. 14), configured to store program instructions and data.

For example, the communication apparatus 140 is configured to implement a function of a first network element/AF network element. The communication apparatus 140 is, for example, the first network element in the embodiment shown in FIG. 10. Alternatively, the communication apparatus 140 is, for example, the AF network element in the embodiment shown in FIG. 12.

The processing module 1401 is configured to decompose quality of service information of a service flow to obtain initial quality of service information. The service flow is an end-to-end service flow. The initial quality of service information includes uplink initial quality of service information or downlink initial quality of service information. For example, the processing module 1401 may be configured to perform S1002 or S1201.

The transceiver module 1402 is configured to send a fourth request message. The fourth request message includes an address of a first terminal, the initial quality of service information, and second event indication information. The second event indication information indicates monitoring for average latency or quality of service notification monitoring for a packet delay budget. When the initial service information includes the uplink initial quality of service information, the first terminal is an ingress terminal of the service flow; or when the initial service information includes the downlink initial quality of service information, the first terminal is an egress terminal of the service flow. For example, the transceiver module 1402 may be configured to perform S1003 or S1202.

The transceiver module 1402 is further configured to receive third notification information for the fourth request message. If the initial quality of service information includes the uplink initial quality of service information, the third notification information includes average latency of the service flow in the uplink direction, or the third notification information includes the average latency of the service flow in the uplink direction and indication information indicating that a packet delay budget of the service flow in the uplink direction is no longer met. Alternatively, if the initial quality of service information includes the downlink initial quality of service information, the third notification information includes average latency of the service flow in the downlink direction, or the third notification information includes the average latency of the service flow in the downlink direction and indication information indicating that a packet delay budget of the service flow in the downlink direction is no longer met. For example, the transceiver module 1402 may be configured to perform S 1004 or S1205.

The processing module 1401 is further configured to adjust the initial quality of service information based on the third notification information, to obtain target quality of service information. The target quality of service information includes uplink target quality of service information and downlink target quality of service information. For example, the processing module 1401 may be configured to perform S 1005 or S 1206.

In a possible implementation, the fourth request message further includes local switching indication information, and the local switching indication information indicates that the service flow is transmitted through local switching or cross-user plane function network element switching.

In a possible implementation, the transceiver module 1402 is further configured to receive a fifth request message from an application function network element. The fifth request message includes type information of the service flow, the quality of service information of the service flow, and the second event indication information. The type information of the service flow indicates that the service flow is an end-to-end service flow.

In a possible implementation, the quality of service information of the service flow includes a latency requirement of the service flow; if the initial quality of service information is the uplink initial quality of service information, the uplink initial quality of service information includes latency of the service flow in the uplink direction, and the latency of the service flow in the uplink direction is obtained based on a first preset rule and the latency requirement of the service flow; or if the initial quality of service information is the downlink initial quality of service information, the downlink initial quality of service information includes latency of the service flow in the downlink direction, and the latency of the service flow in the downlink direction is obtained based on a second preset rule and the latency requirement of the service flow.

In a possible implementation, the quality of service information of the service flow further includes a packet arrival time of the service flow; and the uplink initial quality of service information further includes a packet arrival time of the service flow in the uplink direction, where the packet arrival time of the service flow in the uplink direction is the same as the packet arrival time of the service flow.

When the communication apparatus 140 is configured to implement the function of the first network element, for another function that can be implemented by the communication apparatus 140, refer to the related descriptions in the embodiment shown in FIG. 10. Details are not described again herein.

When the communication apparatus 140 is configured to implement the function of the AF network element, for another function that can be implemented by the communication apparatus 140, refer to the related descriptions in the embodiment shown in FIG. 12. Details are not described again herein.

In a simple embodiment, a person skilled in the art may figure out that the communication apparatus 140 may be in the form shown in FIG. 7. For example, the processor 501 in FIG. 7 may invoke the computer-executable instructions stored in the memory 503, to enable the communication apparatus 140 to perform the method in the foregoing method embodiments.

For example, functions/implementation processes of the processing module 1401 and the transceiver module 1402 in FIG. 14 may be implemented by the processor 501 in FIG. 7 by invoking the computer-executable instructions stored in the memory 503. Alternatively, a function/implementation process of the processing module 1401 in FIG. 14 may be implemented by the processor 501 in FIG. 7 by invoking the computer-executable instructions stored in the memory 503, and a function/implementation process of the transceiver module 1402 in FIG. 14 may be implemented through the communication interface 504 in FIG. 7.

It may be understood that one or more of the foregoing modules or units may be implemented by using software, hardware, or a combination thereof. When any one of the foregoing modules or units is implemented by using the software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. In addition to the core configured to perform the operation or processing by executing software instructions, the processor may further include a necessary hardware accelerator such as a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include the chip and another discrete component. This is not specifically limited in this embodiment of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both the internal storage unit and the external storage device of the communication apparatus. The computer-readable storage medium is configured to store the computer program and store other programs and data that are needed by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product.

The foregoing descriptions about the implementations allow a person skilled in the art to understand that, for the purpose of convenient and brief description, the foregoing functional module divisions are used as examples for illustration. During actual application, the foregoing functions may be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
receiving a first request message from an application function network element, wherein the first request message comprises type information of a service flow, information about a target terminal group, and quality of service information of the service flow;
when the type information indicates that the service flow is an end-to-end service flow, obtaining quality of service decomposition information based on the information about the target terminal group, wherein the quality of service decomposition information comprises access information of an ingress terminal and access information of an egress terminal;
decomposing the quality of service information of the service flow based on the quality of service decomposition information, to obtain uplink quality of service information and downlink quality of service information; and
triggering a network to configure a session of the ingress terminal based on the uplink quality of service information, and configure a session of the egress terminal based on the downlink quality of service information, wherein the session of the ingress terminal comprises a first quality of service flow for transmission of the service flow, and the session of the egress terminal comprises a second quality of service flow for transmission of the service flow.

2. The method according to claim 1, wherein the triggering a network to configure a session of the ingress terminal based on the uplink quality of service information, and configure a session of the egress terminal based on the downlink quality of service information comprises:
sending a second request message, wherein the second request message comprises an address of the ingress terminal and the uplink quality of service information; and
sending a third request message, wherein the third request message comprises an address of the egress terminal and the downlink quality of service information.

3. The method according to claim 2, wherein the second request message and the third request message further comprise local switching indication information, and the local switching indication information indicates that the service flow is transmitted through local switching or cross-user plane function network element switching.

4. The method according to any one of claims 1 to 3, wherein the access information of the ingress terminal comprises location information of the ingress terminal and an identifier of an anchor user plane function network element corresponding to the session of the ingress terminal; and
the access information of the egress terminal comprises location information of the egress terminal and an identifier of an anchor user plane function network element corresponding to the session of the egress terminal.

5. The method according to any one of claims 1 to 4, wherein
the quality of service information of the service flow comprises a latency requirement of the service flow;
the uplink quality of service information comprises latency of the service flow in an uplink direction;
the downlink quality of service information comprises latency of the service flow in a downlink direction; and
a sum of the latency of the service flow in the uplink direction and the latency of the service flow in the downlink direction is less than or equal to the latency requirement of the service flow.

6. The method according to claim 5, wherein
the quality of service information of the service flow comprises a packet arrival time of the service flow;
the uplink quality of service information comprises a packet arrival time of the service flow in the uplink direction, wherein the packet arrival time of the service flow in the uplink direction is the same as the packet arrival time of the service flow; and
the downlink quality of service information comprises a packet arrival time of the service flow in the downlink direction, wherein the packet arrival time of the service flow in the downlink direction is determined based on a sum of the packet arrival time of the service flow in the uplink direction and the latency of the service flow in the uplink direction.

7. The method according to claim 4, wherein the quality of service decomposition information further comprises a packet transmission period between the anchor user plane function network element corresponding to the session of the ingress terminal and the anchor user plane function network element corresponding to the session of the egress terminal.

8. The method according to claim 7, wherein
the quality of service information of the service flow comprises a latency requirement of the service flow;
the uplink quality of service information comprises latency of the service flow in an uplink direction;
the downlink quality of service information comprises latency of the service flow in a downlink direction; and
a sum of the latency of the service flow in the uplink direction, the latency of the service flow in the downlink direction, and the packet transmission period is less than or equal to the latency requirement of the service flow.

9. The method according to claim 8, wherein
the quality of service information of the service flow comprises a packet arrival time of the service flow;
the uplink quality of service information comprises a packet arrival time of the service flow in the uplink direction, wherein the packet arrival time of the service flow in the uplink direction is the same as the packet arrival time of the service flow; and
the downlink quality of service information comprises a packet arrival time of the service flow in the downlink direction, wherein the packet arrival time of the service flow in the downlink direction is determined based on a sum of the packet arrival time of the service flow in the uplink direction, the latency of the service flow in the uplink direction, and the packet transmission period.

10. The method according to any one of claims 2 to 9, wherein
the first request message further comprises first event indication information, wherein the first event indication information indicates at least one of the following: monitoring for average latency, quality of service notification monitoring for a packet delay budget, quality of service notification monitoring for a guaranteed bit rate, or quality of service notification monitoring for a packet error rate;
the second request message further comprises the first event indication information; and the third request message further comprises the first event indication information.

11. The method according to claim 10, wherein the method further comprises:
receiving first notification information for the second request message, wherein the first notification information comprises at least one of the following: average latency of the service flow in the uplink direction, indication information indicating that a packet delay budget of the service flow in the uplink direction is no longer met, indication information indicating that a guaranteed bit rate of the service flow in the uplink direction is no longer met, or indication information indicating that a packet error rate of the service flow in the uplink direction is no longer met;
receiving second notification information for the third request message, wherein the second notification information comprises at least one of the following: average latency of the service flow in the downlink direction, indication information indicating that a packet delay budget of the service flow in the downlink direction is no longer met, indication information indicating that a guaranteed bit rate of the service flow in the downlink direction is no longer met, or indication information indicating that a packet error rate of the service flow in the downlink direction is no longer met; and
adjusting the uplink quality of service information based on the first notification information, adjusting the downlink quality of service information based on the second notification information, or adjusting the uplink quality of service information and the downlink quality of service information based on the first notification information and the second notification information.

12. The method according to any one of claims 1 to 11, wherein the first request message further comprises flow information of the service flow, and the flow information of the service flow comprises an IP 5-tuple or an Ethernet header information address.

13. The method according to any one of claims 2 to 12, wherein
the second request message and the third request message further comprise the flow information of the service flow, and the flow information of the service flow comprises the IP 5-tuple or the Ethernet header information address.

14. A communication method, wherein the method comprises:
decomposing quality of service information of a service flow to obtain initial quality of service information, wherein the service flow is an end-to-end service flow, and the initial quality of service information comprises uplink initial quality of service information or downlink initial quality of service information;
sending a fourth request message, wherein the fourth request message comprises an address of a first terminal, the initial quality of service information, and second event indication information, and the second event indication information indicates quality of service monitoring for ultra-reliable low-latency communication or quality of service notification monitoring for a packet delay budget, wherein when the initial service information comprises the uplink initial quality of service information, the first terminal is an ingress terminal of the service flow; or when the initial service information comprises the downlink initial quality of service information, the first terminal is an egress terminal of the service flow;
receiving third notification information for the fourth request message, wherein if the initial quality of service information comprises the uplink initial quality of service information, the third notification information comprises average latency of the service flow in an uplink direction or indication information indicating that a packet delay budget of the service flow in the uplink direction is no longer met; or if the initial quality of service information comprises the downlink initial quality of service information, the third notification information comprises average latency of the service flow in a downlink direction or indication information indicating that a packet delay budget of the service flow in the downlink direction is no longer met; and
adjusting the initial quality of service information based on the third notification information, to obtain target quality of service information, wherein the target quality of service information comprises uplink target quality of service information and downlink target quality of service information.

15. The method according to claim 14, wherein the fourth request message further comprises local switching indication information, and the local switching indication information indicates that the service flow is transmitted through local switching or cross-user plane function network element switching.

16. The method according to claim 14 or 15, wherein before the decomposing quality of service information of a service flow to obtain initial quality of service information, the method further comprises:
receiving a fifth request message from an application function network element, wherein the fifth request message comprises type information of the service flow, the quality of service information of the service flow, and the second event indication information, and the type information of the service flow indicates that the service flow is an end-to-end service flow.

17. The method according to any one of claims 14 to 16, wherein
the quality of service information of the service flow comprises a latency requirement of the service flow; and
if the initial quality of service information is the uplink initial quality of service information, the uplink initial quality of service information comprises latency of the service flow in the uplink direction, and the latency of the service flow in the uplink direction is obtained based on a first preset rule and the latency requirement of the service flow; or
if the initial quality of service information is the downlink initial quality of service information, the downlink initial quality of service information comprises latency of the service flow in the downlink direction, and the latency of the service flow in the downlink direction is obtained based on a second preset rule and the latency requirement of the service flow.

18. The method according to claim 17, wherein
the quality of service information of the service flow further comprises a packet arrival time of the service flow; and
the uplink initial quality of service information further comprises a packet arrival time of the service flow in the uplink direction, wherein the packet arrival time of the service flow in the uplink direction is the same as the packet arrival time of the service flow.

19. A communication apparatus, wherein the communication apparatus comprises a transceiver module and a processing module, wherein
the transceiver module is configured to receive a first request message from an application function network element, wherein the first request message comprises type information of a service flow, information about a target terminal group, and quality of service information of the service flow;
the processing module is configured to: when the type information indicates that the service flow is an end-to-end service flow, obtain quality of service decomposition information based on the information about the target terminal group, wherein the quality of service decomposition information comprises access information of an ingress terminal and access information of an egress terminal;
the processing module is further configured to decompose the quality of service information of the service flow based on the quality of service decomposition information, to obtain uplink quality of service information and downlink quality of service information; and
the processing module is further configured to trigger a network to configure a session of the ingress terminal based on the uplink quality of service information, and configure a session of the egress terminal based on the downlink quality of service information, wherein the session of the ingress terminal comprises a first quality of service flow for transmission of the service flow, and the session of the egress terminal comprises a second quality of service flow for transmission of the service flow.

20. The communication apparatus according to claim 19, wherein
the processing module is specifically configured to send a second request message by using the transceiver module, wherein the second request message comprises an address of the ingress terminal and the uplink quality of service information; and
the processing module is further specifically configured to send a third request message by using the transceiver module, wherein the third request message comprises an address of the egress terminal and the downlink quality of service information.

21. The communication apparatus according to claim 20, wherein the second request message and the third request message further comprise local switching indication information, and the local switching indication information indicates that the service flow is transmitted through local switching or cross-user plane function network element switching.

22. The communication apparatus according to any one of claims 19 to 21, wherein the access information of the ingress terminal comprises location information of the ingress terminal and an identifier of an anchor user plane function network element corresponding to the session of the ingress terminal; and
the access information of the egress terminal comprises location information of the egress terminal and an identifier of an anchor user plane function network element corresponding to the session of the egress terminal.

23. The communication apparatus according to any one of claims 19 to 22, wherein
the quality of service information of the service flow comprises a latency requirement of the service flow;
the uplink quality of service information comprises latency of the service flow in an uplink direction;
the downlink quality of service information comprises latency of the service flow in a downlink direction; and
a sum of the latency of the service flow in the uplink direction and the latency of the service flow in the downlink direction is less than or equal to the latency requirement of the service flow.

24. The communication apparatus according to claim 23, wherein
the quality of service information of the service flow comprises a packet arrival time of the service flow;
the uplink quality of service information comprises a packet arrival time of the service flow in the uplink direction, wherein the packet arrival time of the service flow in the uplink direction is the same as the packet arrival time of the service flow; and
the downlink quality of service information comprises a packet arrival time of the service flow in the downlink direction, wherein the packet arrival time of the service flow in the downlink direction is determined based on a sum of the packet arrival time of the service flow in the uplink direction and the latency of the service flow in the uplink direction.

25. The communication apparatus according to claim 22, wherein the quality of service decomposition information further comprises a packet transmission period between the anchor user plane function network element corresponding to the session of the ingress terminal and the anchor user plane function network element corresponding to the session of the egress terminal.

26. The communication apparatus according to claim 25, wherein
the quality of service information of the service flow comprises a latency requirement of the service flow;
the uplink quality of service information comprises latency of the service flow in an uplink direction;
the downlink quality of service information comprises latency of the service flow in a downlink direction; and
a sum of the latency of the service flow in the uplink direction, the latency of the service flow in the downlink direction, and the packet transmission period is less than or equal to the latency requirement of the service flow.

27. The communication apparatus according to claim 26, wherein
the quality of service information of the service flow comprises a packet arrival time of the service flow;
the uplink quality of service information comprises a packet arrival time of the service flow in the uplink direction, wherein the packet arrival time of the service flow in the uplink direction is the same as the packet arrival time of the service flow; and
the downlink quality of service information comprises a packet arrival time of the service flow in the downlink direction, wherein the packet arrival time of the service flow in the downlink direction is determined based on a sum of the packet arrival time of the service flow in the uplink direction, the latency of the service flow in the uplink direction, and the packet transmission period.

28. The communication apparatus according to any one of claims 20 to 27, wherein
the first request message further comprises first event indication information, wherein the first event indication information indicates at least one of the following: monitoring for average latency, quality of service notification monitoring for a packet delay budget, quality of service notification monitoring for a guaranteed bit rate, or quality of service notification monitoring for a packet error rate;
the second request message further comprises the first event indication information; and
the third request message further comprises the first event indication information.

29. The communication apparatus according to claim 28, wherein
the transceiver module is further configured to receive first notification information for the second request message, wherein the first notification information comprises at least one of the following: average latency of the service flow in the uplink direction, indication information indicating that a packet delay budget of the service flow in the uplink direction is no longer met, indication information indicating that a guaranteed bit rate of the service flow in the uplink direction is no longer met, or indication information indicating that a packet error rate of the service flow in the uplink direction is no longer met;
the transceiver module is further configured to receive second notification information for the third request message, wherein the second notification information comprises at least one of the following: average latency of the service flow in the downlink direction, indication information indicating that a packet delay budget of the service flow in the downlink direction is no longer met, indication information indicating that a guaranteed bit rate of the service flow in the downlink direction is no longer met, or indication information indicating that a packet error rate of the service flow in the downlink direction is no longer met; and
the processing module is further configured to: adjust the uplink quality of service information based on the first notification information, adjust the downlink quality of service information based on the second notification information, or adjust the uplink quality of service information and the downlink quality of service information based on the first notification information and the second notification information.

30. The communication apparatus according to any one of claims 19 to 29, wherein the first request message further comprises flow information of the service flow, and the flow information of the service flow comprises an IP 5-tuple or an Ethernet header information address.

31. The communication apparatus according to any one of claims 20 to 30, wherein
the second request message and the third request message further comprise the flow information of the service flow, and the flow information of the service flow comprises the IP 5-tuple or the Ethernet header information address.

32. A communication apparatus, wherein the communication apparatus comprises a processing module and a transceiver module, wherein
the processing module is configured to decompose quality of service information of a service flow to obtain initial quality of service information, wherein the service flow is an end-to-end service flow, and the initial quality of service information comprises uplink initial quality of service information or downlink initial quality of service information;
the transceiver module is configured to send a fourth request message, wherein the fourth request message comprises an address of a first terminal, the initial quality of service information, and second event indication information, and the second event indication information indicates quality of service monitoring for ultra-reliable low-latency communication or quality of service notification monitoring for a packet delay budget, wherein when the initial service information comprises the uplink initial quality of service information, the first terminal is an ingress terminal of the service flow; or when the initial service information comprises the downlink initial quality of service information, the first terminal is an egress terminal of the service flow;
the transceiver module is further configured to receive third notification information for the fourth request message, wherein if the initial quality of service information comprises the uplink initial quality of service information, the third notification information comprises average latency of the service flow in an uplink direction or indication information indicating that a packet delay budget of the service flow in the uplink direction is no longer met; or if the initial quality of service information comprises the downlink initial quality of service information, the third notification information comprises average latency of the service flow in a downlink direction or indication information indicating that a packet delay budget of the service flow in the downlink direction is no longer met; and
the processing module is further configured to adjust the initial quality of service information based on the third notification information, to obtain target quality of service information, wherein the target quality of service information comprises uplink target quality of service information and downlink target quality of service information.

33. The communication apparatus according to claim 32, wherein the fourth request message further comprises local switching indication information, and the local switching indication information indicates that the service flow is transmitted through local switching or cross-user plane function network element switching.

34. The communication apparatus according to claim 32 or 33, wherein
the transceiver module is further configured to receive a fifth request message from an application function network element, wherein the fifth request message comprises type information of the service flow, the quality of service information of the service flow, and the second event indication information, and the type information of the service flow indicates that the service flow is an end-to-end service flow.

35. The communication apparatus according to any one of claims 32 to 34, wherein
the quality of service information of the service flow comprises a latency requirement of the service flow; and
if the initial quality of service information is the uplink initial quality of service information, the uplink initial quality of service information comprises latency of the service flow in the uplink direction, and the latency of the service flow in the uplink direction is obtained based on a first preset rule and the latency requirement of the service flow; or
if the initial quality of service information is the downlink initial quality of service information, the downlink initial quality of service information comprises latency of the service flow in the downlink direction, and the latency of the service flow in the downlink direction is obtained based on a second preset rule and the latency requirement of the service flow.

36. The communication apparatus according to claim 35, wherein
the quality of service information of the service flow further comprises a packet arrival time of the service flow; and
the uplink initial quality of service information further comprises a packet arrival time of the service flow in the uplink direction, wherein the packet arrival time of the service flow in the uplink direction is the same as the packet arrival time of the service flow.

37. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 13 or the method according to any one of claims 14 to 18.

38. A computer-readable storage medium, wherein the computer-readable storage medium stores a computer program or instructions, and when the computer program or the instructions are executed, a computer is enabled to perform the method according to any one of claims 1 to 13 or the method according to any one of claims 14 to 18.

39. A computer program product, wherein the computer program product comprises computer program code, and when the computer program code is run on a computer, the computer is enabled to implement the method according to any one of claims 1 to 13 or implement the method according to any one of claims 14 to 18.
